# EUROPEAN PATENT APPLICATION

(11) **EP 4 266 798 A1**
(43) Date of publication of application: **25.10.2023**
(21) Application number: 21916817.6
(22) Date of filing: 08.01.2021
(51) Int. Cl.: H04W 72/08

(54) **RESOURCE CONFIGURATION METHOD AND COMMUNICATION APPARATUS**

(71) Applicant: Huawei Technologies Co., Ltd., Shenzhen, Guangdong 518129 (CN)
(72) Inventor: GU, Chuanli, Shenzhen, Guangdong 518129 (CN); SONG, Jian, Shenzhen, Guangdong 518129 (CN); DU, Jun, Shenzhen, Guangdong 518129 (CN); ZHANG, Pan, Shenzhen, Guangdong 518129 (CN)
(74) Representative: Thun, Clemens
(86) International application number: PCT/CN2021/070849
(87) International publication number: WO 2022/147761

(57) **Abstract**

This application provides a resource configuration method and a communications apparatus. The method may include: A network device determines, based on a quantity of first terminal devices, a first sounding reference signal resource corresponding to a second terminal device, where the first terminal device is a terminal device that has accessed a first cell, and the first cell is a cell to be accessed by the second terminal device. The network device sends resource configuration information to the second terminal device, where the resource configuration information indicates the first sounding reference signal resource. The resource configuration method provided in this application can improve user experience and increase a cell throughput.

## Description

### TECHNICAL FIELD

This application relates to the communications field, and more specifically, to a resource configuration method and a communications apparatus.

### BACKGROUND

A sounding reference signal (sounding reference signal, SRS) is a very important uplink reference signal. The SRS includes an antenna-switching (antenna switching, AS)-type SRS, a codebook (codebook, CB)-type SRS, a beam-management (beam management)-type SRS, and a non-codebook (non-codebook, nonCB)-type SRS. Abase station may estimate uplink channel quality by using an SRS sent by a terminal. Based on reciprocity between uplink and downlink channels, the base station may further estimate downlink channel quality based on the SRS sent by the terminal, to perform downlink beamforming.

For SRSs of different types, the base station may configure an SRS resource for the terminal based on capability information reported by the terminal, and the base station configures an SRS resource for the terminal based on a maximum capability of the terminal. However, this resource configuration manner is not flexible enough.

### SUMMARY

This application provides a resource configuration method, to improve user experience and increase a cell throughput.

According to a first aspect, a resource configuration method is provided. The method may include: A network device determines, based on a quantity of first terminal devices, a first sounding reference signal resource corresponding to a second terminal device, where the first terminal device is a terminal device that has accessed a first cell, and the first cell is a cell to be accessed by the second terminal device. The network device sends resource configuration information to the second terminal device, where the resource configuration information indicates the first sounding reference signal resource.

According to the foregoing technical solution, the network device configures, based on a quantity of terminal devices that have accessed a current cell (that is, the first cell), an SRS resource for a terminal device that currently newly accesses the cell. This improves user experience and increases a cell throughput.

With reference to the first aspect, in some implementations of the first aspect, that a network device determines, based on a quantity of first terminal devices, a first sounding reference signal resource corresponding to a second terminal device includes: The network device determines the first sounding reference signal resource based on the quantity of first terminal devices and a maximum quantity of sounding reference signal resources that can be supported by the second terminal device, where a port quantity corresponding to the first sounding reference signal resource is less than or equal to a maximum sounding reference signal resource port quantity that can be supported by the second terminal device.

According to the foregoing technical solution, the network device may configure, for a terminal device that newly performs access, a smaller quantity of SRS resources than a maximum quantity of SRS resources that can be supported by a terminal device. Compared with an existing solution in which the network device always allocates the maximum quantity of SRS resources that can be supported by the terminal device to the terminal device that currently newly performs access, in the foregoing solution, when SRS resources that can be used by a current cell are limited, the network device can configure SRS resources for more terminal devices. This can increase a cell throughput.

With reference to the first aspect, in some implementations of the first aspect, that a network device determines, based on a quantity of first terminal devices, a sounding reference signal resource corresponding to a second terminal device includes: The network device uses a sounding reference signal resource corresponding to a first numerical interval as the first sounding reference signal resource based on a first mapping relationship, where the first numerical interval is a numerical interval corresponding to the quantity of first terminal devices, and the first mapping relationship indicates a mapping relationship between a plurality of numerical intervals and a plurality of sounding reference signal resources.

With reference to the first aspect, in some implementations of the first aspect, that a network device determines, based on a quantity of first terminal devices, a sounding reference signal resource corresponding to a second terminal device includes: If the second terminal device is a first-type terminal device, the network device uses a sounding reference signal resource corresponding to a second numerical interval as the first sounding reference signal resource based on a first mapping relationship, or the network device uses, as the first sounding reference signal resource, the maximum quantity of sounding reference signal resources that can be supported by the second terminal device, where the first mapping relationship indicates a mapping relationship between a plurality of numerical intervals and a plurality of sounding reference signal resources, a largest value in the second numerical interval is less than a smallest value in a numerical interval corresponding to the quantity of first terminal devices, the first-type terminal device includes a terminal device whose amount of transmitted data is greater than a preset threshold, a terminal device that can be configured, by using a quality of service parameter indicator value of a fifth generation mobile communications system, to transmit a first-type service, or a terminal device that is of a first service and that is identified by using a transaction identifier or a subscribe profile identifier, and the first service includes a heavy-traffic service, a high-priority service, or a low-latency service.

According to the foregoing technical solution, in a process in which the network device configures an SRS resource for a terminal device that newly performs access, when a type of the terminal device that newly performs access is considered, the network device may allocate more SRS resources to a first-type terminal device that newly performs access, so as to ensure efficient use of the SRS resources.

With reference to the first aspect, in some implementations of the first aspect, a port quantity corresponding to a sounding reference signal resource corresponding to a third numerical interval is equal to the maximum sounding reference signal resource port quantity that can be supported by the second terminal device, and a largest value in the third numerical interval is a numerical interval whose largest value is the smallest in the plurality of numerical intervals.

With reference to the first aspect, in some implementations of the first aspect, a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

According to the foregoing technical solution, as the quantity of first terminal devices increases, the network device may gradually reduce a port quantity corresponding to an SRS resource configured for a terminal device that newly performs access, so that SRS resources can be configured for more terminal devices. This increases a cell throughput.

With reference to the first aspect, in some implementations of the first aspect, the sounding reference signal resources include sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

According to the foregoing technical solution, when a terminal device that newly performs access supports SRSs of a plurality of types, as the quantity of first terminal devices increases, the network device may gradually reduce a port quantity corresponding to SRS resources of one or more types that are configured for the terminal device that newly performs access.

With reference to the first aspect, in some implementations of the first aspect, a critical value of at least one of the plurality of numerical intervals is determined based on the quantity of first terminal devices.

With reference to the first aspect, in some implementations of the first aspect, the method further includes: If at least one of the following conditions is met: a total port quantity corresponding to sounding reference signal resources configured by the network device for the first terminal device is greater than or equal to a first preset threshold, a quantity of terminal devices that newly access the first cell is greater than or equal to a second preset threshold, the total port quantity corresponding to the sounding reference signal resources configured by the network device for the first terminal device is less than or equal to a third preset threshold, and a quantity of terminal devices that exit from a network in the first cell is greater than or equal to a fourth preset threshold, the network device updates the critical value of the at least one of the plurality of intervals based on the quantity of first terminal devices.

With reference to the first aspect, in some implementations of the first aspect, the method further includes: The network device reconfigures a sounding reference signal resource for at least one of the first terminal devices based on sequence numbers of the first terminal devices and a second mapping relationship, where the second mapping relationship indicates an updated mapping relationship between a plurality of numerical intervals and a plurality of sounding reference signal resources.

According to a second aspect, a resource configuration method is provided. The method includes: A network device determines, based on a type of a terminal device, a sounding reference signal resource corresponding to the terminal device, where a port quantity corresponding to the sounding reference signal resource corresponding to the terminal device is less than or equal to a maximum sounding reference signal resource port quantity that can be supported by the terminal device. The network device sends resource configuration information to the terminal device, where the resource configuration information indicates the sounding reference signal resource corresponding to the terminal device.

According to the foregoing technical solution, when a type of a terminal device that newly performs access is considered, the network device may allocate a smaller quantity of SRS resources than a maximum quantity of SRS resources that can be supported by the terminal device to a first-type terminal device that newly performs access. Compared with an existing solution in which the network device always allocates the maximum quantity of SRS resources that can be supported by the terminal device to the terminal device that currently newly accesses the cell, in the foregoing technical solution, when SRS resources that can be used by the current cell are limited, the network device can configure SRS resources for more terminal devices. This can increase a cell throughput.

With reference to the second aspect, in some implementations of the second aspect, if the terminal device is a first-type terminal device, the port quantity corresponding to the sounding reference signal resource corresponding to the terminal device is equal to the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

According to the foregoing technical solution, the network device allocates more SRS resources to the first-type terminal device, so as to ensure efficient use of the SRS resources.

With reference to the second aspect, in some implementations of the second aspect, if the terminal device is not a first-type terminal device, the port quantity corresponding to the sounding reference signal resource corresponding to the terminal device is less than the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

According to a third aspect, a resource configuration method is provided. The method may include: A second terminal device receives resource configuration information from a network device, where the resource configuration information indicates a first sounding reference signal resource corresponding to the second terminal device, the first sounding reference signal resource is determined based on a quantity of first terminal devices, the first terminal device is a terminal device that has accessed a first cell, and the first cell is a cell to be accessed by the second terminal device. The second terminal device sends a sounding reference signal on the first sounding reference signal resource.

According to the foregoing technical solution, the network device configures, based on a quantity of terminal devices that have accessed a current cell (that is, the first cell), an SRS resource for a terminal device that currently newly accesses the cell. This improves user experience and increases a cell throughput.

With reference to the third aspect, in some implementations of the third aspect, a port quantity corresponding to the first sounding reference signal resource is less than or equal to a maximum sounding reference signal resource port quantity that can be supported by the second terminal device.

According to the foregoing technical solution, the network device may configure, for a terminal device that newly performs access, a smaller quantity of SRS resources than a maximum quantity of SRS resources that can be supported by a terminal device. Compared with an existing solution in which the network device always allocates the maximum quantity of SRS resources that can be supported by the terminal device to the terminal device that currently newly performs access, in the foregoing solution, when SRS resources that can be used by a current cell are limited, the network device can configure SRS resources for more terminal devices. This can increase a cell throughput.

With reference to the third aspect, in some implementations of the third aspect, the first sounding reference signal resource is a sounding reference signal resource corresponding to a first numerical interval, the first numerical interval is a numerical interval corresponding to the quantity of first terminal devices, the sounding reference signal resource corresponding to the first numerical interval is determined based on a first mapping relationship, and the first mapping relationship indicates a mapping relationship between a plurality of numerical intervals and a plurality of sounding reference signal resources.

With reference to the third aspect, in some implementations of the third aspect, the first sounding reference signal resource is a sounding reference signal resource corresponding to a second numerical interval, or the first sounding reference signal resource is a maximum quantity of sounding reference signal resources that can be supported by the second terminal device, a first mapping relationship indicates a mapping relationship between a plurality of numerical intervals and a plurality of sounding reference signal resources, a largest value in the second numerical interval is less than a smallest value in a numerical interval corresponding to the quantity of first terminal devices, the sounding reference signal resource corresponding to the second numerical interval is determined based on the first mapping relationship, and the first mapping relationship indicates a mapping relationship between a plurality of numerical intervals and a plurality of sounding reference signal resources.

According to the foregoing technical solution, in a process in which the network device configures an SRS resource for a terminal device that newly performs access, when a type of the terminal device that newly performs access is considered, the network device may allocate more SRS resources to a first-type terminal device that newly performs access, so as to ensure efficient use of the SRS resources.

With reference to the third aspect, in some implementations of the third aspect, a port quantity corresponding to a sounding reference signal resource corresponding to a third numerical interval is equal to the maximum sounding reference signal resource port quantity that can be supported by the second terminal device, and a largest value in the third numerical interval is a numerical interval whose largest value is the smallest in the plurality of numerical intervals.

With reference to the third aspect, in some implementations of the third aspect, a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

According to the foregoing technical solution, as the quantity of first terminal devices increases, the network device may gradually reduce a port quantity corresponding to an SRS resource configured for a terminal device that newly performs access, so that SRS resources can be configured for more terminal devices. This increases a cell throughput.

With reference to the third aspect, in some implementations of the third aspect, the sounding reference signal resources include sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

According to the foregoing technical solution, when a terminal device that newly performs access supports SRSs of a plurality of types, as the quantity of first terminal devices increases, the network device may gradually reduce a port quantity corresponding to SRS resources of one or more types that are configured for the terminal device that newly performs access.

According to a fourth aspect, a resource configuration method is provided. The method may include: A terminal device receives resource configuration information from a network device, where the resource configuration information indicates a sounding reference signal resource corresponding to the terminal device, the sounding reference signal resource corresponding to the terminal device is determined based on a type of the terminal device, and a port quantity corresponding to the sounding reference signal resource corresponding to the terminal device is less than or equal to a maximum sounding reference signal resource port quantity that can be supported by the terminal device. The terminal device sends a sounding reference signal on the sounding reference signal resource corresponding to the terminal device.

According to the foregoing technical solution, when a type of a terminal device that newly performs access is considered, the network device may allocate a smaller quantity of SRS resources than a maximum quantity of SRS resources that can be supported by the terminal device to a first-type terminal device that newly performs access. Compared with an existing solution in which the network device always allocates the maximum quantity of SRS resources that can be supported by the terminal device to the terminal device that currently newly performs access, in the foregoing solution, when SRS resources that can be used by a current cell are limited, the network device can configure SRS resources for more terminal devices. This can increase a cell throughput.

With reference to the fourth aspect, in some implementations of the fourth aspect, if the terminal device is a first-type terminal device, the port quantity corresponding to the sounding reference signal resource corresponding to the terminal device is equal to the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

According to the foregoing technical solution, the network device allocates more SRS resources to the first-type terminal device, so as to ensure efficient use of the SRS resources.

With reference to the fourth aspect, in some implementations of the fourth aspect, if the terminal device is not a first-type terminal device, the port quantity corresponding to the sounding reference signal resource corresponding to the terminal device is less than the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

According to a fifth aspect, a communications apparatus is provided. The communications apparatus may include a transceiver unit and a processing unit. The processing unit is configured to determine, based on a quantity of first terminal devices, a first sounding reference signal resource corresponding to a second terminal device, where the first terminal device is a terminal device that has accessed a first cell, and the first cell is a cell to be accessed by the second terminal device. The transceiver unit is configured to send resource configuration information to the second terminal device, where the resource configuration information indicates the first sounding reference signal resource.

With reference to the fifth aspect, in some implementations of the fifth aspect, the processing unit is specifically configured to determine the first sounding reference signal resource based on the quantity of first terminal devices and a maximum quantity of sounding reference signal resources that can be supported by the second terminal device, where a port quantity corresponding to the first sounding reference signal resource is less than or equal to a maximum sounding reference signal resource port quantity that can be supported by the second terminal device.

With reference to the fifth aspect, in some implementations of the fifth aspect, the processing unit is specifically configured to use a sounding reference signal resource corresponding to a first numerical interval as the first sounding reference signal resource based on a first mapping relationship, where the first numerical interval is a numerical interval corresponding to the quantity of first terminal devices, and the first mapping relationship indicates a mapping relationship between a plurality of numerical intervals and a plurality of sounding reference signal resources.

With reference to the fifth aspect, in some implementations of the fifth aspect, the processing unit is specifically configured to: if the second terminal device is a first-type terminal device, use a sounding reference signal resource corresponding to a second numerical interval as the first sounding reference signal resource based on a first mapping relationship, or use, as the first sounding reference signal resource, the maximum quantity of sounding reference signal resources that can be supported by the second terminal device, where a largest value in the second numerical interval is less than a smallest value in a numerical interval corresponding to the quantity of first terminal devices, the first-type terminal device includes a terminal device whose amount of transmitted data is greater than a preset threshold, a terminal device that can be configured, by using a quality of service parameter indicator value of a fifth generation mobile communications system, to transmit a first-type service, or a terminal device that is of a first service and that is identified by using a transaction identifier or a subscribe profile identifier, and the first service includes a heavy-traffic service, a high-priority service, or a low-latency service.

With reference to the fifth aspect, in some implementations of the fifth aspect, a port quantity corresponding to a sounding reference signal resource corresponding to a third numerical interval is equal to the maximum sounding reference signal resource port quantity that can be supported by the second terminal device, and a largest value in the third numerical interval is a numerical interval whose largest value is the smallest in the plurality of numerical intervals.

With reference to the fifth aspect, in some implementations of the fifth aspect, a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

With reference to the fifth aspect, in some implementations of the fifth aspect, the sounding reference signal resources include sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

With reference to the fifth aspect, in some implementations of the fifth aspect, a critical value of at least one of the plurality of numerical intervals is determined based on the quantity of first terminal devices.

With reference to the fifth aspect, in some implementations of the fifth aspect, the processing unit is further configured to: if at least one of the following conditions is met: a total port quantity corresponding to sounding reference signal resources configured by the communications apparatus for the first terminal devices is greater than or equal to a first preset threshold, a quantity of terminal devices that newly access the first cell is greater than or equal to a second preset threshold, the total port quantity corresponding to the sounding reference signal resources configured by the communications apparatus for the first terminal devices is less than or equal to a third preset threshold, and a quantity of terminal devices that exit from a network in the first cell is greater than or equal to a fourth preset threshold, update the critical value of the at least one of the plurality of intervals based on the quantity of first terminal devices.

With reference to the fifth aspect, in some implementations of the fifth aspect, the processing unit is further configured to reconfigure a sounding reference signal resource for at least one of the first terminal devices based on sequence numbers of the first terminal devices and a second mapping relationship, where the second mapping relationship indicates an updated mapping relationship between a plurality of numerical intervals and a plurality of sounding reference signal resources.

According to a sixth aspect, a communications apparatus is provided. The communications apparatus includes a transceiver unit and a processing unit. The processing unit is configured to determine, based on a type of a terminal device, a sounding reference signal resource corresponding to the terminal device, where a port quantity corresponding to the sounding reference signal resource corresponding to the terminal device is less than or equal to a maximum sounding reference signal resource port quantity that can be supported by the terminal device. The transceiver unit is configured to send resource configuration information to the terminal device, where the resource configuration information indicates the sounding reference signal resource corresponding to the terminal device.

With reference to the sixth aspect, in some implementations of the sixth aspect, if the terminal device is a first-type terminal device, the port quantity corresponding to the sounding reference signal resource corresponding to the terminal device is equal to the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

With reference to the sixth aspect, in some implementations of the sixth aspect, if the terminal device is not a first-type terminal device, the port quantity corresponding to the sounding reference signal resource corresponding to the terminal device is less than the maximum sounding reference signal resource port quantity that can be supported by the terminal device, the first-type terminal device includes a terminal device whose amount of transmitted data is greater than a preset threshold, a terminal device that can be configured, by using a quality of service parameter indicator of a fifth generation mobile communications system, to transmit a first service, or a terminal device that is of a first service and that is identified by using a transaction identifier or a subscribe profile identifier, and the first service includes a heavy-traffic service, a high-priority service, or a low-latency service.

According to a seventh aspect, a communications apparatus is provided. The communications apparatus may include a transceiver unit. The transceiver unit is configured to receive resource configuration information from a network device, where the resource configuration information indicates a first sounding reference signal resource corresponding to the communications apparatus, the first sounding reference signal resource is determined based on a quantity of first terminal devices, the first terminal device is a terminal device that has accessed a first cell, and the first cell is a cell to be accessed by the second terminal device. The transceiver unit is further configured to send a sounding reference signal on the first sounding reference signal resource.

With reference to the seventh aspect, in some implementations of the seventh aspect, a port quantity corresponding to the first sounding reference signal resource is less than or equal to a maximum sounding reference signal resource port quantity that can be supported by the second terminal device.

With reference to the seventh aspect, in some implementations of the seventh aspect, the first sounding reference signal resource is a sounding reference signal resource corresponding to a first numerical interval, the first numerical interval is a numerical interval corresponding to the quantity of first terminal devices, the sounding reference signal resource corresponding to the first numerical interval is determined based on a first mapping relationship, and the first mapping relationship indicates a mapping relationship between a plurality of numerical intervals and a plurality of sounding reference signal resources.

With reference to the seventh aspect, in some implementations of the seventh aspect, the first sounding reference signal resource is a sounding reference signal resource corresponding to a second numerical interval, or the first sounding reference signal resource is a maximum quantity of sounding reference signal resources that can be supported by the communications apparatus, a largest value in the second numerical interval is less than a smallest value in a numerical interval corresponding to the quantity of first terminal devices, the sounding reference signal resource corresponding to the second numerical interval is determined based on a first mapping relationship, and the first mapping relationship indicates a mapping relationship between a plurality of numerical intervals and a plurality of sounding reference signal resources.

With reference to the seventh aspect, in some implementations of the seventh aspect, a port quantity corresponding to a sounding reference signal resource corresponding to a third numerical interval is equal to the maximum sounding reference signal resource port quantity that can be supported by the communications apparatus, and a largest value in the third numerical interval is a numerical interval whose largest value is the smallest in the plurality of numerical intervals.

With reference to the seventh aspect, in some implementations of the seventh aspect, a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

With reference to the seventh aspect, in some implementations of the seventh aspect, the sounding reference signal resources include sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

According to an eighth aspect, a communications apparatus is provided. The communications apparatus may include a transceiver unit. The transceiver unit is configured to receive resource configuration information from a network device, where the resource configuration information indicates a sounding reference signal resource corresponding to the communications apparatus, the sounding reference signal resource corresponding to the communications apparatus is determined based on a type of the communications apparatus, and a port quantity corresponding to the sounding reference signal resource corresponding to the communications apparatus is less than or equal to a maximum sounding reference signal resource port quantity that can be supported by the communications apparatus. The transceiver unit is further configured to send a sounding reference signal on the sounding reference signal resource corresponding to the communications apparatus.

With reference to the eighth aspect, in some implementations of the eighth aspect, if the communications apparatus is a first-type communications apparatus, the port quantity corresponding to the sounding reference signal resource corresponding to the communications apparatus is equal to the maximum sounding reference signal resource port quantity that can be supported by the communications apparatus, the first-type communications apparatus includes a communications apparatus whose amount of transmitted data is greater than a preset threshold, a communications apparatus that can be configured, by using a quality of service parameter indicator of a fifth generation mobile communications system, to transmit a first service, or a communications apparatus that is of a first service and that is identified by using a transaction identifier or a subscribe profile identifier, and the first service includes a heavy-traffic service, a high-priority service, or a low-latency service.

With reference to the eighth aspect, in some implementations of the eighth aspect, if the communications apparatus is not a first-type communications apparatus, the port quantity corresponding to the sounding reference signal resource corresponding to the communications apparatus is less than the maximum sounding reference signal resource port quantity that can be supported by the communications apparatus, the first-type communications apparatus includes a communications apparatus whose amount of transmitted data is greater than a preset threshold, a communications apparatus that can be configured, by using a quality of service parameter indicator of a fifth generation mobile communications system, to transmit a first service, or a communications apparatus that is of a first service and that is identified by using a transaction identifier or a subscribe profile identifier, and the first service includes a heavy-traffic service, a high-priority service, or a low-latency service.

According to a ninth aspect, a communications apparatus is provided. The communications apparatus includes a processor. The processor is coupled to a memory, and may be configured to execute instructions in the memory, to implement the method according to any one of the possible implementations of the first aspect and the second aspect. Optionally, the communications apparatus further includes the memory. Optionally, the communications apparatus further includes a communications interface. The processor is coupled to the communications interface. The communications interface is configured to input and/or output information. The information includes at least one of an instruction and data.

In an implementation, the communications apparatus is a network device. When the communications apparatus is the network device, the communications interface may be a transceiver or an input/output interface.

Optionally, the transceiver may be a transceiver circuit. Optionally, the input/output interface may be an input/output circuit.

In another implementation, the communications apparatus is a chip or a chip system disposed in a network device. When the communications apparatus is the chip or the chip system disposed in the network device, the communications interface may be an input/output interface, an interface circuit, an output circuit, an input circuit, a pin, a related circuit, or the like. The processor may alternatively be embodied as a processing circuit or a logic circuit.

According to a tenth aspect, a communications apparatus is provided. The communications apparatus includes a processor. The processor is coupled to a memory, and may be configured to execute instructions in the memory, to implement the method according to any one of the possible implementations of the third aspect and the fourth aspect. Optionally, the communications apparatus further includes the memory. Optionally, the communications apparatus further includes a communications interface. The processor is coupled to the communications interface. The communications interface is configured to input and/or output information. The information includes at least one of an instruction and data.

In an implementation, the communications apparatus is a terminal device. When the communications apparatus is the terminal device, the communications interface may be a transceiver or an input/output interface.

Optionally, the transceiver may be a transceiver circuit. Optionally, the input/output interface may be an input/output circuit.

In another implementation, the communications apparatus is a chip or a chip system disposed in a terminal device. When the communications apparatus is the chip or the chip system disposed in the terminal device, the communications interface may be an input/output interface, an interface circuit, an output circuit, an input circuit, a pin, a related circuit, or the like. The processor may alternatively be embodied as a processing circuit or a logic circuit.

According to an eleventh aspect, a processor is provided. The processor includes an input circuit, an output circuit, and a processing circuit. The processing circuit is configured to: receive a signal through the input circuit, and transmit a signal through the output circuit, so that the processor performs the method according to any one of the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal that is received by the input circuit may be received and input by, for example, but not limited to, a receiver, and a signal that is output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in this embodiment of this application.

According to a twelfth aspect, a processing apparatus is provided. The processing apparatus includes a communications interface and a processor. The communications interface is coupled to the processor. The communications interface is configured to input and/or output information. The information includes at least one of an instruction and data. The processor is configured to execute a computer program, so that the processing apparatus performs the method according to any one of the possible implementations of the first aspect to the fourth aspect.

Optionally, there are one or more processors, and there are one or more memories.

According to a thirteenth aspect, a processing apparatus is provided. The processing apparatus includes a processor and a memory. The processor is configured to: read instructions stored in the memory, receive a signal through a receiver, and transmit a signal through a transmitter, so that the processing apparatus performs the method according to any one of the possible implementations of the first aspect to the fourth aspect.

Optionally, there are one or more processors, and there are one or more memories.

Optionally, the memory and the processor may be integrated, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner in which the memory and the processor are disposed are not limited in this embodiment of this application.

It should be understood that, in a related information exchange process, for example, sending indication information may be a process of outputting the indication information from the processor, and receiving the indication information may be a process of inputting the received indication information into the processor. Specifically, the information that is output by the processor may be output to the transmitter, and the input information that is received by the processor may be from the receiver. The transmitter and the receiver may be collectively referred to as a transceiver.

The apparatus according to the twelfth aspect or the thirteenth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor, or may exist independently.

According to a fourteenth aspect, a computer program product is provided. The computer program product includes a computer program (which may also be referred to as code or instructions). When the computer program is run, a computer is enabled to perform the method according to any one of the possible implementations of the first aspect to the fourth aspect.

According to a fifteenth aspect, a computer-readable medium is provided. The computer-readable medium stores a computer program (which may also be referred to as code or instructions). When the computer program is run on a computer, the computer is enabled to perform the method according to any one of the possible implementations of the first aspect to the fourth aspect.

According to a sixteenth aspect, a communications system is provided. The communications system includes the foregoing terminal device and the foregoing network device.

### BRIEF DESCRIPTION OF DRAWINGS

FIG. 1 is a schematic diagram of a communications system to which a method according to an embodiment of this application is applicable;
FIG. 2 to FIG. 4C are schematic flowcharts of resource configuration methods according to embodiments of this application;
FIG. 5 is a schematic flowchart of a resource reconfiguration method according to an embodiment of this application;
FIG. 6 is a schematic flowchart of a resource configuration method according to another embodiment of this application;
FIG. 7 and FIG. 8 are schematic block diagrams of communications apparatuses according to embodiments of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

The following describes technical solutions of this application with reference to accompanying drawings
The technical solutions provided in this application may be applied to various communications systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a 5th generation (5th Generation, 5G) mobile communications system, and a new radio access technology (new radio access technology, NR). The 5G mobile communications system may include a non-standalone (non-standalone, NSA) communications system and/or a standalone (standalone, SA) communications system.

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may be further applied to a future communications system, for example, a sixth generation mobile communications system. This is not limited in this application.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), and the like. Alternatively, the device may be a gNB in a 5G system such as an NR system, a transmission point (TRP or TP), or one antenna panel or a group of antenna panels (including a plurality of antenna panels) of a base station in a 5G system. Alternatively, the device may be a network node that constitutes a gNB or a transmission point, for example, a baseband unit (BBU) or a distributed unit (distributed unit, DU).

In some deployments, the gNB may include a centralized unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service and implementing functions of a radio resource control (radio resource control, RRC) layer and a packet data convergence protocol (packet data convergence protocol, PDCP) layer. The DU is responsible for processing a physical layer protocol and a real-time service and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) configured by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are used to provide a high-speed data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus.

The terminal device may be a device that provides voice/data connectivity for a user, for example, a handheld device having a wireless connection function or a vehicle-mounted device. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of the user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, for example, various smart bands or smart jewelry for monitoring physical signs.

In addition, the terminal device may alternatively be a terminal device in an internet of things (internet of things, IoT) system. The IoT is an important part in future development of information technologies. A main technical feature of the IoT is to connect things to a network by using a communications technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal device may alternatively include a sensor such as an intelligent printer, a train detector, or a gas station, and main functions include: collecting data (for some terminal devices), receiving control information and downlink data of the network device, sending an electromagnetic wave, and transmitting uplink data to the network device.

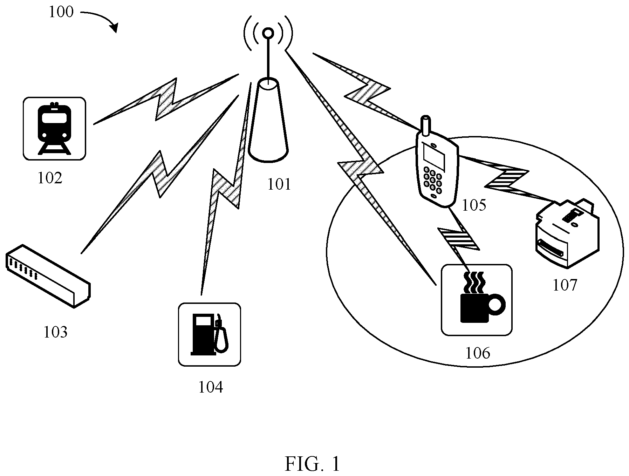

For ease of understanding of embodiments of this application, a communications system to which a resource configuration method according to an embodiment of this application is applicable is first described in detail with reference to FIG. 1. FIG. 1 is a schematic diagram of a communications system 100 to which a method according to an embodiment of this application is applicable. As shown in the figure, the communications system 100 may include at least one network device, such as a network device 101 shown in FIG. 1. The communications system 100 may further include at least one terminal device, such as terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a particular geographic area, and may communicate with a terminal device located in the coverage. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 constitute one communications system.

The terminal devices may directly communicate with each other. For example, the terminal devices may directly communicate with each other by using a D2D technology. As shown in the figure, the terminal devices 105 and 106 may directly communicate with each other by using the D2D technology, and the terminal devices 105 and 107 may directly communicate with each other by using the D2D technology. The terminal devices 106 and 107 may separately or simultaneously communicate with the terminal device 105.

The terminal devices 105 to 107 may alternatively communicate with the network device 101 separately. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

It should be understood that FIG. 1 shows an example of one network device, a plurality of terminal devices, and communication links between the communications devices. Optionally, the communications system 100 may include a plurality of network devices, and another quantity of terminal devices, for example, more or fewer terminal devices, may be included in coverage of each network device. This is not limited in this application.

A plurality of antennas may be configured for each of the foregoing communications devices, for example, the network device 101 and the terminal devices 102 to 107 in FIG. 1. The plurality of antennas may include at least one transmit antenna for sending a signal and at least one receive antenna for receiving a signal. In addition, each communications device further additionally includes a transmitter chain and a receiver chain. Aperson of ordinary skill in the art may understand that the transmitter chain and the receiver chain each may include a plurality of components (for example, a processor, a modulator, a multiplexer, a demodulator, a demultiplexer, and an antenna) related to signal sending and receiving. Therefore, the network device and the terminal device may communicate with each other by using a multiple-antenna technology.

Optionally, the wireless communications system 100 may further include another network entity, for example, a network controller or a mobility management entity. This is not limited in this embodiment of this application.

A sounding reference signal (sounding reference signal, SRS) is a very important uplink reference signal. The SRS includes an antenna-switching (antenna switching, AS)-type SRS, a codebook (codebook, CB)-type SRS, a beam-management (beam management)-type SRS, and a non-codebook (non-codebook, nonCB)-type SRS. Abase station may estimate uplink channel quality by using an SRS sent by a terminal. Based on reciprocity between uplink and downlink channels, the base station may further estimate downlink channel quality based on the SRS sent by the terminal, to perform downlink beamforming.

For SRSs of different types, the base station may configure an SRS resource for the UE based on capability information reported by the UE.

For example, for an AS-type SRS, the UE reports, to the base station, an SRS antenna switching mode supported by the UE. The UE may report, by using a supportedSRS-TxPortSwitch (supportedSRS-TxPortSwitch) information element, an initial SRS antenna switching mode supported by the UE. A value of supportedSRS-TxPortSwitch may be as follows:
supportedSRS-TxPortSwitch ENUMERATED {t1r1-t1r2, ..., t1r1-t1r2-t1r4, t1r1-t1r2-t2r2-t2r4, t1r1-t1r2-t2r2-t1r4-t2r4, t1r1-t2r2, t1r1-t2r2-t4r4, nonsupport}

When supportedSRS-TxPortSwitch is t1r1-t1r2-t1r4, it indicates that the SRS antenna switching mode supported by the UE is t1r1, t2r2, and tlr4. When supportedSRS-TxPortSwitch is notsupport (notsupport), it indicates that the UE does not support sending of the AS-type SRS.

The UE may also report, by using a ReducedMaxSrsTxPortSwitch (ReducedMaxSrsTxPortSwitch) information element, an updated SRS antenna switching mode supported by the UE. A weight of ReducedMaxSrsTxPortSwitch may be as follows:

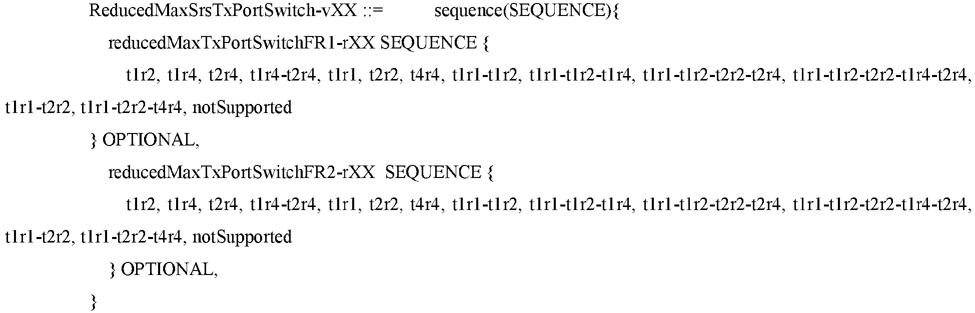

The base station uses, as a limiting factor for dynamically adjusting an AS-type SRS resource allocated to the UE for use, the SRS antenna switching mode reported by the UE. To be specific, if a quantity of SRS resources allocated by the base station to the UE is n and a port quantity corresponding to each SRS resource is m, an SRS antenna switching mode txry corresponding to n and m needs to belong to the antenna switching mode supported by the UE. Generally, x=m, and y=m*n. For example, a quantity of SRS resources corresponding to the antenna switching mode tlr4 is 4, and a port quantity corresponding to each SRS resource is 1.

For another example, for a CB-type SRS, the UE reports, to the base station, a maximum uplink multiple-input multiple-output (multiple-input multiple-output, MIMO) layer quantity that corresponds to the CB-type SRS and that is supported by the UE. The UE may report, by using a maxNumberMIMO-LayersCB-PUSCH (maxNumberMIMO-LayersCB-PUSCH) information element, a maximum uplink MIMO layer quantity that corresponds to the CB-type SRS and that is supported by the UE. A value of maxNumberMIMO-LayersCB-PUSCH may be as follows:

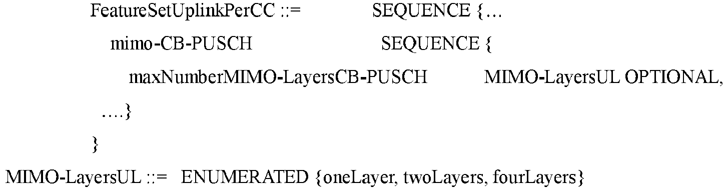

Herein, FeatureSetUplinkPerCC indicates an uplink carrier feature set; mimo-CB-PUSCH indicates a maximum MIMO layer quantity supported by a physical uplink shared channel; and MIMO-LayersUL indicates an uplink MIMO layer quantity.

The UE may report, by using a reducedMaxMIMO-Layers (reducedMaxMIMO-Layers) information element, an updated maximum uplink MIMO layer quantity supported by the UE (that is, the maximum uplink MIMO layer quantity that corresponds to the CB-type SRS and that is supported by the UE is also updated). A value of reduceMaxMIMO-Layers may be as follows:

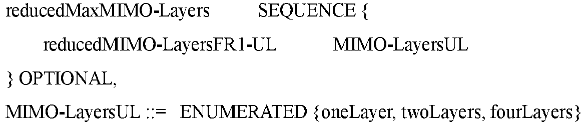

The base station uses, as a limiting factor for dynamically adjusting a CB-type SRS resource allocated to the UE for use, the initial or updated maximum uplink MIMO layer quantity that corresponds to the CB-type SRS and that is reported by the UE and supported by the UE. To be specific, if a port quantity corresponding to the CB-type SRS resource allocated by the base station to the terminal is m, m needs to be less than or equal to the initially reported maximum uplink MIMO layer quantity supported by the UE, and the maximum uplink MIMO layer quantity supported by the UE is updated as much as possible. Generally, the base station allocates only one CB-type SRS resource to the UE, that is, n=1. Assuming that the maximum uplink MIMO layer quantity supported by the UE is 2 (twoLayers), the port quantity m corresponding to the SRS resource allocated by the base station to the UE can only be 1 or 2.

For another example, for a non-codebook-type SRS resource, the UE reports, to the base station, a maximum uplink MIMO layer quantity that corresponds to the non-codebook-type SRS and that is supported by the UE. The UE may report, by using a maxNumberMIMO-LayersNonCB-PUSCH (maxNumberMIMO-LayersNonCB-PUSCH) information element, an initial maximum uplink MIMO layer quantity that corresponds to the nonCB-type SRS and that is supported by the UE. A value of maxNumberMIMO-LayersNonCB-PUSCH may be as follows:

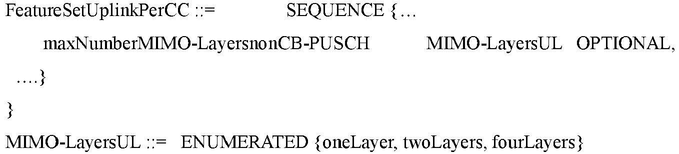

The UE may report, by using a reducedMaxMIMO-Layers information element, an updated maximum uplink MIMO layer quantity supported by the UE (that is, the maximum uplink MIMO layer quantity that corresponds to the nonCB-type SRS and that is supported by the UE is also updated). A value of reducedMaxMIMO-Layers may be as follows:

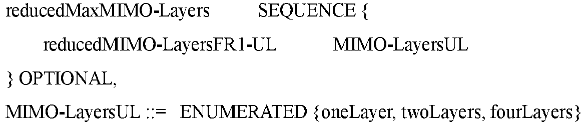

The base station uses, as a limiting factor for dynamically adjusting a nonCB-type SRS resource allocated to the UE for use, the initial or updated maximum uplink MIMO layer quantity that corresponds to the nonCB-type SRS and that is reported by the UE and supported by the UE. To be specific, if a port quantity corresponding to the nonCB-type SRS resource allocated by the base station to the UE is m, m needs to be less than or equal to the initially reported maximum uplink MIMO layer quantity supported by the UE, and the maximum uplink MIMO layer quantity supported by the UE is updated as much as possible. Assuming that the maximum uplink MIMO layer quantity that corresponds to the nonCB-type SRS and that is supported by the UE is 2 (twoLayers), the port quantity m corresponding to the SRS resource allocated by the base station to the UE can only be 1 or 2.

For each of the foregoing SRSs of the three types, the UE reports a maximum port quantity that corresponds to a single SRS resource and that can be supported by the UE. The UE may report, by using maxNumberSRS-Ports-PerResource, an initial maximum port quantity that corresponds to the single SRS resource and that can be supported by the UE. A port quantity corresponding to the SRS resource allocated by the base station to the UE needs to be less than or equal to the maximum port quantity (maxNumberSRS-Ports-PerResource) that corresponds to each SRS resource and that is supported by the UE. A value of maxNumberSRS-Ports-PerResource may be as follows:
maxNumberSRS-Ports-PerResource ENUMERATED {n1, n2, n4}

The UE may report, by using reducedmaxNumberSRS-Ports-PerResource (reducedmaxNumberSRS-Ports-PerResource), an updated maximum port quantity that corresponds to the single SRS resource and that can be supported by the UE. A value of reducedmaxNumberSRS-Ports-PerResource may be as follows:
reducedmaxNumberSRS-Ports-PerResource ENUMERATED {n1, n2, n4}

The base station uses, as a limiting factor for dynamically adjusting SRS resources of all types allocated to the UE for use, the initial or updated maximum port quantity that corresponds to the single SRS resource and that is reported by the UE and can be supported by the UE. To be specific, if a port quantity corresponding to a single SRS resource of any type that is allocated by the base station to the UE is m, m needs to be less than or equal to an initially reported maximum port quantity that corresponds to the single SRS resource and that can be supported by the UE, so that the maximum port quantity that corresponds to the single SRS resource and that is supported by the UE is updated as much as possible.

As described above, before the base station configures the SRS resource for the UE, the base station receives the capability information reported by the UE. Further, the base station configures the SRS resource for the UE based on the capability information reported by the UE. Currently, the base station usually configures an SRS resource for the UE based on SRS resources supported by the UE with a maximum capability. For example, if a maximum uplink MIMO layer quantity that corresponds to a CB-type SRS and that is reported by the UE is 4, the CB-type SRS resource configured by the base station for the UE corresponds to four ports. However, SRS resources that can be used in each cell are limited. When the base station always configures SRS resources for the UE based on the maximum capability of the UE, SRS resources cannot be configured for more UEs. Consequently, a cell uplink throughput is reduced and downlink beamforming performance is degraded.

In view of this, embodiments of this application provide a resource configuration method, to improve user experience and increase a cell throughput. The following describes the resource configuration method provided in the embodiments of this application with reference to the accompanying drawings.

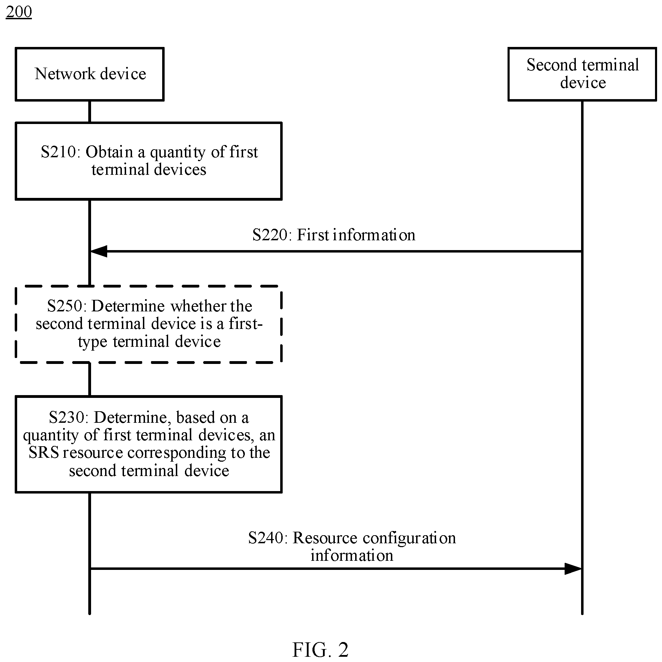

FIG. 2 is a schematic flowchart of a resource configuration method according to an embodiment of this application. As shown in FIG. 2, the method 200 may include S210 to S250. The following describes each step in detail.

S210: A network device obtains a quantity of first terminal devices, where the first terminal device is a terminal device that has accessed a first cell, and the first cell is a cell to be accessed by a second terminal device.

S220: The network device receives first information. Correspondingly, in S220, the second terminal device sends the first information.

The first information is used to determine a maximum quantity of SRS resources that can be supported by the second terminal device. Alternatively, the first information may be used to determine a maximum SRS resource port quantity that can be supported by the second terminal device. Specifically, the first information may include capability information of the second terminal device and/or assistance information of the second terminal device.

In an example, the first information may include the capability information of the second terminal device, and the capability information of the second terminal device includes at least one of the following: an SRS antenna switching mode supported by the second terminal device, a maximum uplink MIMO layer quantity that corresponds to a CB-type SRS and that is supported by the second terminal device, a maximum uplink MIMO layer quantity that corresponds to a nonCB-type SRS and that is supported by the second terminal device, and a maximum port quantity that corresponds to a single SRS resource and that is supported by the second terminal device. It should be understood that, when the first information includes the capability information of the second terminal device, the maximum quantity of SRS resources that can be supported by the second terminal device is a quantity of SRS resources that is supported by the second terminal device with a maximum capability.

For example, if the capability information of the second terminal device includes the SRS antenna switching mode supported by the second terminal device, the network device may determine, based on the SRS antenna switching mode, an AS-type SRS resource quantity supported by the second terminal device with a maximum capability and a port quantity corresponding to a single SRS resource, and may further determine an AS-type SRS resource port quantity supported by the second terminal device with a maximum capability. For example, if the SRS antenna switching mode that is supported by the second terminal device and that is included in the capability information of the second terminal device is t1r1-t1r2-t2r2-t2r4, the network device may determine that the AS-type SRS resource port quantity supported by the second terminal device with the maximum capability is 4.

For another example, if the capability information of the second terminal device includes the maximum uplink MIMO layer quantity that corresponds to the CB-type SRS and that is supported by the second terminal device, the network device may determine, based on the maximum uplink MIMO layer quantity that corresponds to the CB-type SRS and that is supported by the second terminal device, a CB-type SRS resource port quantity supported by the second terminal device with a maximum capability. For example, if the maximum uplink MIMO layer quantity that corresponds to the CB-type SRS and that is supported by the second terminal device is 4, the network device may determine that the CB-type SRS resource port quantity supported by the second terminal device with the maximum capability is 4.

For another example, if the capability information of the second terminal device includes the antenna switching mode supported by the second terminal device and the maximum uplink MIMO layer quantity corresponding to the CB-type SRS, the network device may determine, based on the antenna switching mode supported by the second terminal device, an AS-type SRS resource port quantity supported by the second terminal device with a maximum capability, and may determine, based on the maximum uplink MIMO layer quantity that corresponds to the CB-type SRS and that is supported by the second terminal device, a CB-type SRS resource port quantity supported by the second terminal device with a maximum capability. Further, the network device may determine an SRS resource port quantity supported by the second terminal device with a maximum capability. The SRS resource port quantity supported by the second terminal device with the maximum capability is a sum of an AS-type SRS resource port quantity supported by the second terminal device with a maximum capability and a CB-type SRS resource port quantity supported by the second terminal device with a maximum capability. In other words, if the network device determines, based on the capability information of the second terminal device, that the second terminal device supports SRSs of a plurality of types, the SRS resource port quantity that is supported by the second terminal device with the maximum capability and that is determined by the network device is a sum of port quantities that correspond to the SRS resources of the plurality of types and that are supported by the second terminal device with the maximum capability.

In another example, the first information may include the assistance information of the second terminal device. The assistance information of the second terminal device may include assistance information related to overheating, assistance information related to energy saving, and the like. The assistance information of the second terminal device may be used to determine a maximum quantity of SRS resources that is expected by the second terminal device. It should be understood that, when the first information includes the assistance information of the second terminal device, the maximum quantity of SRS resources that can be supported by the second terminal device is the maximum quantity of SRS resources that is expected by the second terminal device.

For example, if an antenna switching mode that is expected by the second terminal device and that is indicated by the assistance information of the second terminal device is t1r1-t1r2, the network device determines, based on the assistance information of the second terminal device, that a maximum AS-type SRS resource port quantity expected by the second terminal device is 2.

In still another example, the first information may include the capability information of the second terminal device and the assistance information of the second terminal device. In this case, the maximum quantity of SRS resources that can be supported by the second terminal device is a smaller value of the quantity of SRS resources that is supported by the second terminal device with the maximum capability and the maximum quantity of SRS resources that is expected by the second terminal device.

For example, if the antenna switching mode that is supported by the second terminal device and that is included in the capability information of the second terminal device is t1r1-t1r2-t2r2-t2r4, and the antenna switching mode that is expected by the second terminal device and that is indicated by the assistance information of the second terminal device is t1r1-t1r2, a maximum quantity of AS-type SRS resources that can be supported by the second terminal device and that is determined by the network device based on the first information corresponds to the antenna switching mode tlr2. To be specific, the quantity of AS-type SRS resources that is supported by the second terminal device with the maximum capability and that is determined by the network device is 2, and a port quantity corresponding to each SRS resource is 1.

For another example, if the maximum uplink MIMO layer quantity that corresponds to the CB-type SRS and that is supported by the second terminal device and included in the capability information of the second terminal device is 4, and a maximum uplink MIMO layer quantity that corresponds to the CB-type SRS and that is expected by the second terminal device and indicated by the assistance information of the second terminal device is 2, the maximum CB-type SRS resource port quantity that can be supported by the second terminal device and that is determined by the network device based on the first information is 2.

S230: The network device determines, based on the quantity of first terminal devices, a first SRS resource corresponding to the second terminal device.

The first SRS resource corresponding to the second terminal device is an SRS resource configured by the network device for the second terminal device.

The network device may use an SRS resource corresponding to a numerical interval #1 (that is, a first numerical interval) as the first SRS resource based on a first mapping relationship. The numerical interval #1 is a numerical interval corresponding to the quantity of first terminal devices. The first mapping relationship indicates a mapping relationship between a plurality of numerical intervals and a plurality of SRS resources.

The first mapping relationship may be determined based on the quantity of first terminal devices and the maximum quantity of SRS resources that can be supported by the second terminal device. The plurality of SRS resources may be determined based on the maximum quantity of SRS resources that can be supported by the second terminal device. The plurality of numerical intervals may be determined based on the quantity of first terminal devices. For example, a critical value of at least one of the plurality of numerical intervals is determined based on the quantity of first terminal devices. The critical value of the numerical interval may be a largest value and/or a smallest value in the numerical interval.

A relationship between SRS resources corresponding to different numerical intervals is described as follows: A port quantity corresponding to an SRS resource corresponding to a numerical interval #2 (that is, a fourth numerical interval) is greater than a port quantity corresponding to an SRS resource corresponding to a numerical interval #3 (that is, a fifth numerical interval). The numerical interval #2 and the numerical interval #3 are any two numerical intervals that meet the following relationship in the plurality of numerical intervals: A largest value in the numerical interval #2 is less than a smallest value in the numerical interval #3. In other words, a quantity of SRS resources corresponding to the numerical interval #2 is greater than a quantity of SRS resources corresponding to the numerical interval #3.

It can be learned from the foregoing descriptions that a port quantity corresponding to an SRS resource corresponding to a numerical interval whose largest value is the smallest in the plurality of numerical intervals is the largest. Optionally, the port quantity corresponding to the SRS resource corresponding to the numerical interval whose largest value is the smallest in the plurality of numerical intervals is equal to the maximum SRS resource port quantity that can be supported by the second terminal device. In other words, a quantity of SRS resources corresponding to the numerical interval (that is, a third numerical interval) whose largest value is the smallest in the plurality of numerical intervals is equal to the maximum quantity of SRS resources that can be supported by the second terminal device.

It can be learned from the foregoing descriptions that, as the quantity of first terminal devices increases, a port quantity corresponding to the first SRS resource determined by the network device decreases. That a port quantity corresponding to the first SRS resource decreases may mean that a quantity of resources included in the first SRS resource decreases, or a port quantity corresponding to each SRS resource in the first SRS resource decreases. Specifically, in a process in which the network device configures an SRS resource for the second terminal device based on a support sequence reported by a capability of the second terminal device, as the quantity of first terminal devices increases, the network device may first reduce a quantity of SRS resources configured for the second terminal device, and then gradually reduce a port quantity corresponding to an SRS resource; or the network device may first reduce a port quantity corresponding to each SRS resource configured for the second terminal device, and then reduce a quantity of SRS resources. For example, if supportedSRS-TxPortSwitch-r16 is t1r1-t2r2-t4r4, based on the capability information reported by the second terminal device, the network device may first allocate an SRS resource to the second terminal device based on the antenna switching mode t4r4, and then allocate an SRS resource to the second terminal device based on the antenna switching mode t2r2. If the quantity of first terminal devices continues to increase, the network device may first allocate an SRS resource to the second terminal device based on the antenna switching mode t1r1. For another example, if supportedSRS- TxPortSwitch-r 16 is t1r1-t1r2-t2r2-t2r4, based on the capability information reported by the second terminal device, the network device may first allocate an SRS resource to the second terminal device based on the antenna switching mode t2r4, and then allocate an SRS resource to the second terminal device based on the antenna switching mode t2r2 or tlr2. If the quantity of first terminal devices continues to increase, the network device may first allocate an SRS resource to the second terminal device based on the antenna switching mode t1r1, and finally allocate an SRS resource to the second terminal device in a manner in which the antenna switching mode is notSupported.

The resource configuration method may also be understood as the following process: As the quantity of first terminal devices increases, SRS resources configured by the network device for the second terminal device decrease, and a total SRS resource port quantity is gradually adjusted based on the first information reported by the second terminal device.

A type of the first SRS resource is not limited in this embodiment of this application.

In an example, the first SRS resource may be an AS-type SRS resource, that is, the network device may configure the AS-type SRS resource for the second terminal device according to the method provided in this embodiment of this application. As described above, it can be learned from a possible value of supportedSRS-TxPortSwitch that the following SRS antenna switching modes are included: t1r1 (a total port quantity corresponding to an AS-type SRS resource is 1), tlr2 (a total port quantity corresponding to AS-type SRS resources is 2), tlr4 (a total port quantity corresponding to AS-type SRS resources is 4), t2r2 (a total port quantity corresponding to an AS-type SRS resource is 2), t2r4 (a total port quantity corresponding to AS-type SRS resources is 4), and t4r4 (a total port quantity corresponding to an AS-type SRS resource is 4). Therefore, the plurality of numerical intervals and the SRS resources corresponding to the numerical intervals meet resource configuration policies shown in Table 1.

**Table 1**

| Quantity of first terminal devices | SRS resource configuration policies corresponding to different intervals |
|---|---|
| [0, A1] | A total port quantity corresponding to a configured AS-type SRS resource does not exceed 4 |
| (A1, B1] | A total port quantity corresponding to a configured AS-type SRS resource does not exceed 2 |
| (B1, C1] | A total port quantity corresponding to a configured AS-type SRS resource does not exceed 1 |
| (C1, infinity) | No AS-type SRS resource is configured |

It should be understood that Table 1 is merely an example. With development of technologies, a maximum AS-type SRS resource port quantity that can be supported by the terminal device may increase to 6, 8, 10, or the like. In this case, the resource configuration policies corresponding to the different numerical intervals shown in Table 1 may change. For example, the resource configuration policy corresponding to [0, A1] may be that the total port quantity corresponding to the configured AS-type SRS resource does not exceed 6.

The following provides two examples to describe a method in which the network device configures an AS-type SRS resource for the second terminal device.

Example 1: If the network device determines, based on the first information sent by the second terminal device, that the SRS antenna switching mode supported by the second terminal device is t1r1-t1r2-t2r2-t2r4, and a maximum port quantity that corresponds to SRS resources and that can be supported by the second terminal device is 4 (a value of a maximum port quantity corresponding to a single SRS resource may be 1 or 2, and if the value is 2, it indicates that the terminal device cannot support t4r4), the first mapping relationship may be shown in Table 2.

**Table 2**

| Quantity of first terminal devices | SRS resources corresponding to different intervals |
|---|---|
| [0, A1] | A configured AS-type SRS resource corresponds to t2r4 |
| (A1, B1] | A configured AS-type SRS resource corresponds to t2r2/tlr2 |
| (B1, C1] | A configured AS-type SRS resource corresponds to t1r1 |
| (C1, infinity) | No AS-type SRS resource is configured |

Herein, A1 < B 1 < C1, and A1, B 1, and C1 are all positive integers.

A port quantity corresponding to an AS-type SRS resource corresponding to the 1^{st} numerical interval (that is, [0, A1]) shown in Table 2 is 4. In other words, a quantity of AS-type SRS resources corresponding to the 1^{st} numerical interval is a maximum quantity of AS-type SRS resources that can be supported by the second terminal device. It should be understood that, in Table 2, only an example in which the quantity of AS-type SRS resources corresponding to the 1^{st} numerical interval is equal to the maximum quantity of AS-type SRS resources that can be supported by the second terminal device is used. Alternatively, the quantity of AS-type SRS resources corresponding to the 1^{st} numerical interval may be less than the maximum quantity of AS-type SRS resources that can be supported by the second terminal device. For example, the port quantity corresponding to the AS-type SRS resource corresponding to the 1^{st} numerical interval is 2.

Based on the foregoing relationship between SRS resources corresponding to different numerical intervals, a port quantity corresponding to an AS-type SRS resource corresponding to the 2^{nd} numerical interval (that is, (A1, B1]) is less than the port quantity corresponding to the AS-type SRS resource corresponding to the 1^{st} numerical interval. In other words, the port quantity corresponding to the AS-type SRS resource corresponding to the 2^{nd} numerical interval may be 2, 1, or 0. In Table 2, an example in which the port quantity corresponding to the AS-type SRS resource corresponding to the 2^{nd} numerical interval is 2 is used.

When the port quantity corresponding to the AS-type SRS resource corresponding to the 2^{nd} numerical interval is 2, a port quantity corresponding to an AS-type SRS resource corresponding to the 3^{rd} numerical interval (that is, (B 1, C1]) may be 1 or 0. In Table 2, an example in which the port quantity corresponding to the AS-type SRS resource corresponding to the 3^{rd} numerical interval is 1 is used.

When the port quantity corresponding to the AS-type SRS resource corresponding to the 3^{rd} numerical interval is 1, a port quantity corresponding to an AS-type SRS resource corresponding to the 4^{th} numerical interval (that is, (C1, infinity)) is 0 (that is, processing is performed in a manner in which the antenna switching mode is notSupported, and there is no AS-type resource).

As shown in Table 2, if the quantity t of first terminal devices corresponds to the 1^{st} numerical interval (that is, t ≤ A1), the network device uses the SRS resource corresponding to the 1^{st} numerical interval as the first SRS resource. In other words, the network device configures an AS-type SRS resource for the second terminal device based on Tx-switch=t2r4, that is, the network device configures an AS-type SRS resource for the second terminal device based on the SRS resources supported by the second terminal device with the maximum capability. In other words, RRC signaling (that is, resource configuration information) used to configure an AS-type SRS resource carries two SRS resource configurations, the SRS resource configurations correspond to different SRS resource identifiers (ResourceId), and a port quantity corresponding to each SRS resource is 2. In this case, a total port quantity corresponding to AS-type SRS resources configured by the network device for the second terminal device is 4, which meets the requirement in Table 1.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures an AS-type SRS resource for the second terminal device based on the SRS antenna switching mode in which Tx-switch=t2r2. In other words, RRC signaling used to configure an AS-type SRS resource carries one SRS resource configuration, that is, the RRC signaling carries one SRS-ResourceId, and a port quantity corresponding to the SRS resource is 2. Alternatively, the network device configures an AS-type SRS resource for the second terminal device based on the SRS antenna switching mode in which Tx-switch=tlr2. In other words, RRC signaling used to configure an AS-type SRS resource carries two SRS resource configurations, the SRS resource configurations correspond to different SRS-ResourceId, and a port quantity corresponding to each SRS resource is 1. In this case, a total port quantity corresponding to AS-type SRS resources configured by the network device for the second terminal device is 2, which meets the requirement in Table 1.

It may be understood that, if the network device configures an AS-type SRS resource for the second terminal device based on the SRS antenna switching mode in which Tx-switch=t2r2, it is equivalent to that, when the quantity of first terminal devices increases, the network device reduces, in a manner of first reducing a quantity of SRS resources, SRS resources configured for the second terminal device.

If the network device configures an AS-type SRS resource for the second terminal device based on the SRS antenna switching mode in which Tx-switch=tlr2, it is equivalent to that, when the quantity of first terminal devices increases, the network device reduces, in a manner of first reducing a port quantity corresponding to each SRS resource, SRS resources configured for the second terminal device.

If the quantity t of first terminal devices corresponds to the 3^{rd} numerical interval (that is, B1 < t ≤ C1), the network device uses the SRS resource corresponding to the 3^{rd} numerical interval as the first SRS resource. In other words, the network device configures an AS-type SRS resource for the second terminal device based on the SRS antenna switching mode in which Tx-switch=t1r1. In other words, RRC signaling used to configure an AS-type SRS resource carries one SRS resource configuration, that is, the RRC signaling carries one SRS-ResourceId, and a port quantity corresponding to the SRS resource is 1. In this case, a total port quantity corresponding to an AS-type SRS resource configured by the network device for the second terminal device is 1, which meets the requirement in Table 1.

If the quantity t of first terminal devices corresponds to the 4^{th} numerical interval (that is, t>C1), the network device uses the SRS resource corresponding to the 4^{th} numerical interval as the first SRS resource. In other words, the network device configures no AS-type SRS resource for the second terminal device.

Generally, a quantity of resources occupied by an SRS whose port quantity is 2 is larger than a quantity of resources occupied by an SRS whose port quantity is 1. However, a quantity of resources occupied by two SRSs whose port quantity is 1 is basically the same as a quantity of resources occupied by one SRS whose port quantity is 2 (it is assumed that factors such as performance and resource fragmentation are not considered). To prevent fragmentation or SRS measurement delay sending, the network device may only define an allocation policy in which a quantity of resources occupied by an SRS corresponding to the antenna switching mode t2r2 may be slightly larger than a quantity of resources occupied by an SRS corresponding to the antenna switching mode tlr2, or certainly it is only defined that a policy that a port quantity corresponding to tlr2 is the same as a port quantity corresponding to t2r2. In this case, (A1, B2] and (B2, B1] in Table 3 may be combined into one interval.

Therefore, for the second terminal device, the numerical interval (A1, B1] may be further divided into two consecutive numerical intervals (A1, B2] and (B2, B1], where A1 < B2 < B1. In this case, the first mapping relationship may be further shown in Table 3.

**Table 3**

| Quantity of first terminal devices | SRS resources corresponding to different intervals |
|---|---|
| [0, A1] | A configured AS-type SRS resource corresponds to t2r4 |
| (A1, B2] | A configured AS-type SRS resource corresponds to t2r2 |
| (B2, B1] | A configured AS-type SRS resource corresponds to tlr2 |
| (B1, C1] | A configured AS-type SRS resource corresponds to t1r1 |
| (C1, infinity) | No AS-type SRS resource is configured |

When an AS-type SRS resource configured by the network device for the second terminal device is shown in Table 3, the relationship between SRS resources corresponding to different numerical intervals may be described as follows: A port quantity corresponding to an SRS resource corresponding to a numerical interval #2 is greater than a port quantity corresponding to an SRS resource corresponding to a numerical interval #3, or a quantity of SRS resources corresponding to the numerical interval #2 is greater than a quantity of SRS resources corresponding to the numerical interval #3.

Example 2: If the network device determines, based on the first information sent by the second terminal device, that the SRS antenna switching mode supported by the second terminal device is t1r1-t1r2, and a maximum port quantity that corresponds to a single SRS resource and that can be supported by the terminal device is 2, the first mapping relationship may be shown in Table 4.

**Table 4**

| Quantity of first terminal devices | SRS resources corresponding to different intervals |
|---|---|
| [0, A1] | A configured AS-type SRS resource corresponds to tlr2 |
| (A1, B1] | A configured AS-type SRS resource corresponds to t1r1 |
| (B 1, infinity) | No AS-type SRS resource is configured |

A port quantity corresponding to an AS-type SRS resource corresponding to the 1^{st} numerical interval (that is, [0, A1]) shown in Table 4 is 2. In other words, a quantity of AS-type SRS resources corresponding to the 1^{st} numerical interval is a maximum quantity of AS-type SRS resources that can be supported by the second terminal device. It should be understood that, in Table 4, only an example in which the quantity of AS-type SRS resources corresponding to the 1^{st} numerical interval is equal to the maximum quantity of AS-type SRS resources that can be supported by the second terminal device is used. Alternatively, the quantity of AS-type SRS resources corresponding to the 1^{st} numerical interval may be less than the maximum quantity of AS-type SRS resources that can be supported by the second terminal device. For example, the port quantity corresponding to the AS-type SRS resource corresponding to the 1^{st} numerical interval is 1.

Based on the foregoing relationship between SRS resources corresponding to different numerical intervals, a port quantity corresponding to an AS-type SRS resource corresponding to the 2^{nd} numerical interval (that is, (A1, B1]) is less than the port quantity corresponding to the AS-type SRS resource corresponding to the 1^{st} numerical interval. In other words, the port quantity corresponding to the AS-type SRS resource corresponding to the 2^{nd} numerical interval may be 1 or 0. In Table 4, an example in which the port quantity corresponding to the AS-type SRS resource corresponding to the 2^{nd} numerical interval is 1 is used.

When the port quantity corresponding to the AS-type SRS resource corresponding to the 2^{nd} numerical interval is 1, a port quantity corresponding to an AS-type SRS resource corresponding to the 3^{rd} numerical interval (that is, (B 1, infinity)) may be 0 (that is, processing is performed in a manner in which the antenna switching mode is notSupported, and there is no AS-type resource).

As shown in Table 4, if the quantity t of first terminal devices corresponds to the 1^{st} numerical interval (that is, t ≤ A1), the network device uses the SRS resource corresponding to the 1^{st} numerical interval as the first SRS resource. In other words, the network device configures an AS-type SRS resource for the second terminal device based on the SRS antenna switching mode in which Tx-switch=tlr2, that is, the network device configures an AS-type SRS resource for the second terminal device based on the SRS resources supported by the second terminal device with the maximum capability. In other words, RRC signaling used to configure an AS-type SRS resource carries two SRS resource configurations, the SRS resource configurations correspond to different SRS-ResourceId, and a port quantity corresponding to each SRS resource is 1. In this case, a total port quantity corresponding to AS-type SRS resources configured by the network device for the second terminal device is 2, which meets the requirement in Table 1.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures an AS-type SRS resource for the second terminal device based on the SRS antenna switching mode in which Tx-switch=t1r1. In other words, RRC signaling used to configure an AS-type SRS resource carries one SRS resource configuration, that is, the RRC signaling carries one SRS-ResourceId, and a port quantity corresponding to the SRS resource is 1. In this case, a total port quantity corresponding to an AS-type SRS resource configured by the network device for the second terminal device is 1, which meets the requirement in Table 1.

If the quantity t of first terminal devices corresponds to the 3^{rd} numerical interval (that is, t > B 1), the network device uses the SRS resource corresponding to the 3^{rd} numerical interval as the first SRS resource. In other words, the network device configures no AS-type SRS resource for the second terminal device.

With reference to Example 1, Example 2, and Table 1, it can be learned that, in a process in which the network device configures an AS-type SRS resource for the second terminal device according to this embodiment of this application, if the quantity of first terminal devices is within the 1^{st} numerical interval, a port quantity corresponding to an AS-type SRS resource configured by the network device for the second terminal device is equal to a maximum AS-type SRS resource port quantity that can be supported by the second terminal device. If the quantity of first terminal devices is within the 2^{nd} numerical interval, port quantity corresponding to an AS-type SRS resource configured by the network device for the second terminal device = min (maximum AS-type SRS resource port quantity that can be supported by the second terminal device, two ports). If the quantity of first terminal devices is within the 3^{rd} numerical interval, port quantity corresponding to an AS-type SRS resource configured by the network device for the second terminal device = min (maximum AS-type SRS resource port quantity that can be supported by the second terminal device, one port). If the quantity of first terminal devices is within the 4^{th} numerical interval, the network device configures no AS-type SRS resource for the second terminal device.

It should be understood that, when the network device configures an AS-type SRS resource for the second terminal device according to this embodiment of this application, if the network device may further need to configure an SRS resource of another type (CB/nonCB/beam management) for the second terminal device, the network device may configure an SRS resource of another type other than an AS-type for the second terminal device according to an existing resource configuration method.

In another example, the first SRS resource may be a CB-type SRS resource, that is, the network device may configure the CB-type SRS resource for the second terminal device according to the method provided in this embodiment of this application. As described above, it can be learned from a possible value of maxNumberMIMO-LayersCB-PUSCH that a maximum uplink MIMO layer quantity that corresponds to a CB-type SRS and that may be supported by the second terminal device is 4 (a maximum port quantity corresponding to the CB-type SRS resource is 4), 2 (a maximum port quantity corresponding to the CB-type SRS resource is 2), or 1 (a maximum port quantity corresponding to the CB-type SRS resource is 1). Therefore, the plurality of numerical intervals and the SRS resources corresponding to the numerical intervals meet resource configuration policies shown in Table 5.

**Table 5**

| Quantity of first terminal devices | SRS resource configuration policies corresponding to different intervals |
|---|---|
| [0, A1] | A total port quantity corresponding to a configured CB-type SRS resource does not exceed 4 |
| (A1, B1] | A total port quantity corresponding to a configured CB-type SRS resource does not exceed 2 |
| (B 1, infinity) | A total port quantity corresponding to a configured CB-type SRS resource does not exceed 1 |

It should be understood that Table 5 is merely an example. With development of technologies, a maximum CB-type SRS resource port quantity that can be supported by the terminal device may increase to 6, 8, 10, or the like. In this case, the resource configuration policies corresponding to the different numerical intervals shown in Table 5 may change. For example, the resource configuration policy corresponding to [0, A1] may be that the total port quantity corresponding to the configured CB-type SRS resource does not exceed 6.

The following provides two examples to describe a method in which the network device configures a CB-type SRS resource for the second terminal device.

Example 1: If the network device determines, based on the first information sent by the second terminal device, that the maximum uplink MIMO layer quantity that corresponds to the CB-type SRS and that is supported by the second terminal device is 4, and a maximum port quantity that corresponds to a single SRS resource and that can be supported by the second terminal device is 4, the first mapping relationship may be shown in Table 6.

**Table 6**

| Quantity of first terminal devices | SRS resources corresponding to different intervals |
|---|---|
| [0, A1] | A configured CB-type SRS resource corresponds to four ports |
| (A1, B1] | A configured CB-type SRS resource corresponds to two ports |
| (B1, infinity) | A configured CB-type SRS resource corresponds to one port |

Herein, A1 < B 1 < C1, and A1, B 1, and C1 are all positive integers.

A port quantity corresponding to a CB-type SRS resource corresponding to the 1^{st} numerical interval (that is, [0, A1]) shown in Table 6 is 4. In other words, a quantity of CB-type SRS resources corresponding to the 1^{st} numerical interval is a maximum quantity of CB-type SRS resources that can be supported by the second terminal device. It should be understood that, in Table 6, only an example in which the quantity of CB-type SRS resources corresponding to the 1^{st} numerical interval is equal to the maximum quantity of CB-type SRS resources that can be supported by the second terminal device is used. Alternatively, the quantity of CB-type SRS resources corresponding to the 1^{st} numerical interval may be less than the maximum quantity of CB-type SRS resources that can be supported by the second terminal device. For example, the port quantity corresponding to the CB-type SRS resource corresponding to the 1^{st} numerical interval is 2.

Based on the foregoing relationship between SRS resources corresponding to different numerical intervals, a port quantity corresponding to a CB-type SRS resource corresponding to the 2^{nd} numerical interval (that is, (A1, B1]) is less than the port quantity corresponding to the CB-type SRS resource corresponding to the 1^{st} numerical interval. In other words, the port quantity corresponding to the CB-type SRS resource corresponding to the 2^{nd} numerical interval may be 2, 1, or 0. In Table 6, an example in which the port quantity corresponding to the CB-type SRS resource corresponding to the 2^{nd} numerical interval is 2 is used.

When the port quantity corresponding to the CB-type SRS resource corresponding to the 2^{nd} numerical interval is 2, a port quantity corresponding to a CB-type SRS resource corresponding to the 3^{rd} numerical interval (that is, (B 1, infinity)) may be 1 or 0. In Table 6, an example in which the port quantity corresponding to the CB-type SRS resource corresponding to the 3^{rd} numerical interval is 1 is used.

As shown in Table 6, if the quantity t of first terminal devices corresponds to the 1^{st} numerical interval (that is, t ≤ A1), the network device uses the SRS resource corresponding to the 1^{st} numerical interval as the first SRS resource. In other words, the network device configures a CB-type SRS resource whose port quantity is 4 for the second terminal device, that is, the network device configures a CB-type SRS resource for the second terminal device based on the SRS resources supported by the second terminal device with the maximum capability.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures a CB-type SRS resource whose port quantity is 2 for the second terminal device.

If the quantity t of first terminal devices corresponds to the 3^{rd} numerical interval (that is, B 1 < t), the network device uses the SRS resource corresponding to the 3^{rd} numerical interval as the first SRS resource. In other words, the network device configures a CB-type SRS resource whose port quantity is 1 for the second terminal device.

Example 2: If the network device determines, based on the first information sent by the second terminal device, that the maximum uplink MIMO layer quantity that corresponds to the CB-type SRS and that is supported by the second terminal device is 2, and a maximum port quantity that corresponds to a single SRS resource and that can be supported by the terminal device is 2, the first mapping relationship may be shown in Table 7.

**Table 7**

| Quantity of first terminal devices | SRS resources corresponding to different intervals |
|---|---|
| [0, A1] | A configured CB-type SRS resource corresponds to two ports |
| (A1, infinity] | A configured CB-type SRS resource corresponds to one port |

A port quantity corresponding to a CB-type SRS resource corresponding to the 1^{st} numerical interval (that is, [0, A1]) shown in Table 7 is 2. In other words, a quantity of CB-type SRS resources corresponding to the 1^{st} numerical interval is a maximum quantity of CB-type SRS resources that can be supported by the second terminal device. It should be understood that, in Table 7, only an example in which the quantity of CB-type SRS resources corresponding to the 1^{st} numerical interval is equal to the maximum quantity of CB-type SRS resources that can be supported by the second terminal device is used. Alternatively, the quantity of CB-type SRS resources corresponding to the 1^{st} numerical interval may be less than the maximum quantity of CB-type SRS resources that can be supported by the second terminal device. For example, the port quantity corresponding to the CB-type SRS resource corresponding to the 1^{st} numerical interval is 1.

Based on the foregoing relationship between SRS resources corresponding to different numerical intervals, a port quantity corresponding to a CB-type SRS resource corresponding to the 2^{nd} numerical interval (that is, (A1, infinity)) is less than the port quantity corresponding to the CB-type SRS resource corresponding to the 1^{st} numerical interval. In other words, the port quantity corresponding to the CB-type SRS resource corresponding to the 2^{nd} numerical interval may be 1 or 0. In Table 7, an example in which the port quantity corresponding to the CB-type SRS resource corresponding to the 2^{nd} numerical interval is 1 is used.

As shown in Table 7, if the quantity t of first terminal devices corresponds to the 1^{st} numerical interval (that is, t ≤ A1), the network device uses the SRS resource corresponding to the 1^{st} numerical interval as the first SRS resource. In other words, the network device configures a CB-type SRS resource whose port quantity is 2 for the second terminal device, that is, the network device configures a CB-type SRS resource for the second terminal device based on the SRS resources supported by the second terminal device with the maximum capability.

If the quantity t of first terminal devices corresponds to the 2^{nd} numerical interval (that is, A1 < t), the network device uses the SRS resource corresponding to the 2^{nd} numerical interval as the first SRS resource. In other words, the network device configures a CB-type SRS resource whose port quantity is 1 for the second terminal device.

With reference to Example 1, Example 2, and Table 5, it can be learned that, in a process in which the network device configures a CB-type SRS resource for the second terminal device according to this embodiment of this application, if the quantity of first terminal devices is within the 1^{st} numerical interval, a port quantity corresponding to a CB-type SRS resource configured by the network device for the second terminal device is equal to a maximum CB-type SRS resource port quantity that can be supported by the second terminal device. If the quantity of first terminal devices is within the 2^{nd} first numerical interval, port quantity corresponding to a CB-type SRS resource configured by the network device for the second terminal device = min (maximum CB-type SRS resource port quantity that can be supported by the second terminal device, two ports). If the quantity of first terminal devices is within the 3^{rd} first numerical interval, port quantity corresponding to a CB-type SRS resource configured by the network device for the second terminal device = min (maximum CB-type SRS resource port quantity that can be supported by the second terminal device, one port).

Optionally, the network device may alternatively configure no CB-type SRS resource for the second terminal device. In this case, the network device may configure a CB-type SRS resource for the second terminal device based on a second mapping relationship shown in Table 8.

**Table 8**

| Quantity of first terminal devices | SRS resources corresponding to different intervals |
|---|---|
| [0, A1] | A total port quantity corresponding to a configured CB-type SRS resource does not exceed 4 |
| (A1, B1] | A total port quantity corresponding to a configured CB-type SRS resource does not exceed 2 |
| (B1, C1] | A total port quantity corresponding to a configured CB-type SRS resource does not exceed 1 |
| (C1, infinity) | No CB-type SRS resource is configured |

It should be understood that, when the network device configures a CB-type SRS resource for the second terminal device according to this embodiment of this application, if the network device may further need to configure an SRS resource of another type (AS/nonCB/beam management) for the second terminal device, the network device may configure an SRS resource of another type other than a CB-type for the second terminal device according to an existing resource configuration method.

In still another example, the first SRS resource may be a nonCB-type SRS resource, that is, the network device may configure the nonCB-type SRS resource for the second terminal device according to the method provided in this embodiment of this application. As described above, it can be learned from a possible value of maxNumberMIMO-LayersNonCB-PUSCH that a maximum uplink MIMO layer quantity that corresponds to a nonCB-type SRS and that may be supported by the second terminal device is 4 (a maximum port quantity corresponding to the nonCB-type SRS resource is 4), 2 (a maximum port quantity corresponding to the nonCB-type SRS resource is 2), or 1 (a maximum port quantity corresponding to the nonCB-type SRS resource is 1). Therefore, the plurality of numerical intervals and the SRS resources corresponding to the numerical intervals meet resource configuration policies shown in Table 9.

**Table 9**

| Quantity of first terminal devices | SRS resource configuration policies corresponding to different intervals |
|---|---|
| [0, A1] | A total port quantity corresponding to a configured nonCB-type SRS resource does not exceed 4 |
| (A1, B1] | A total port quantity corresponding to a configured nonCB-type SRS resource does not exceed 2 |
| (B 1, infinity) | A total port quantity corresponding to a configured nonCB-type SRS resource does not exceed 1 |

The following provides two examples to describe a method in which the network device configures a nonCB-type SRS resource for the second terminal device.

Example 1: If the network device determines, based on the first information sent by the second terminal device, that the maximum uplink MIMO layer quantity that corresponds to the nonCB-type SRS and that is supported by the second terminal device is 4, and a maximum port quantity that corresponds to a single SRS resource and that can be supported by the second terminal device is 4, the first mapping relationship may be shown in Table 10.

**Table 10**

| Quantity of first terminal devices | SRS resources corresponding to different intervals |
|---|---|
| [0, A1] | A configured nonCB-type SRS resource corresponds to four ports |
| (A1, B1] | A configured nonCB-type SRS resource corresponds to two ports |
| (B1, infinity) | A configured nonCB-type SRS resource corresponds to one port |

Herein, A1 < B 1 < C1, and A1, B 1, and C1 are all positive integers.

A port quantity corresponding to a nonCB-type SRS resource corresponding to the 1^{st} numerical interval (that is, [0, A1]) shown in Table 10 is 4. In other words, a quantity of nonCB-type SRS resources corresponding to the 1^{st} numerical interval is a maximum quantity of nonCB-type SRS resources that can be supported by the second terminal device. It should be understood that, in Table 10, only an example in which the quantity of nonCB-type SRS resources corresponding to the 1^{st} numerical interval is equal to the maximum quantity of nonCB-type SRS resources that can be supported by the second terminal device is used. Alternatively, the quantity of nonCB-type SRS resources corresponding to the 1^{st} numerical interval may be less than the maximum quantity of nonCB-type SRS resources that can be supported by the second terminal device. For example, the port quantity corresponding to the nonCB-type SRS resource corresponding to the 1^{st} numerical interval is 2.

Based on the foregoing relationship between SRS resources corresponding to different numerical intervals, a port quantity corresponding to a nonCB-type SRS resource corresponding to the 2^{nd} numerical interval (that is, (A1, B 1]) is less than the port quantity corresponding to the nonCB-type SRS resource corresponding to the 1^{st} numerical interval. In other words, the port quantity corresponding to the nonCB-type SRS resource corresponding to the 2^{nd} numerical interval may be 2, 1, or 0. In Table 10, an example in which the port quantity corresponding to the nonCB-type SRS resource corresponding to the 2^{nd} numerical interval is 2 is used.

When the port quantity corresponding to the nonCB-type SRS resource corresponding to the 2^{nd} numerical interval is 2, a port quantity corresponding to a nonCB-type SRS resource corresponding to the 3^{rd} numerical interval (that is, (B 1, infinity)) may be 1 or 0. In Table 10, an example in which the port quantity corresponding to the nonCB-type SRS resource corresponding to the 3^{rd} numerical interval is 1 is used.

As shown in Table 10, if the quantity t of first terminal devices corresponds to the 1^{st} numerical interval (that is, t ≤ A1), the network device uses the SRS resource corresponding to the 1^{st} numerical interval as the first SRS resource. In other words, the network device configures a nonCB-type SRS resource whose port quantity is 4 for the second terminal device, that is, the network device configures a nonCB-type SRS resource for the second terminal device based on the SRS resources supported by the second terminal device with the maximum capability.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures a nonCB-type SRS resource whose port quantity is 2 for the second terminal device.

If the quantity t of first terminal devices corresponds to the 3^{rd} numerical interval (that is, B 1 < t), the network device uses the SRS resource corresponding to the 3^{rd} numerical interval as the first SRS resource. In other words, the network device configures a nonCB-type SRS resource whose port quantity is 1 for the second terminal device.

Example 2: If the network device determines, based on the first information sent by the second terminal device, that the maximum uplink MIMO layer quantity that corresponds to the nonCB-type SRS and that is supported by the second terminal device is 2, and a maximum port quantity that corresponds to a single SRS resource and that can be supported by the terminal device is 2, the first mapping relationship may be shown in Table 11.

**Table 11**

| Quantity of first terminal devices | SRS resources corresponding to different intervals |
|---|---|
| [0, A1] | A configured nonCB-type SRS resource corresponds to two ports |
| (A1, infinity] | A configured nonCB-type SRS resource corresponds to one port |

A port quantity corresponding to a nonCB-type SRS resource corresponding to the 1^{st} numerical interval (that is, [0, A1]) shown in Table 11 is 2. In other words, a quantity of nonCB-type SRS resources corresponding to the 1^{st} numerical interval is a maximum quantity of nonCB-type SRS resources that can be supported by the second terminal device. It should be understood that, in Table 11, only an example in which the quantity of nonCB-type SRS resources corresponding to the 1^{st} numerical interval is equal to the maximum quantity of nonCB-type SRS resources that can be supported by the second terminal device is used. Alternatively, the quantity of nonCB-type SRS resources corresponding to the 1^{st} numerical interval may be less than the maximum quantity of nonCB-type SRS resources that can be supported by the second terminal device. For example, the port quantity corresponding to the nonCB-type SRS resource corresponding to the 1^{st} numerical interval is 1.

Based on the foregoing relationship between SRS resources corresponding to different numerical intervals, a port quantity corresponding to a nonCB-type SRS resource corresponding to the 2^{nd} numerical interval (that is, (A1, infinity)) is less than the port quantity corresponding to the nonCB-type SRS resource corresponding to the 1^{st} numerical interval. In other words, the port quantity corresponding to the nonCB-type SRS resource corresponding to the 2^{nd} numerical interval may be 1 or 0. In Table 11, an example in which the port quantity corresponding to the nonCB-type SRS resource corresponding to the 2^{nd} numerical interval is 1 is used.

As shown in Table 11, if the quantity t of first terminal devices corresponds to the 1^{st} numerical interval (that is, t ≤ A1), the network device configures a nonCB-type SRS resource whose port quantity is 2 for the second terminal device, that is, the network device configures a nonCB-type SRS resource for the second terminal device based on the SRS resources supported by the second terminal device with the maximum capability.

If the quantity t of first terminal devices corresponds to the 2^{nd} numerical interval (that is, A1 < t), the network device configures a nonCB-type SRS resource whose port quantity is 1 for the second terminal device.

With reference to Example 1, Example 2, and Table 9, it can be learned that, in a process in which the network device configures a nonCB-type SRS resource for the second terminal device according to this embodiment of this application, if the quantity of first terminal devices is within the 1^{st} numerical interval, a port quantity corresponding to a nonCB-type SRS resource configured by the network device for the second terminal device is equal to a maximum nonCB-type SRS resource port quantity that can be supported by the second terminal device. If the quantity of first terminal devices is within the 2^{nd} numerical interval, port quantity corresponding to a nonCB-type SRS resource configured by the network device for the second terminal device = min (maximum nonCB-type SRS resource port quantity that can be supported by the second terminal device, two ports). If the quantity of first terminal devices is within the 3^{rd} numerical interval, port quantity corresponding to a nonCB-type SRS resource configured by the network device for the second terminal device = min (maximum nonCB-type SRS resource port quantity that can be supported by the second terminal device, one port).

Optionally, the network device may alternatively configure no nonCB-type SRS resource for the second terminal device. In this case, the network device may configure a nonCB-type SRS resource for the second terminal device based on a first mapping relationship shown in Table 12.

**Table 12**

| Quantity of first terminal devices | SRS resources corresponding to different intervals |
|---|---|
| [0, A1] | A total port quantity corresponding to a configured nonCB-type SRS resource does not exceed 4 |
| (A1, B1] | A total port quantity corresponding to a configured nonCB-type SRS resource does not exceed 2 |
| (B1, C1] | A total port quantity corresponding to a configured nonCB-type SRS resource does not exceed 1 |
| (C1, infinity) | No nonCB-type SRS resource is configured |

It should be understood that, when the network device configures a nonCB-type SRS resource for the second terminal device according to this embodiment of this application, if the network device may further need to configure an SRS resource of another type (AS/CB/beam management) for the second terminal device, the network device may configure an SRS resource of another type other than a nonCB-type for the second terminal device according to an existing resource configuration method.

In still another example, the first SRS resource may be a beam-management-type SRS resource, that is, the network device may configure the beam-management-type SRS resource for the second terminal device according to the method provided in this embodiment of this application. As described above, it can be learned from a possible value of maxNumberSRS-Ports-PerResource that a maximum port quantity that corresponds to a single SRS resource and that may be supported by the second terminal device is 4, 2, or 1. Therefore, the plurality of numerical intervals and the SRS resources corresponding to the numerical intervals meet resource configuration policies shown in Table 13.

**Table 13**

| Quantity of first terminal devices | SRS resource configuration policies corresponding to different intervals |
|---|---|
| [0, A1] | A total port quantity corresponding to a configured beam-management-type SRS resource does not exceed 4 |
| (A1, B1] | A total port quantity corresponding to a configured beam-management-type SRS resource does not exceed 2 |
| (B1, infinity) | A total port quantity corresponding to a configured beam-management-type SRS resource does not exceed 1 |

The following provides two examples to describe a method in which the network device configures a beam-management-type SRS resource for the second terminal device.

Example 1: If the network device determines, based on the first information sent by the second terminal device, that the maximum port quantity that corresponds to the single SRS resource and that can be supported by the second terminal device is 4, the first mapping relationship may be shown in Table 14.

**Table 14**

| Quantity of first terminal devices | SRS resources corresponding to different intervals |
|---|---|
| [0, A1] | A configured beam-management-type SRS resource corresponds to four ports |
| (A1, B1] | A configured beam-management-type SRS resource corresponds to two ports |
| (B1, infinity) | A configured beam-management-type SRS resource corresponds to one port |

Herein, A1 < B 1 < C1, and A1, B 1, and C1 are all positive integers.

A port quantity corresponding to a beam-management-type SRS resource corresponding to the 1^{st} numerical interval (that is, [0, A1]) shown in Table 14 is 4. In other words, a quantity of beam-management-type SRS resources corresponding to the 1^{st} numerical interval is a maximum quantity of beam-management-type SRS resources that can be supported by the second terminal device. It should be understood that, in Table 14, only an example in which the quantity of beam-management-type SRS resources corresponding to the 1^{st} numerical interval is equal to the maximum quantity of beam-management-type SRS resources that can be supported by the second terminal device is used. Alternatively, the quantity of beam-management-type SRS resources corresponding to the 1^{st} numerical interval may be less than the maximum quantity of beam-management-type SRS resources that can be supported by the second terminal device. For example, the port quantity corresponding to the beam-management-type SRS resource corresponding to the 1^{st} numerical interval is 2.

Based on the foregoing relationship between SRS resources corresponding to different numerical intervals, a port quantity corresponding to a beam-management-type SRS resource corresponding to the 2^{nd} numerical interval (that is, (A1, B1]) is less than the port quantity corresponding to the beam-management-type SRS resource corresponding to the 1^{st} numerical interval. In other words, the port quantity corresponding to the beam-management-type SRS resource corresponding to the 2^{nd} numerical interval may be 2, 1, or 0. In Table 14, an example in which the port quantity corresponding to the beam-management-type SRS resource corresponding to the 2^{nd} numerical interval is 2 is used.

When the port quantity corresponding to the beam-management-type SRS resource corresponding to the 2^{nd} numerical interval is 2, a port quantity corresponding to a beam-management-type SRS resource corresponding to the 3^{rd} numerical interval (that is, (B1, infinity)) may be 1 or 0. In Table 14, an example in which the port quantity corresponding to the beam-management-type SRS resource corresponding to the 3^{rd} numerical interval is 1 is used.

As shown in Table 14, if the quantity t of first terminal devices corresponds to the 1^{st} numerical interval (that is, t ≤ A1), the network device uses the SRS resource corresponding to the 1^{st} numerical interval as the first SRS resource. In other words, the network device configures a beam-management-type SRS resource whose port quantity is 4 for the second terminal device, that is, the network device configures a beam-management-type SRS resource for the second terminal device based on the SRS resources supported by the second terminal device with the maximum capability.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures a beam-management-type SRS resource whose port quantity is 2 for the second terminal device.

If the quantity t of first terminal devices corresponds to the 3^{rd} numerical interval (that is, B 1 < t), the network device uses the SRS resource corresponding to the 3^{rd} numerical interval as the first SRS resource. In other words, the network device configures a beam-management-type SRS resource whose port quantity is 1 for the second terminal device.

Example 2: If the network device determines, based on the first information sent by the second terminal device, that the maximum port quantity that corresponds to the single SRS resource and that can be supported by the second terminal device is 2, the first mapping relationship may be shown in Table 15.

**Table 15**

| Quantity of first terminal devices | SRS resources corresponding to different intervals |
|---|---|
| [0, A1] | A configured beam-management-type SRS resource corresponds to two ports |
| (A1, infinity] | A configured beam-management-type SRS resource corresponds to one port |

A port quantity corresponding to a beam-management-type SRS resource corresponding to the 1^{st} numerical interval (that is, [0, A1]) shown in Table 15 is 2. In other words, a quantity of beam-management-type SRS resources corresponding to the 1^{st} numerical interval is a maximum quantity of beam-management-type SRS resources that can be supported by the second terminal device. It should be understood that, in Table 15, only an example in which the quantity of beam-management-type SRS resources corresponding to the 1^{st} numerical interval is equal to the maximum quantity of beam-management-type SRS resources that can be supported by the second terminal device is used. Alternatively, the quantity of beam-management-type SRS resources corresponding to the 1^{st} numerical interval may be less than the maximum quantity of beam-management-type SRS resources that can be supported by the second terminal device. For example, the port quantity corresponding to the beam-management-type SRS resource corresponding to the 1^{st} numerical interval is 1.

Based on the foregoing relationship between SRS resources corresponding to different numerical intervals, a port quantity corresponding to a beam-management-type SRS resource corresponding to the 2^{nd} numerical interval (that is, (A1, infinity)) is less than the port quantity corresponding to the beam-management-type SRS resource corresponding to the 1^{st} numerical interval. In other words, the port quantity corresponding to the beam-management-type SRS resource corresponding to the 2^{nd} numerical interval may be 1 or 0. In Table 15, an example in which the port quantity corresponding to the beam-management-type SRS resource corresponding to the 2^{nd} numerical interval is 1 is used.

As shown in Table 15, if the quantity t of first terminal devices corresponds to the 1^{st} numerical interval (that is, t ≤ A1), the network device uses the SRS resource corresponding to the 1^{st} numerical interval as the first SRS resource. In other words, the network device configures a beam-management-type SRS resource whose port quantity is 2 for the second terminal device, that is, the network device configures a beam-management-type SRS resource for the second terminal device based on the SRS resources supported by the second terminal device with the maximum capability.

If the quantity t of first terminal devices corresponds to the 2^{nd} numerical interval (that is, A1 < t), the network device uses the SRS resource corresponding to the 2^{nd} numerical interval as the first SRS resource. In other words, the network device configures a beam-management-type SRS resource whose port quantity is 1 for the second terminal device.

With reference to Example 1, Example 2, and Table 13, it can be learned that, in a process in which the network device configures a beam-management-type SRS resource for the second terminal device according to this embodiment of this application, if the quantity of first terminal devices is within the 1^{st} numerical interval, a port quantity corresponding to a beam-management-type SRS resource configured by the network device for the second terminal device is equal to a maximum beam-management-type SRS resource port quantity that can be supported by the second terminal device. If the quantity of first terminal devices is within the 2^{nd} numerical interval, port quantity corresponding to a beam-management-type SRS resource configured by the network device for the second terminal device = min (maximum beam-management-type SRS resource port quantity that can be supported by the second terminal device, two ports). If the quantity of first terminal devices is within the 3^{rd} numerical interval, port quantity corresponding to a beam-management-type SRS resource configured by the network device for the second terminal device = min (maximum beam-management-type SRS resource port quantity that can be supported by the second terminal device, one port).

Optionally, the network device may alternatively configure no beam-management-type SRS resource for the second terminal device. In this case, the network device may configure a beam-management-type SRS resource for the second terminal device based on a first mapping relationship shown in Table 16.

**Table 16**

| Quantity of first terminal devices | SRS resources corresponding to different intervals |
|---|---|
| [0, A1] | A total port quantity corresponding to a configured beam-management-type SRS resource does not exceed 4 |
| (A1, B1] | A total port quantity corresponding to a configured beam-management-type SRS resource does not exceed 2 |
| (B1, C1] | A total port quantity corresponding to a configured beam-management-type SRS resource does not exceed 1 |
| (C1, infinity) | No beam-management-type SRS resource is configured |

It should be understood that, when the network device configures a beam-management-type SRS resource for the second terminal device according to this embodiment of this application, if the network device may further need to configure an SRS resource of another type (AS/CB/nonCB) for the second terminal device, the network device may configure an SRS resource of another type other than a beam-management-type for the second terminal device according to an existing resource configuration method.

In still another example, the first SRS resource may include SRS resources of a plurality of types, that is, the network device may configure the SRS resources of the plurality of types for the second terminal device according to the method provided in this embodiment of this application.

When the first SRS resource includes the SRS resources of the plurality of types, the relationship between SRS resources corresponding to different numerical intervals may be described as follows: A total port quantity corresponding to SRS resources of a plurality of types corresponding to a numerical interval #2 is greater than a total port quantity corresponding to SRS resources of a plurality of types corresponding to a numerical interval #3, and a port quantity corresponding to a first-type SRS resource corresponding to the numerical interval #2 is greater than a port quantity corresponding to a first-type SRS resource corresponding to the numerical interval #3. The first-type SRS resource is an SRS resource of at least one type in the SRS resources of the plurality of types. In this case, a port quantity corresponding to a second-type SRS resource corresponding to the numerical interval #2 is greater than or equal to a port quantity corresponding to a second-type SRS resource corresponding to the numerical interval #3. The second-type SRS resource is an SRS resource other than the first-type SRS resource in the SRS resources of the plurality of types.

An example in which the network device configures both an AS-type SRS resource and a CB-type SRS resource for the second terminal device is used below to describe a case in which the network device configures SRS resources of a plurality of types for the second terminal device according to the method in this embodiment of this application.

Specifically, in a process in which the network device configures both the AS-type SRS resource and the CB-type SRS resource for the second terminal device, SRS resource configuration policies respectively corresponding to the plurality of numerical intervals may be determined according to the following rule: A port quantity corresponding to AS-type SRS resources configured for the second terminal device is first reduced in order from the 1^{st} numerical interval to the k^{th} numerical interval, then a port quantity corresponding to CB-type SRS resources configured for the second terminal device is reduced in order from the (k+1)^{th} numerical interval to the N^{th} numerical interval, and the port quantity corresponding to the AS-type SRS resources configured by the network device for the second terminal device according to a resource configuration policy corresponding to the k^{th} numerical interval is 0 (that is, processing is performed based on an antenna switching mode notSupported, and there is no AS-type resource), where 1 < k < N, and k is a positive integer. The resource configuration policy that is determined according to the foregoing rule and that corresponds to each numerical interval is shown in Table 17.

**Table 17**

| Quantity of first terminal devices | SRS resource adjustment policies corresponding to different intervals |
|---|---|
| [0, A1] | A total port quantity corresponding to a configured AS-type SRS resource does not exceed 4 |
| | A total port quantity corresponding to a configured CB-type SRS resource does not exceed 4 |
| (A1, B1] | A total port quantity corresponding to a configured AS-type SRS resource does not exceed 2 |
| | A total port quantity corresponding to a configured CB-type SRS resource does not exceed 4 |
| (B1, C1] | A total port quantity corresponding to a configured AS-type SRS resource does not exceed 1 |
| | A total port quantity corresponding to a configured CB-type SRS resource does not exceed 4 |
| (C1, D1] | No AS-type SRS resource is configured |
| | A total port quantity corresponding to a configured CB-type SRS resource does not exceed 4 |
| (D1, E1] | No AS-type SRS resource is configured |
| | A total port quantity corresponding to a configured CB-type SRS resource does not exceed 2 |
| (E1, infinity] | No AS-type SRS resource is configured |
| | A total port quantity corresponding to a configured CB-type SRS resource does not exceed 1 |

Optionally, resource configuration policies respectively corresponding to the plurality of numerical intervals may alternatively be determined according to the following rule: A port quantity corresponding to CB-type SRS resources configured for the second terminal device is first reduced in order from the 1^{st} numerical interval to the k'^{th} numerical interval, then a port quantity corresponding to AS-type SRS resources configured for the second terminal device is reduced in order from the (k'+1)^{th} numerical interval to the N^{th} numerical interval, and the port quantity corresponding to the CB-type SRS resources configured by the network device for the second terminal device according to a resource configuration policy corresponding to the k'^{th} first numerical interval is 0 (that is, processing is performed based on an antenna switching mode notSupported, and there is no AS-type resource), where 1 < k' < N, and k' is a positive integer. The resource configuration policy that is determined according to the foregoing rule and that corresponds to each numerical interval is shown in Table 18.

**Table 18**

| Quantity of first terminal devices | SRS resource adjustment policies corresponding to different intervals |
|---|---|
| [0, A1] | A total port quantity corresponding to a configured AS-type SRS resource does not exceed 4 |
| | A total port quantity corresponding to a configured CB-type SRS resource does not exceed 4 |
| (A1, B1] | A total port quantity corresponding to a configured AS-type SRS resource does not exceed 4 |
| | A total port quantity corresponding to a configured CB-type SRS resource does not exceed 2 |
| (B1, C1] | A total port quantity corresponding to a configured AS-type SRS resource does not exceed 4 |
| | A total port quantity corresponding to a configured CB-type SRS resource does not exceed 1 |
| (C1, D1] | A total port quantity corresponding to a configured AS-type SRS resource does not exceed 4 |
| | No CB-type SRS resource is configured |
| (D1, E1] | A total port quantity corresponding to a configured AS-type SRS resource exceeds 2 |
| | No CB-type SRS resource is configured |
| (E1, infinity] | A total port quantity corresponding to a configured AS-type SRS resource exceeds 1 |
| | A CB-type SRS resource is configured |

Optionally, in a process in which the network device configures an AS-type SRS resource and a CB-type SRS resource for the second terminal device, as the quantity of first terminal devices increases, the network device may alternatively reduce port quantities corresponding to the AS-type SRS resource and the CB-type SRS resource that are configured for the second terminal device. For example, AS-type and CB-type resource configuration policies configured by the network device for the second terminal device may be shown in Table 19.

**Table 19**

| Quantity of first terminal devices | SRS resource adjustment policies corresponding to different intervals |
|---|---|
| [0, A1] | A total port quantity corresponding to a configured AS-type SRS resource does not exceed 4 |
| | A total port quantity corresponding to a configured CB-type SRS resource does not exceed 4 |
| (A1, B1] | A total port quantity corresponding to a configured AS-type SRS resource does not exceed 2 |
| | A total port quantity corresponding to a configured CB-type SRS resource does not exceed 4 |
| (B1, C1] | A total port quantity corresponding to a configured AS-type SRS resource does not exceed 1 |
| | A total port quantity corresponding to a configured CB-type SRS resource does not exceed 2 |
| (C1, infinity) | No AS-type SRS resource is configured, and a total port quantity corresponding to a configured CB-type SRS resource does not exceed 1; or one AS-type SRS resource and one CB-type SRS resource are configured |

The following provides one example to describe a method in which the network device configures both an AS-type SRS resource and a CB-type SRS resource for the second terminal device.

If the network device determines, based on the first information sent by the second terminal device, that the SRS antenna switching mode that can be supported by the second terminal device is t1r1-t1r2-t2r2-t2r4, and a maximum uplink MIMO layer quantity that corresponds to a CB-type SRS and that can be supported is 4, the first mapping relationship may be shown in Table 20.

**Table 20**

| Quantity of first terminal devices | SRS resources corresponding to different intervals |
|---|---|
| [0, A1] | A configured AS-type SRS resource corresponds to t2r4 |
| | A configured CB-type SRS resource corresponds to four ports |
| (A1, B1] | A configured AS-type SRS resource corresponds to t2r2/tlr2 |
| | A configured CB-type SRS resource corresponds to four ports |
| (B1, C1] | A configured AS-type SRS resource corresponds to t1r1 |
| | A configured CB-type SRS resource corresponds to two ports |
| (C1, infinity) | No AS-type SRS resource is configured, and a configured CB-type SRS resource corresponds to one port; or one AS-type SRS resource and one CB-type SRS resource are configured |

Herein, A1 < B 1 < C1, and A1, B 1, and C1 are all positive integers.

Port quantities corresponding to an AS-type SRS resource and a CB-type SRS resource corresponding to the 1^{st} numerical interval (that is, [0, A1]) shown in Table 20 both are 4. In other words, a quantity of SRS resources corresponding to the 1^{st} numerical interval is a maximum quantity of SRS resources that can be supported by the second terminal device. It should be understood that, in Table 20, only an example in which the quantity of SRS resources corresponding to the 1^{st} numerical interval is equal to the maximum quantity of SRS resources that can be supported by the second terminal device is used. Alternatively, the quantity of SRS resources corresponding to the 1^{st} numerical interval may be less than the maximum quantity of SRS resources that can be supported by the second terminal device. For example, the port quantities corresponding to the AS-type SRS resource and the CB-type SRS resource corresponding to the 1^{st} numerical interval both are 2.

Based on the foregoing relationship between SRS resources corresponding to different numerical intervals, a total port quantity corresponding to SRS resources of two types corresponding to the 2^{nd} numerical interval (that is, (A1, B1]) is less than the total port quantity corresponding to the SRS resources of the two types corresponding to the 1^{st} numerical interval. In other words, the total port quantity corresponding to the SRS resources of the two types corresponding to the 2^{nd} numerical interval may be 6, 5, 4, 3, 2, 1, or 0. In Table 20, an example in which the total port quantity corresponding to the SRS resources of the two types corresponding to the 2^{nd} numerical interval is 6 is used.

When the total port quantity corresponding to the SRS resources of the two types corresponding to the 2^{nd} numerical interval is 6, a total port quantity corresponding to SRS resources of two types corresponding to the 3^{rd} numerical interval (that is, (B1, C1]) may be 5, 4, 3, 2, 1, or 0. In Table 20, an example in which the total port quantity corresponding to the SRS resources of the two types corresponding to the 3^{rd} numerical interval is 3 is used.

When the total port quantity corresponding to the SRS resources of the two types corresponding to the 3^{rd} numerical interval is 3, a total port quantity corresponding to SRS resources of two types corresponding to the 4^{th} numerical interval (that is, (C1, infinity)) may be 2, 1, or 0. In Table 20, an example in which the total port quantity corresponding to the SRS resources of the two types corresponding to the 4^{th} numerical interval is 1 is used.

As shown in Table 20, if the quantity t of first terminal devices corresponds to the 1^{st} numerical interval (that is, t ≤ A1), the network device uses the SRS resource corresponding to the 1^{st} numerical interval as the first SRS resource. In other words, the network device configures an AS-type SRS resource for the second terminal device and a CB-type SRS resource whose port quantity is 4 for the second terminal device based on Tx-switch=t2r4, that is, the network device configures an AS-type SRS resource and a CB-type SRS resource for the second terminal device based on the SRS resources supported by the second terminal device with the maximum capability.

If the quantity t of first terminal devices corresponds to the 2^{nd} numerical interval (that is, A1 < t ≤ B1), the network device uses the SRS resource corresponding to the 2^{nd} numerical interval as the first SRS resource. In other words, the network device configures an AS-type SRS resource for the second terminal device and a CB-type SRS resource whose port quantity is 4 for the second terminal device based on Tx-switch=t2r2/tlr2.

If the quantity t of first terminal devices corresponds to the 3^{rd} numerical interval (that is, B1 < t ≤ C1), the network device uses the SRS resource corresponding to the 3^{rd} numerical interval as the first SRS resource. In other words, the network device configures an AS-type SRS resource for the second terminal device and a CB-type SRS resource whose port quantity is 2 for the second terminal device based on Tx-switch=t1r1.

If the quantity t of first terminal devices corresponds to the 4^{th} numerical interval (that is, C1 < t), the network device uses the SRS resource corresponding to the 2^{nd} numerical interval as the first SRS resource. In other words, the network device does not configure an AS-type SRS resource for the second terminal device but configures a CB-type SRS resource whose port quantity is 1 for the second terminal device. Alternatively, the network device configures one AS-type SRS resource and one CB-type SRS resource for the second terminal device, a port quantity corresponding to the two SRS resources is 1, and the one SRS resource corresponds to same SRS-ResourceId. In other words, it may be considered that the AS-type SRS resource and the CB-type SRS resource reuse one resource.

Similarly, if the second terminal device supports SRS resources of all types, as the quantity of first terminal devices increases, a port quantity corresponding to an SRS resource configured by the network device for the second terminal device decreases. It may be understood that an SRS resource configured by the network device for the second terminal device herein is SRS resources of all types configured by the network device for the second terminal device. Correspondingly, port quantity corresponding to the SRS resources configured by the network device for the second terminal device = port quantity corresponding to an AS-type SRS resource configured by the network device for the second terminal device + port quantity corresponding to a CB-type SRS resource configured by the network device for the second terminal device + port quantity corresponding to a nonCB-type SRS resource configured by the network device for the second terminal device + port quantity corresponding to a beam-management-type SRS resource configured by the network device for the second terminal device. For example, port quantity corresponding to AS-type SRS resources = port quantity corresponding to an AS-type SRS resource 1 + port quantity corresponding to an AS-type SRS resource 2 + ...; port quantity corresponding to CB-type SRS resources = port quantity corresponding to a CB-type resource 1 + port quantity corresponding to a CB-type SRS resource 2 + ...; port quantity corresponding to nonCB-type SRS resources = port quantity corresponding to a nonCB-type resource 1 + port quantity corresponding to a nonCB-type SRS resource 2 + ...; and port quantity corresponding to beam-management-type SRS resources = port quantity corresponding to a beam-management-type resource 1 + port quantity corresponding to a beam-management-type SRS resource 2 + ...

Optionally, if a quantity of numerical intervals is 2, and a port quantity corresponding to an SRS resource that may be configured by the network device for the second terminal device based on the 1^{st} numerical interval is equal to the maximum SRS resource port quantity that can be supported by the second terminal device, the resource configuration method provided in this embodiment of this application may be further described as follows: When the quantity of first terminal devices does not exceed a preset threshold, the port quantity corresponding to the SRS resource configured by the network device for the second terminal device is equal to the maximum SRS resource port quantity that can be supported by the second terminal device. When the quantity of first terminal devices is greater than the preset threshold, the port quantity corresponding to the SRS resource configured by the network device for the second terminal device is less than the maximum SRS resource port quantity that can be supported by the second terminal device.

For example, the two consecutive numerical intervals may include [0, A1] and (A1, infinity). In this case, when the quantity of first terminal devices does not exceed A1, the port quantity corresponding to the SRS resource configured by the network device for the second terminal device is equal to the maximum SRS resource port quantity that can be supported by the second terminal device. When the quantity of first terminal devices is greater than A1, the port quantity corresponding to the SRS resource configured by the network device for the second terminal device is less than the maximum SRS resource port quantity that can be supported by the second terminal device.

Optionally, the resource configuration method provided in this embodiment of this application may be alternatively described as follows: When the quantity of first terminal devices does not exceed a preset threshold, the port quantity corresponding to the SRS resource configured by the network device for the second terminal device is equal to the maximum SRS resource port quantity that can be supported by the second terminal device. When the quantity of first terminal devices exceeds the preset threshold, the port quantity corresponding to the SRS resource configured by the network device for the second terminal device is less than the maximum SRS resource port quantity that can be supported by the second terminal device. When the quantity of first terminal devices exceeds the preset threshold, the network device may further configure an SRS resource for the second terminal device based on a numerical interval corresponding to the quantity of first terminal devices and the first mapping relationship.

For example, the preset threshold may be A1, and consecutive numerical intervals may include (A1, B1], (B1, C1], and (C1, infinity). In this case, when the quantity of first terminal devices does not exceed A1, the port quantity corresponding to the SRS resource configured by the network device for the second terminal device is equal to the maximum SRS resource port quantity that can be supported by the second terminal device. When the quantity of first terminal devices is greater than A1, the port quantity corresponding to the SRS resource configured by the network device for the second terminal device is less than the maximum SRS resource port quantity that can be supported by the second terminal device.

Further, when the quantity of first terminal devices is greater than A1, if the quantity of first terminal devices is within the 1^{st} numerical interval ((A1, B1]), the network device may use an SRS resource corresponding to the 1^{st} numerical interval as the first SRS resource. If the quantity of first terminal devices is within the 2^{nd} numerical interval ((B1, C1]), the network device may use an SRS resource corresponding to the 2^{nd} numerical interval as the first SRS resource. If the quantity of first terminal devices is within the 3^{rd} numerical interval, the network device may use an SRS resource corresponding to the 3^{rd} numerical interval as the first SRS resource.

As described above, a critical value of at least one of the plurality of numerical intervals is determined based on the quantity of first terminal devices. Therefore, it may be understood that, as the quantity of first terminal devices changes, the network device may update the critical value of the at least one of the plurality of numerical intervals. Specifically, if at least one of the following conditions is met: a total port quantity corresponding to SRS resources configured by the network device for the first terminal devices is greater than or equal to a first preset threshold, a quantity of terminal devices that newly access the first cell is greater than or equal to a second preset threshold, the total port quantity corresponding to the SRS resources configured by the network device for the first terminal devices is less than or equal to a third preset threshold, and a quantity of terminal devices that exit from a network in the first cell is greater than or equal to a fourth preset threshold, the network device updates the critical value of the at least one of the plurality of intervals based on the quantity of first terminal devices.

In a process of updating the critical value of the at least one of the plurality of numerical intervals, the network device may increase or decrease a largest value in the numerical interval, or may increase or decrease a smallest value in the numerical interval. For example, numerical intervals obtained before updating may be denoted as [0, A1], (A1, B1], (B1, C1], and (C1, infinity), and numerical intervals obtained after updating may be denoted as [0, A2], (A2, B2], (B2, C2], and (C2, infinity). In this case, a relationship between the numerical interval obtained before updating and the numerical interval obtained after updating may be: A2 < A1 (that is, a largest value in the 1^{st} numerical interval is reduced), B2 = B 1, and C2 = C1; or A2 = A1, B2 < B 1 (that is, a largest value in the 2^{nd} numerical interval is reduced), and C2 = C1; or A2 = A1, B2 = B 1, and C2 < C1 (that is, a largest value in the 3^{rd} numerical interval is reduced), or A2 < A1, B2 < B 1, and C2 = C1; or A2 < A1, B2 < B 1, and C2 < C1, or the like.

Optionally, when the network device updates the critical value of the at least one of the plurality of numerical intervals, the network device may further reconfigure an SRS resource for at least one of the first terminal devices based on a second mapping relationship. The second mapping relationship indicates an updated mapping relationship between a plurality of numerical intervals and a plurality of SRS resources. Specifically, the following method 500 describes a resource reconfiguration method provided in this embodiment of this application.

S240: The network device sends resource configuration information. Correspondingly, in S240, the second device receives the resource configuration information.

The resource configuration information indicates an SRS resource configured by the network device for the second terminal device. Correspondingly, after receiving the resource configuration information, the second terminal device sends an SRS on the SRS resource indicated by the resource configuration information.

In this embodiment of this application, the network device configures, based on a quantity of terminal devices that have accessed a current cell, an SRS resource for a terminal device that currently newly accesses the cell. In addition, when the quantity of terminal devices that have accessed the current cell is relatively large, the network device may configure, for the terminal device, a smaller quantity of SRS resources than a maximum quantity of SRS resources that can be supported by the terminal device. Compared with an existing solution in which the network device always allocates the maximum quantity of SRS resources that can be supported by the terminal device to the terminal device that currently newly accesses the cell, in the method in this embodiment of this application, when SRS resources that can be used by the current cell are limited, the network device can configure SRS resources for more terminal devices. This can increase a cell throughput.

Optionally, the method 200 may further include S250: The network device determines whether the second terminal device is a first-type terminal device.

The first-type terminal device includes a terminal device whose amount of transmitted data is greater than a preset threshold, a terminal device that can be configured, by using a quality of service parameter indicator of a fifth generation mobile communications system (5th generation quality of service indicator, 5QI), to transmit a first service, or a terminal device that transmits a first service and that is identified by using a transaction identifier (transaction ID) or a subscribe profile identifier (subscribe profile ID). The first service may be a heavy-traffic service, a high-priority service, a service with a high latency requirement, or the like.

The terminal device whose amount of transmitted data is greater than the preset threshold may also be referred to as a large-packet terminal device. The network device may receive a buffer status report (buffer status report, B SR) sent by the second terminal device, and determine, based on whether an amount of data that is currently to be sent by the second terminal device and that is indicated by the BSR exceeds the preset threshold, whether the second terminal device is a large-packet terminal device.

If the network device determines that the second terminal device is not the first-type terminal device, the network device configures an SRS resource for the second terminal device according to the resource configuration method described in S230, that is, the network device uses an SRS resource corresponding to a numerical interval #1 as the first SRS resource.

If the network device determines that the second terminal device is the first-type terminal device, the network device uses an SRS resource corresponding to a numerical interval #4 (that is, a second numerical interval) as the first SRS resource. A largest value in the numerical interval #4 is less than a smallest value in a numerical interval corresponding to the quantity of first terminal devices, Optionally, the numerical interval #4 is adjacent to the numerical interval #1.

It may be understood that, according to the resource configuration method provided in this embodiment of this application, compared with a non-first-type terminal device, the network device allocates more SRS resources to the first-type terminal device.

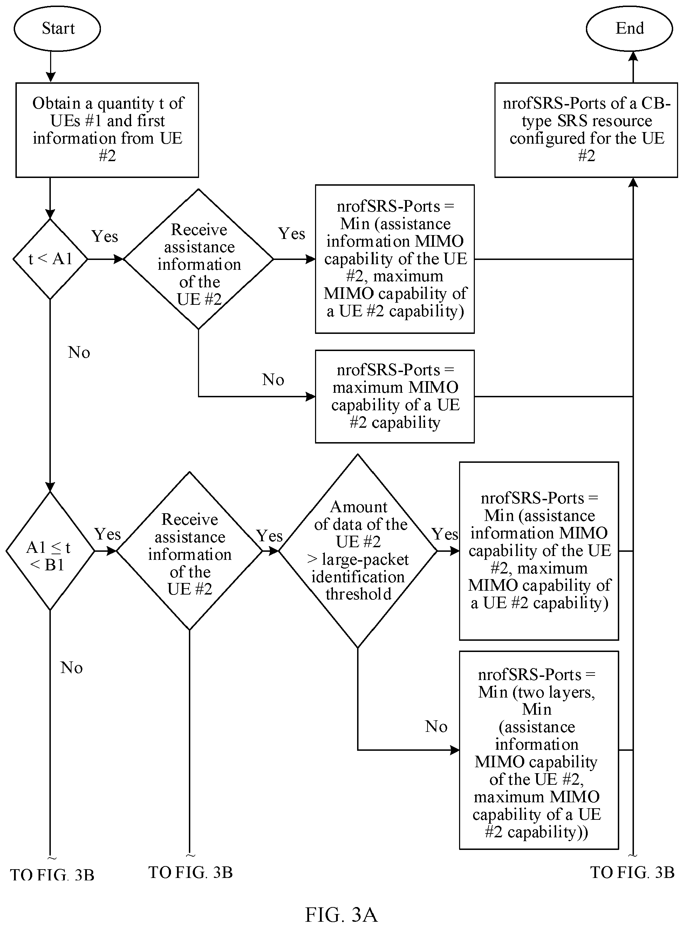

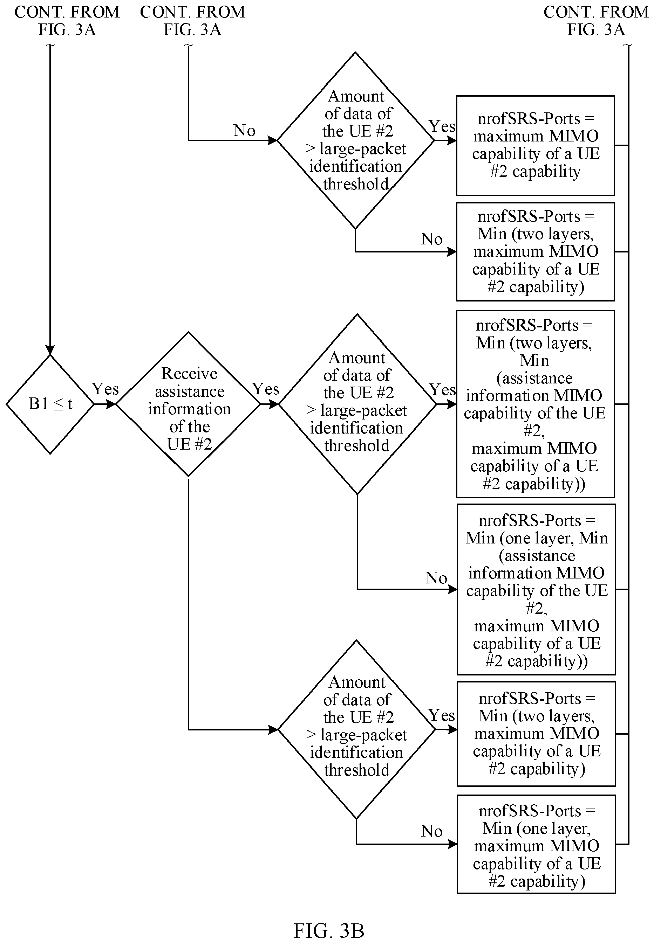

With reference to FIG. 3A and FIG. 3B, a resource configuration method provided in an embodiment of this application is described below by using an example in which the network device configures a CB-type SRS resource for the terminal device according to the method provided in this embodiment of this application and the first-type terminal device is a large-packet terminal device. It should be understood that FIG. 3A and FIG. 3B are merely an example, and are a schematic flowchart in which the network device configures a CB-type SRS resource for the second terminal device based on the quantity of first terminal devices and a type of the second terminal device. For a method in which the network device configures an AS-type/nonCB-type/beam-management-type SRS resource for the second terminal device based on the quantity of first terminal devices and the type of the second terminal device, refer to the procedure shown in FIG. 3A and FIG. 3B. For brevity, details are not described in this embodiment of this application.

As shown in FIG. 3A and FIG. 3B, the network device first obtains a quantity t of UEs #1 that have accessed the current cell (namely, the first terminal devices) and first information from UE #2 that newly accesses the cell (namely, the second terminal device). Further, the network device determines a numerical interval in which t is located.

If t is within the 1^{st} numerical interval (that is, t < A1), a port quantity corresponding to a CB-type SRS resource configured by the network device for the UE #2 is equal to a maximum CB-type SRS resource port quantity that can be supported by the UE #2. The port quantity corresponding to the CB-type SRS resource configured by the network device for the UE #2 is indicated in the RRC signaling by an SRS resource port quantity (nrofSRS-Ports) in SRS-Resource (that is, the resource configuration information) that acts (usage) as an SRS resource identifier list (srs-ResourceIdList) corresponding to a codebook in an SRS resource set (SRS-ResourceSet).

Further, if the first information includes assistance information of the UE #2, nrofSRS-Ports = Min (assistance information MIMO capability of the UE #2, maximum MIMO capability of a UE #2 capability). The assistance information MIMO capability of the UE #2 indicates a maximum CB-type uplink MIMO layer quantity that can be supported by the UE #2 and that is determined based on the assistance information of the UE #2. The maximum MIMO capability of the UE#2 capability indicates a CB-type uplink MIMO layer quantity that is supported by the UE#2 with a maximum capability and that is determined based on capability information of the UE#2. For example, if the assistance information MIMO capability of the UE #2 is 2, and the maximum MIMO capability of the UE #2 capability is 4, nrofSRS-Ports = Min (2, 4) = 2, that is, the network device configures a CB-type SRS resource whose port quantity is 2 for the second terminal device. If the first information does not include the assistance information of the UE #2, nrofSRS-Ports = maximum MIMO capability of the UE #2 capability. For example, if the maximum MIMO capability of the UE #2 capability is 4, nrofSRS-Ports = 4, that is, the network device configures a CB-type SRS resource whose port quantity is 4 for the UE #2.

If t is within the 2^{nd} numerical interval (that is, A1 ≤ t < B 1), and an amount of data of the UE #2 is greater than a large-packet identification threshold, a port quantity corresponding to a CB-type SRS resource configured by the network device for the UE #2 is equal to a maximum CB-type SRS resource port quantity that can be supported by the UE #2. To be specific, when the UE #2 is large-packet UE, the network device uses an SRS resource corresponding to the 1^{st} numerical interval as an SRS resource configured for the UE #2.

If t is within the 2^{nd} numerical interval (that is, A1 ≤ t < B1), and an amount of data of the UE #2 is not greater than a large-packet identification threshold, port quantity corresponding to a CB-type SRS resource configured by the network device for the UE #2 = Min (two layers, maximum CB-type SRS resource port quantity that can be supported by the UE #2). Herein, "two layers" indicates that the port quantity corresponding to the CB-type SRS resource configured by the network device for the UE #2 does not exceed 2.

Further, if the first information includes the assistance information of the UE #2, nrofSRS-Ports = Min (two layers, Min (assistance information MIMO capability of the UE #2, maximum MIMO capability of the UE #2 capability)). For example, if the assistance information MIMO capability of the UE #2 is 2, and the maximum MIMO capability of the UE #2 capability is 4, nrofSRS-Ports = Min (two layers, Min (2, 4)) = 2, that is, the network device configures a CB-type SRS resource whose port quantity is 2 for the second terminal device. If the first information does not include the assistance information of the UE #2, nrofSRS-Ports = Min (two layers, maximum MIMO capability of the UE #2 capability). For example, if the maximum MIMO capability of the UE #2 capability is 4, nrofSRS-Ports = Min (two layers, 4) = 2, that is, the network device configures a CB-type SRS resource whose port quantity is 2 for the UE #2.

If t is within the 3^{rd} numerical interval (that is, B1 ≤ t), and an amount of data of the UE #2 is greater than a large-packet identification threshold, port quantity corresponding to a CB-type SRS resource configured by the network device for the UE #2 = Min (two layers, maximum CB-type SRS resource port quantity that can be supported by the UE #2). To be specific, when the UE #2 is large-packet UE, the network device uses an SRS resource corresponding to the 2^{nd} numerical interval as an SRS resource configured for the UE #2.

If t is within the 3^{rd} numerical interval (that is, B1 ≤ t), and an amount of data of the UE #2 is not greater than a large-packet identification threshold, port quantity corresponding to a CB-type SRS resource configured by the network device for the UE #2 = Min (one layer, maximum CB-type SRS resource port quantity that can be supported by the UE #2). Herein, "one layer" indicates that the port quantity corresponding to the CB-type SRS resource configured by the network device for the UE #2 does not exceed 1.

Further, if the first information includes the assistance information of the UE #2, nrofSRS-Ports = Min (one layer, Min (assistance information MIMO capability of the UE #2, maximum MIMO capability of the UE #2 capability)). For example, if the assistance information MIMO capability of the UE #2 is 2, and the maximum MIMO capability of the UE #2 capability is 4, nrofSRS-Ports = Min (one layer, Min (2, 4)) = 1, that is, the network device configures a CB-type SRS resource whose port quantity is 1 for the second terminal device. If the first information does not include the assistance information of the UE #2, nrofSRS-Ports = Min (one layer, maximum MIMO capability of the UE #2 capability). For example, if the maximum MIMO capability of the UE #2 capability is 4, nrofSRS-Ports = Min (one layer, 4) = 1, that is, the network device configures a CB-type SRS resource whose port quantity is 1 for the UE #2.

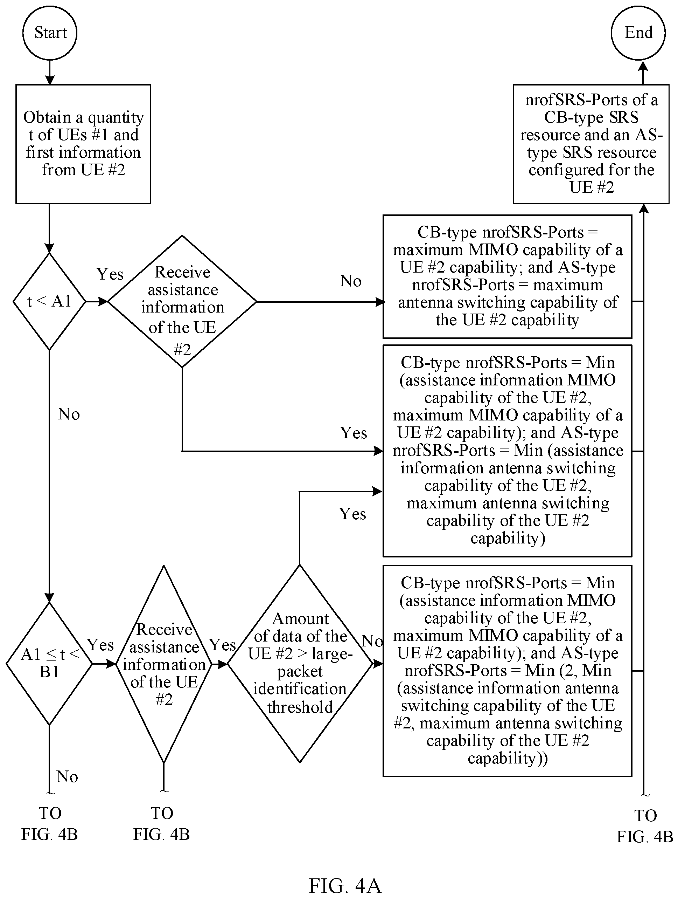

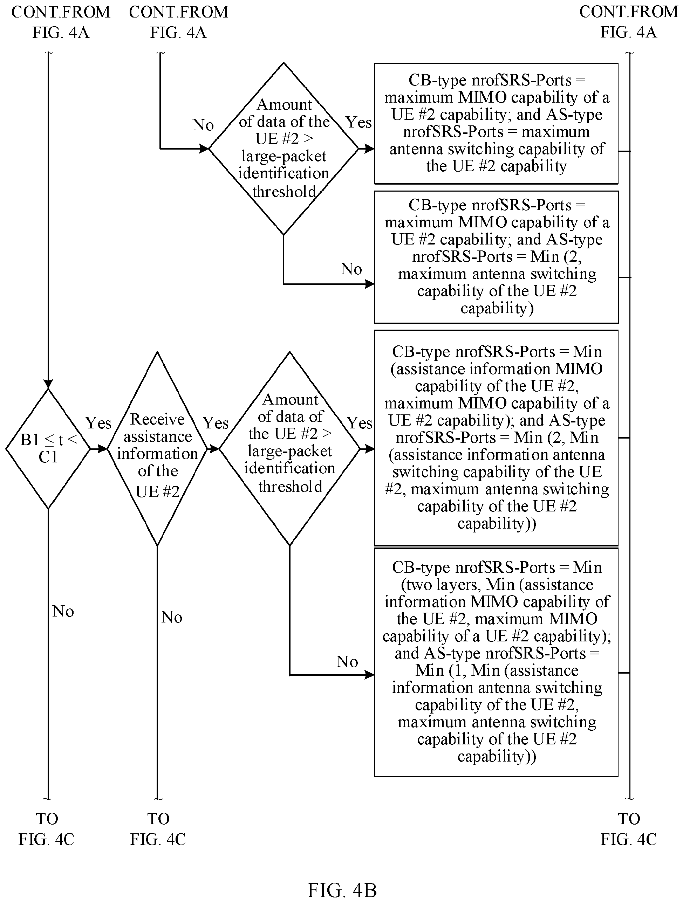

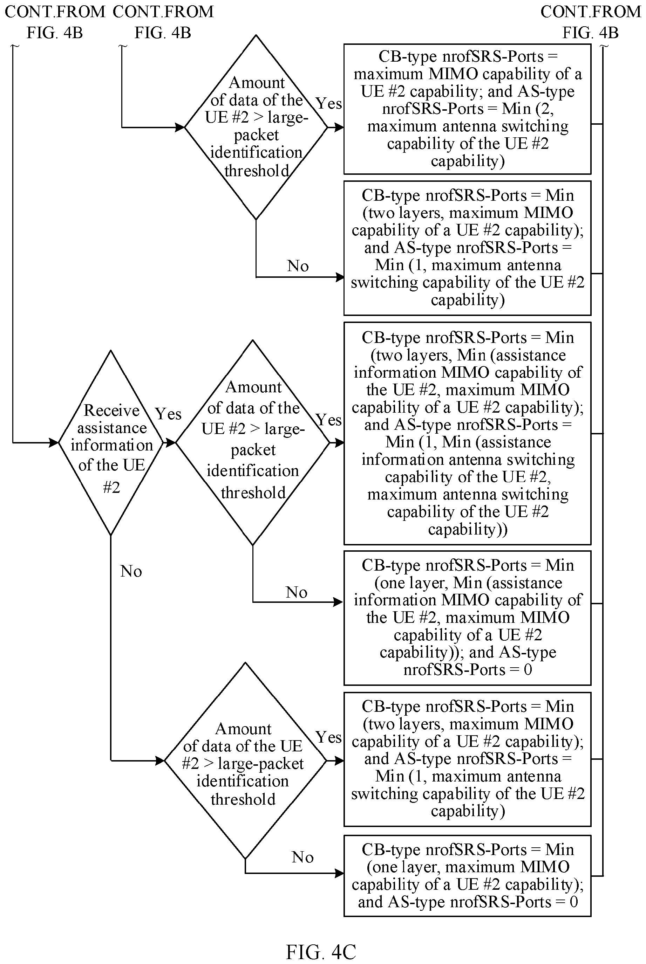

With reference to FIG. 4A to FIG. 4C, a resource configuration method provided in an embodiment of this application is described below by using an example in which the network device configures a CB-type SRS resource and an AS-type SRS resource for the terminal device according to the method provided in this embodiment of this application and the first-type terminal device is a large-packet terminal device.

As shown in FIG. 4A to FIG. 4C, the network device first obtains a quantity t of UEs #1 that have accessed the current cell (namely, the first terminal devices) and first information from UE #2 that newly accesses the cell (namely, the second terminal device). Further, the network device determines a numerical interval in which t is located.

If t is within the 1^{st} numerical interval (that is, t < A1), a port quantity corresponding to a CB-type SRS resource configured by the network device for the UE #2 is equal to a maximum CB-type SRS resource port quantity that can be supported by the UE #2, and a port quantity corresponding to an AS-type SRS resource configured by the network device for the UE #2 is equal to a maximum AS-type SRS resource port quantity that can be supported by the UE #2.

Further, if the first information includes assistance information of the UE #2, CB-type nrofSRS-Ports = Min (assistance information MIMO capability of the UE #2, maximum MIMO capability of a UE #2 capability). The assistance information MIMO capability of the UE #2 indicates a maximum CB-type uplink MIMO layer quantity that can be supported by the UE #2 and that is determined based on the assistance information of the UE #2. The maximum MIMO capability of the UE#2 capability indicates a CB-type uplink MIMO layer quantity that is supported by the UE#2 with a maximum capability and that is determined based on capability information of the UE#2. For example, if the assistance information MIMO capability of the UE #2 is 2, and the maximum MIMO capability of the UE #2 capability is 4, CB-type nrofSRS-Ports = Min (2, 4) = 2, that is, the network device configures a CB-type SRS resource whose port quantity is 2 for the second terminal device.

AS-type nrofSRS-Ports = Min (assistance information antenna switching capability of the UE #2, maximum antenna switching capability of a UE #2 capability). The assistance information antenna switching capability of the UE #2 indicates an AS-type antenna switching mode that can be supported by the UE #2 and that is determined based on the assistance information of the UE #2. The maximum antenna switching capability of the UE #2 capability indicates an AS-type antenna switching mode that is supported by the UE #2 with a maximum capability and that is determined based on the capability information of the UE #2. For example, if the assistance information antenna switching mode capability of the UE #2 is tlr2, and the maximum antenna switching capability of the UE #2 capability is t2r4, AS-type nrofSRS-Ports = Min (2, 4) = 2, that is, the network device configures an AS-type SRS resource whose port quantity is 2 for the second terminal device.

If the first information does not include the assistance information of the UE #2, CB-type nrofSRS-Ports = maximum MIMO capability of the UE #2 capability. For example, if the maximum MIMO capability of the UE #2 capability is 4, CB-type nrofSRS-Ports = 4, that is, the network device configures a CB-type SRS resource whose port quantity is 4 for the UE #2. AS-type nrofSRS-Ports = maximum antenna switching capability of the UE #2 capability. For example, if the maximum antenna switching capability of the UE #2 capability is t2r4, AS-type nrofSRS-Ports = 4, that is, the network device configures an AS-type SRS resource whose port quantity is 4 for the UE #2.

If t is within the 2^{nd} numerical interval (that is, A1 ≤ t < B 1), and an amount of data of the UE #2 is greater than a large-packet identification threshold, a port quantity corresponding to a CB-type SRS resource configured by the network device for the UE #2 is equal to a maximum CB-type SRS resource port quantity that can be supported by the UE #2, and a port quantity corresponding to an AS-type SRS resource configured by the network device for the UE #2 is equal to a maximum AS-type SRS resource port quantity that can be supported by the UE #2. To be specific, when the UE #2 is large-packet UE, the network device uses an SRS resource corresponding to the 1^{st} numerical interval as an SRS resource configured for the UE #2.

If t is within the 2^{nd} numerical interval (that is, A1 ≤ t < B1), and an amount of data of the UE #2 is not greater than a large-packet identification threshold, a port quantity corresponding to a CB-type SRS resource configured by the network device for the UE #2 is equal to a maximum CB-type SRS resource port quantity that can be supported by the UE #2. Port quantity corresponding to an AS-type SRS resource configured by the network device for the UE #2 = Min (2, maximum AS-type SRS resource port quantity that can be supported by the UE #2). Herein, "2" indicates that the port quantity corresponding to the AS-type SRS resource configured by the network device for the UE #2 does not exceed 2.

Further, if the first information includes the assistance information of the UE #2, CB-type nrofSRS-Ports = Min (assistance information MIMO capability of the UE #2, maximum MIMO capability of the UE #2 capability). For example, if the assistance information MIMO capability of the UE #2 is 2, and the maximum MIMO capability of the UE #2 capability is 4, CB-type nrofSRS-Ports = Min (2, 4) = 2, that is, the network device configures a CB-type SRS resource whose port quantity is 2 for the second terminal device. AS-type nrofSRS-Ports = Min (2, Min (assistance information antenna switching capability of the UE #2, maximum antenna switching capability of the UE #2 capability)). For example, if the assistance information antenna switching capability of the UE #2 is tlr2, and the maximum antenna switching capability of the UE #2 capability is t2r4, AS-type nrofSRS-Ports = Min (2, Min (2, 4)) = 2, that is, the network device configures an AS-type SRS resource whose port quantity is 2 for the second terminal device.

If the first information does not include the assistance information of the UE #2, CB-type nrofSRS-Ports = maximum MIMO capability of the UE #2 capability. AS-type nrofSRS-Ports = Min (2, maximum antenna switching capability of the UE #2 capability). For example, if the maximum antenna switching capability of the UE #2 capability is t2r4, AS-type nrofSRS-Ports = Min (2, 4) = 2, that is, the network device configures an AS-type SRS resource whose port quantity is 2 for the second terminal device.

If t is within the 3^{rd} numerical interval (that is, B 1 ≤ t < C1), and an amount of data of the UE #2 is greater than a large-packet identification threshold, a port quantity corresponding to a CB-type SRS resource configured by the network device for the UE #2 is equal to a maximum CB-type SRS resource port quantity that can be supported by the UE #2, and port quantity corresponding to an AS-type SRS resource configured by the network device for the UE #2 = Min (2, maximum AS-type SRS resource port quantity that can be supported by the UE #2). To be specific, when the UE #2 is large-packet UE, the network device uses an SRS resource corresponding to the 2^{nd} numerical interval as an SRS resource configured for the UE #2.

If t is within the 3^{rd} numerical interval (that is, B1 ≤ t < C1), and an amount of data of the UE #2 is not greater than a large-packet identification threshold, port quantity corresponding to a CB-type SRS resource configured by the network device for the UE #2 = Min (two layers, maximum CB-type SRS resource port quantity that can be supported by the UE #2). Herein, "two layers" indicates that the port quantity corresponding to the CB-type SRS resource configured by the network device for the UE #2 does not exceed 2. Port quantity corresponding to an AS-type SRS resource configured by the network device for the UE #2 = Min (1, maximum AS-type SRS resource port quantity that can be supported by the UE #2). Herein, "1" indicates that the port quantity corresponding to the AS-type SRS resource configured by the network device for the UE #2 does not exceed 1.

Further, if the first information includes the assistance information of the UE #2, CB-type nrofSRS-Ports = Min (two layers, Min (assistance information MIMO capability of the UE #2, maximum MIMO capability of the UE #2 capability)). For example, if the assistance information MIMO capability of the UE #2 is 2, and the maximum MIMO capability of the UE #2 capability is 4, CB-type nrofSRS-Ports = Min (two layers, Min (2, 4)) = 2, that is, the network device configures a CB-type SRS resource whose port quantity is 2 for the second terminal device. AS-type nrofSRS-Ports = Min (1, Min (assistance information antenna switching capability of the UE #2, maximum antenna switching capability of the UE #2 capability)). For example, if the assistance information antenna switching capability of the UE #2 is tlr2, and the maximum antenna switching capability of the UE #2 capability is t2r4, AS-type nrofSRS-Ports = Min (1, Min (2, 4)) = 1, that is, the network device configures an AS-type SRS resource whose port quantity is 1 for the second terminal device.

If the first information does not include the assistance information of the UE #2, CB-type nrofSRS-Ports = Min (two layers, maximum MIMO capability of the UE #2 capability). For example, if the maximum MIMO capability of the UE #2 capability is 4, CB-type nrofSRS-Ports = Min (two layers, 4) = 2, that is, the network device configures a CB-type SRS resource whose port quantity is 2 for the UE #2. AS-type nrofSRS-Ports = Min (1, maximum antenna switching capability of the UE #2 capability). For example, if the maximum antenna switching capability of the UE #2 capability is t2r4, AS-type nrofSRS-Ports = Min (1, 4) = 1, that is, the network device configures an AS-type SRS resource whose port quantity is 1 for the second terminal device.

If t is within the 4^{th} numerical interval (that is, C1 ≤ t), and an amount of data of the UE #2 is greater than a large-packet identification threshold, port quantity corresponding to a CB-type SRS resource configured by the network device for the UE #2 = Min (two layers, maximum CB-type SRS resource port quantity that can be supported by the UE #2), and port quantity corresponding to an AS-type SRS resource configured by the network device for the UE #2 = Min (1, maximum AS-type SRS resource port quantity that can be supported by the UE #2). To be specific, when the UE #2 is large-packet UE, the network device uses an SRS resource corresponding to the 3^{rd} numerical interval as an SRS resource configured for the UE #2.

If t is within the 4^{th} numerical interval (that is, C1 ≤ t), and an amount of data of the UE #2 is not greater than a large-packet identification threshold, port quantity corresponding to a CB-type SRS resource configured by the network device for the UE #2 = Min (one layer, maximum CB-type SRS resource port quantity that can be supported by the UE #2). Herein, "one layer" indicates that the port quantity corresponding to the CB-type SRS resource configured by the network device for the UE #2 does not exceed 1. In addition, nrofSRS-Ports of an AS-type configured by the network device for the UE #2 = 0, that is, the network device configures no AS-type SRS resource for the UE #2.

Further, if the first information includes the assistance information of the UE #2, CB-type nrofSRS-Ports = Min (one layer, Min (assistance information MIMO capability of the UE #2, maximum MIMO capability of the UE #2 capability)). For example, if the assistance information MIMO capability of the UE #2 is 2, and the maximum MIMO capability of the UE #2 capability is 4, CB-type nrofSRS-Ports = Min (one layer, Min (2, 4)) = 1, that is, the network device configures a CB-type SRS resource whose port quantity is 1 for the second terminal device.

If the first information does not include the assistance information of the UE #2, CB-type nrofSRS-Ports = Min (one layer, maximum MIMO capability of the UE #2 capability). For example, if the maximum MIMO capability of the UE #2 capability is 4, CB-type nrofSRS-Ports = Min (one layer, 4) = 1, that is, the network device configures a CB-type SRS resource whose port quantity is 2 for the UE #2.

In this embodiment of this application, in a process in which the network device configures an SRS resource for the second terminal device, when a type of the terminal device that newly performs access is considered, the network device may allocate more SRS resources to a first-type terminal device that newly performs access, so as to ensure efficient use of the SRS resources.

It may be understood that, when the network device configures a relatively large quantity of SRS resources for terminal devices that have accessed the first cell (namely, the first terminal devices), and a relatively small quantity of SRS resources are not allocated, the network device may reconfigure SRS resources for some terminal devices in the terminal devices that have accessed the first cell. Alternatively, when excessive terminal devices newly access the first cell, and SRS resources that are not allocated are insufficient, the network device may reconfigure SRS resources for some terminal devices in the terminal devices that have accessed the first cell. Alternatively, when the network device configures a relatively small quantity of SRS resources for terminal devices that have accessed the first cell, and SRS resources that are not allocated are sufficient, the network device may reconfigure SRS resources for some terminal devices in the terminal devices that have accessed the first cell. Alternatively, when excessive terminal devices exit from a network in the first cell and consequently excessive SRS resources are released, the network device may reconfigure SRS resources for some terminal devices in the terminal devices that have accessed the first cell.

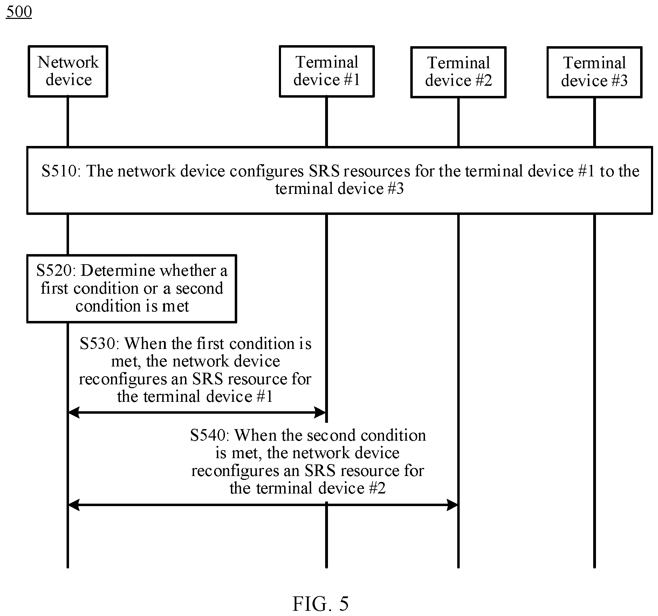

Based on this, an embodiment of this application further provides a resource reconfiguration method. FIG. 5 is a schematic flowchart of a resource reconfiguration method according to an embodiment of this application. As shown in FIG. 5, the method 500 may include S510 to S540. The following describes each step in detail.

S5 10: A network device configures SRS resources for a terminal device #1 to a terminal device #3.

In S510, a manner in which the network device configures the SRS resources for the terminal device #1 to the terminal device #3 is not limited in this embodiment of this application. The following uses the terminal device #1 as an example to describe a process in which the network device configures an SRS resource for the terminal device # 1.

In S510, the network device may configure the SRS resource for the terminal device #1 in an initial access process of the terminal device #1. It may be understood that, in the initial access process of the terminal device #1, the terminal device #1 may send capability information of the terminal device #1 to the network device. Further, the network device may configure the SRS resource for the terminal device #1 based on the capability information of the terminal device #1. The network device may configure the SRS resource for the terminal device #1 according to an existing resource configuration method, or may configure the SRS resource for the terminal device #1 according to the resource configuration method described in the method 200. For descriptions of the capability information of the terminal device #1, refer to the descriptions of the capability information of the second terminal device in S220.

In S510, the network device may alternatively configure the SRS resource for the terminal device #1 when the terminal device is overheated or expects to reduce power. It may be understood that, when the terminal device #1 is overheated or expects to reduce power, the terminal device #1 may send assistance information of the terminal device #1 to the network device. Further, the network device may configure the SRS resource for the terminal device #1 based on the assistance information of the terminal device #1. The network device may configure the SRS resource for the terminal device according to an existing resource configuration method, or may configure the SRS resource for the terminal device according to the resource configuration method described in the method 200. For descriptions of the assistance information of the terminal device #1, refer to the descriptions of the assistance information of the second terminal device in S220.

A process in which the network device configures an SRS resource for the terminal device #2 or the terminal device #3 is similar to a process in which the network device configures the SRS resource for the terminal device #1. For brevity, details are not described herein again.

It should be understood that, after the network device configures the SRS resources for the terminal device #1 to the terminal device #3, it is considered that the terminal device #1 to the terminal device #3 are terminal devices that have accessed a first cell. It should be further understood that, in this embodiment of this application, only the terminal device #1 to the terminal device #3 are used as an example for description, and there may be more terminal devices that have accessed the first cell. In the following, the terminal device #1 to the terminal device #3 are described as first terminal devices, and the first terminal devices are terminal devices that have accessed the first cell.

S520: The network device determines whether a first condition or a second condition is met.

The first condition is at least one of the following: A port quantity corresponding to the SRS resources configured by the network device for the first terminal devices is greater than or equal to a first preset threshold (the first preset threshold is denoted as M below), and a quantity of terminal devices that newly access a current cell is greater than or equal to a second preset threshold (the second preset threshold is denoted as L below).

The second condition is at least one of the following: A port quantity corresponding to the SRS resources configured by the network device for the first terminal devices is less than or equal to a third preset threshold (the third preset threshold is denoted as P below), and a quantity of terminal devices that exit from a network in a current cell is greater than or equal to a fourth preset threshold (the fourth preset threshold is denoted as Q below).

Assuming that a quantity of first terminal devices is t, port quantity corresponding to the SRS resources configured by the network device for the first terminal devices = port quantity corresponding to an SRS resource configured by the network device for the 1^{st} terminal device + port quantity corresponding to an SRS resource configured by the network device for the 2^{nd} first terminal device + ... + port quantity corresponding to an SRS resource configured by the network device for the t^{th} first terminal device.

Terminal devices that newly perform access are terminal devices that simultaneously access the first cell at a current moment, or terminal devices that newly perform access are terminal devices that access the first cell from a moment. For example, the moment may be a moment at which the quantity of first terminal devices reaches a largest value in the 1^{st} numerical interval, that is, the moment may be a moment at which the quantity of first terminal devices reaches A1. It can be understood that all terminal devices that perform access after the A1^{th} first terminal device may be considered as terminal devices that newly perform access. For another example, the moment may be a moment at which the quantity of first terminal devices reaches a largest value in the 2^{nd} numerical interval, that is, the moment may be a moment at which the quantity of first terminal devices reaches B1. It can be understood that all terminal devices that perform access after the B1^{th} first terminal device may be considered as terminal devices that newly perform access.

Terminal devices that exit from a network are total terminal devices that exit from the network, starting from the 1^{st} terminal device that exits from the network in the first cell. Alternatively, terminal devices that exit from a network may be terminal devices that exit from the network from a moment. For example, the moment may be a moment at which the quantity of first terminal devices reaches a largest value in the 1^{st} numerical interval, that is, the moment may be a moment at which the quantity of first terminal devices reaches A1. It can be understood that, after the quantity of first terminal devices reaches A1, all terminal devices that exit from the network may be considered as terminal devices that exit from the network. However, before the quantity of first terminal devices reaches A1, terminal devices that exit from the network are not considered as terminal devices that exit from the network.

If the network device determines that the first condition is met, the network device performs S530. If the network device determines that the second condition is met, the network device performs S540.

S530: When the first condition is met, the network device reconfigures an SRS resource for the terminal device #1.

The terminal device #1 may be understood as at least one terminal device in the first terminal devices. In other words, when the first condition is met, the network device may reconfigure SRS resources for one or more of the first terminal devices. In this embodiment of this application, FIG. 5 shows only an example in which the network device reconfigures the SRS resource for the terminal device #1 when the first condition is met.

Specifically, the network device may reconfigure the SRS resource for the terminal device #1 based on sequence numbers of the first terminal devices and a second mapping relationship. The second mapping relationship indicates a mapping relationship between a plurality of numerical intervals and SRS resources. The network device may determine an SRS resource corresponding to a numeric interval #1 as the SRS resource reconfigured for the terminal device #1. The numeric interval #1 is a numeric interval corresponding to a sequence number of the terminal device #1. The sequence number of the terminal device #1 is determined based on a sequence in which the t first terminal devices access the first cell. For example, if the terminal device #1 is the 1^{st} terminal device that accesses the first cell in the t first terminal devices, the sequence number of the terminal device #1 is 1.

The second mapping relationship may be determined based on the quantity of first terminal devices and a maximum quantity of SRS resources that can be supported by the first terminal devices. A plurality of SRS resources may be determined based on the maximum quantity of SRS resources that can be supported by the first terminal devices. The plurality of numerical intervals may be determined based on the quantity of first terminal devices. For example, a critical value of at least one of the plurality of numerical intervals is determined based on the quantity of first terminal devices. The critical value of the numerical interval may be a largest value and/or a smallest value in the numerical interval.

A relationship between SRS resources corresponding to different numerical intervals is described as follows: A port quantity corresponding to an SRS resource corresponding to a numerical interval #2 is greater than a port quantity corresponding to an SRS resource corresponding to a numerical interval #3. The numerical interval #2 and the numerical interval #3 are any two numerical intervals that meet the following relationship in the plurality of numerical intervals: A largest value in the numerical interval #2 is less than a smallest value in the numerical interval #3. In other words, when the SRS resource is reconfigured for the terminal device # 1 according to the method provided in this embodiment of this application, an earlier moment at which the terminal device #1 accesses the current cell indicates a larger port quantity corresponding to the SRS resource reconfigured by the network device for the terminal device #1.

An example in which the SRS resource reconfigured by the network device for the terminal device #1 is an AS-type SRS resource is used below for description. When the network device reconfigures the AS-type SRS resource for the terminal device #1, the plurality of numerical intervals indicated by the second mapping relationship and an SRS resource corresponding to each numerical interval may meet resource configuration policies shown in Table 21.

**Table 21**

| Sequence numbers of first terminal devices | SRS resource configuration policies corresponding to different intervals |
|---|---|
| [0, A2] | A total port quantity corresponding to a configured AS-type SRS resource does not exceed 4 |
| (A2, B2] | A total port quantity corresponding to a configured AS-type SRS resource does not exceed 2 |
| (B2, C2] | A total port quantity corresponding to a configured AS-type SRS resource does not exceed 1 |
| (C2, infinity) | No AS-type SRS resource is configured |

It should be understood that Table 21 is merely an example. With development of technologies, a maximum AS-type SRS resource port quantity that can be supported by the terminal device may increase to 6, 8, 10, or the like. In this case, the resource configuration policies corresponding to the different numerical intervals shown in Table 21 may change. For example, the resource configuration policy corresponding to [0, A1] may be that the total port quantity corresponding to the configured AS-type SRS resource does not exceed 6.

It can be learned from Table 21 that, when the sequence numbers of the first terminal devices are within the 1^{st} numerical interval, a total port quantity corresponding to AS-type SRS resources configured by the network device for the first terminal devices does not exceed 4. It can be learned from the foregoing descriptions that a maximum port quantity corresponding to an AS-type SRS resource that can be configured by the network device for the terminal device is 4. In other words, if the sequence numbers of the first terminal devices are within the 1^{st} numerical interval, in S530, the network device may reconfigure no SRS resource for the first terminal devices.

When the sequence numbers of the first terminal devices are within the 2^{nd} numerical interval, a total port quantity corresponding to AS-type SRS resources configured by the network device for the first terminal devices does not exceed 2. If the total port quantity corresponding to the AS-type SRS resources configured by the network device for the first terminal devices exceeds 2 in S510, in S530, the network device may reconfigure SRS resources for the first terminal devices, and a port quantity corresponding to an AS-type SRS resource reconfigured by the network device for the terminal device #1 does not exceed 2. In other words, the terminal device #1 may be a terminal device whose sequence number is within the 2^{nd} numerical interval and whose port quantity corresponding to an AS-type SRS resource that is first configured exceeds 2.

When the sequence numbers of the first terminal devices are within the 3^{rd} numerical interval, a total port quantity corresponding to AS-type SRS resources configured by the network device for the first terminal devices does not exceed 1. If the total port quantity corresponding to the AS-type SRS resources configured by the network device for the first terminal devices exceeds 1 in S510, in S530, the network device may reconfigure SRS resources for the first terminal devices, and a port quantity corresponding to an AS-type SRS resource reconfigured by the network device for the terminal device #1 does not exceed 1. In other words, the terminal device #1 may be a terminal device whose sequence number is within the 2^{nd} numerical interval and whose port quantity corresponding to an AS-type SRS resource that is first configured exceeds 1.

When the sequence numbers of the first terminal devices are within the 4^{th} numerical interval, the network device configures no AS-type SRS resource for the first terminal devices. If the network device configures AS-type SRS resources for the first terminal devices in S510, in S530, the network device may release the SRS resources configured for the first terminal devices. In other words, the terminal device #1 may be a terminal device whose sequence number is within the 4^{th} numerical interval and for which an AS-type SRS resource is first configured.

Assuming that an SRS antenna switching mode supported by the terminal device #1 is t1r1-t1r2-t2r2-t2r4, and a maximum port quantity that corresponds to a single SRS resource and that can be supported by the terminal device #1 is 4, the second mapping relationship may be shown in Table 22.

**Table 22**

| Sequence numbers of first terminal devices | SRS resources corresponding to different intervals |
|---|---|
| [0, A2] | A configured AS-type SRS resource corresponds to t2r4 |
| (A2, B2] | A configured AS-type SRS resource corresponds to t2r2/tlr2 |
| (B2, C2] | A configured AS-type SRS resource corresponds to t1r1 |
| (C2, infinity) | No AS-type SRS resource is configured |

Herein, A2 < B2 < C2, and A2, B2, and C2 are all positive integers.

A port quantity corresponding to an AS-type SRS resource corresponding to the 1^{st} numerical interval (that is, [0, A2]) shown in Table 22 is 4. In other words, a quantity of AS-type SRS resources corresponding to the 1^{st} numerical interval is a maximum quantity of AS-type SRS resources that can be supported by the terminal device #1. It should be understood that, in Table 22, only an example in which the quantity of AS-type SRS resources corresponding to the 1^{st} numerical interval is equal to the maximum quantity of AS-type SRS resources that can be supported by the terminal device #1 is used. Alternatively, the quantity of AS-type SRS resources corresponding to the 1^{st} numerical interval may be less than the maximum quantity of AS-type SRS resources that can be supported by the terminal device #1. For example, the port quantity corresponding to the AS-type SRS resource corresponding to the 1^{st} numerical interval is 2.

Based on the foregoing relationship between SRS resources corresponding to different numerical intervals, a port quantity corresponding to an AS-type SRS resource corresponding to the 2^{nd} numerical interval (that is, (A2, B2]) is less than the port quantity corresponding to the AS-type SRS resource corresponding to the 1^{st} numerical interval. In other words, the port quantity corresponding to the AS-type SRS resource corresponding to the 2^{nd} numerical interval may be 2, 1, or 0. In Table 22, an example in which the port quantity corresponding to the AS-type SRS resource corresponding to the 2^{nd} numerical interval is 2 is used.

When the port quantity corresponding to the AS-type SRS resource corresponding to the 2^{nd} numerical interval is 2, a port quantity corresponding to an AS-type SRS resource corresponding to the 3^{rd} numerical interval (that is, (B2, C2]) may be 1 or 0. In Table 22, an example in which the port quantity corresponding to the AS-type SRS resource corresponding to the 3^{rd} numerical interval is 1 is used.

When the port quantity corresponding to the AS-type SRS resource corresponding to the 3^{rd} numerical interval is 1, a port quantity corresponding to an AS-type SRS resource corresponding to the 4^{th} numerical interval (that is, (C1, infinity)) is 0 (that is, processing is performed in a manner in which the antenna switching mode is notSupported, and there is no AS-type resource).

As shown in Table 22, if the sequence number of the terminal device #1 is within the 2^{nd} numerical interval, and the AS-type SRS resource that is first configured for the terminal device #1 corresponds to Tx-switch=t2r4, the network device may use an AS-type SRS resource corresponding to Tx-switch=t2r2/tlr2 as an SRS resource reconfigured for the terminal device #1.

If the sequence number of the terminal device #1 is within the 3^{rd} numerical interval, and the AS-type SRS resource that is first configured for the terminal device #1 corresponds to Tx-switch=t2r4 or Tx-switch=t2r2/tlr2, the network device may use an AS-type SRS resource corresponding to Tx-switch=t1r1 as an SRS resource reconfigured for the terminal device # 1.

If the sequence number of the terminal device #1 is within the 4^{th} numerical interval, and the AS-type SRS resource is first configured for the terminal device #1, the network device may release the AS-type SRS resource configured for the terminal device #1.

When the first condition is met, it indicates that a relatively small quantity of SRS resources are not allocated to the current cell. In other words, the network device needs to release, by reconfiguring an SRS resource for the terminal device #1, some SRS resources configured for the first terminal devices, so as to increase SRS resources that are not allocated to the current cell.

In S510, if the network device configures the SRS resources for the first terminal devices according to the resource configuration method described in the method 200, when the plurality of numerical intervals indicated by the first mapping relationship are completely the same as the plurality of numerical intervals indicated by the second mapping relationship, a port quantity corresponding to the SRS resource configured for each first terminal device is an SRS resource corresponding to a numerical interval in which a sequence number of each first terminal device is located. Therefore, when the plurality of numerical intervals indicated by the first mapping relationship are different from the plurality of numerical intervals indicated by the second mapping relationship, the network device may release some SRS resources by reconfiguring an SRS resource for the terminal device #1.

Specifically, a relationship between the plurality of numerical intervals indicated by the second mapping relationship and the plurality of numerical intervals indicated by the first mapping relationship may be: A largest value in at least one of the plurality of numerical intervals indicated by the second mapping relationship is less than a largest value in a corresponding numerical interval in the plurality of numerical intervals indicated by the first mapping relationship. Corresponding numerical intervals in the plurality of numerical intervals indicated by the first mapping relationship and the plurality of numerical intervals indicated by the second mapping relationship may be understood as numerical intervals corresponding to a same SRS resource. As described above, critical points A1, B1, C1, and the like of the plurality of numerical intervals indicated by the first mapping relationship may change. Therefore, the second mapping relationship may also be understood as being obtained after the network device updates the first mapping relationship. Updating the first mapping relationship may be understood as updating the critical value of the at least one of the plurality of numerical intervals indicated by the first mapping relationship. In this case, S530 may be further understood as follows: When the first condition is met, the critical value of the at least one of the plurality of numerical intervals indicated by the first mapping relationship is updated, to obtain the second mapping relationship. Further, the SRS resource is reconfigured for the terminal device #1 based on the second mapping relationship.

For example, the plurality of numerical intervals indicated by the first mapping relationship are [0, A1], (A1, B1], (B1, C1], and (C1, infinity), and the plurality of numerical intervals indicated by the second mapping relationship are [0, A2], (A2, B2], (B2, C2], and (C2, infinity). In this case, the relationship between the plurality of numerical intervals indicated by the first mapping relationship and the plurality of numerical intervals indicated by the second mapping relationship may be: A2 < A1 (that is, a largest value in the 1^{st} numerical interval indicated by the second mapping relationship is less than a largest value in the 1^{st} numerical interval indicated by the first mapping relationship), B2 = B 1, and C2 = C1; or A2 = A1, B2 < B 1 (that is, a largest value in the 2^{nd} numerical interval indicated by the second mapping relationship is less than a largest value in the 2^{nd} numerical interval indicated by the first mapping relationship), and C2 = C1; or A2 = A1, B2 = B 1, and C2 < C1 (that is, a largest value in the 3^{rd} numerical interval indicated by the second mapping relationship is less than a largest value in the 3^{rd} numerical interval indicated by the first mapping relationship); or A2 < A1, B2 < B 1, and C2 = C1; or A2 < A1, B2 < B 1, and C2 < C1; or the like.

For example, A2 < A1, B2 = B 1, and C2 = C2. In S510, in a process in which the network device configures the SRS resources for the first terminal devices, for the first terminal devices whose sequence numbers are within [0, A1], a total port quantity corresponding to AS-type SRS resources configured by the network device for the first terminal devices does not exceed 4. In this case, in S530, for the first terminal devices whose sequence numbers are within (A2, A1], a corresponding resource configuration policy is updated to the following: A total port quantity corresponding to configured AS-type SRS resources does not exceed 2. Therefore, in S530, the network device may reconfigure the AS-type SRS resources for the first terminal devices whose sequence numbers are within (A2, A1] and whose total port quantity corresponding to the configured AS-type SRS resources exceeds 2. In other words, the terminal device #1 may be a terminal device whose sequence number is within (A2, A1] and whose total port quantity corresponding to the configured AS-type SRS resource exceeds 2.

Optionally, the terminal device #1 may alternatively be a non-first-type terminal device. In other words, even if the SRS resource configured for the terminal device # 1 is an SRS resource corresponding to a numerical interval in which the sequence number of the terminal device #1 is located, when the terminal device #1 is a non-first-type terminal device, the network device may also reconfigure the SRS resource for the terminal device #1, that is, reduce a port quantity corresponding to the SRS resource configured for the terminal device #1.

For example, the sequence number of the terminal device #1 is within the 1^{st} numerical interval indicated by the second mapping relationship, and the port quantity corresponding to the AS-type SRS resource configured for the terminal device #1 is 4, which meets the SRS resource corresponding to the 1^{st} numerical interval indicated by the second mapping relationship. If the terminal device #1 is a non-first-type terminal device, in S530, the network device may still reconfigure the AS-type SRS resource for the terminal device #1. For example, the port quantity corresponding to the AS-type SRS resource reconfigured by the network device for the terminal device #1 is 2.

It should be understood that only an example in which the network device reconfigures the AS-type SRS resource for the terminal device #1 in S530 is used above for description. In S530, the network device may reconfigure an SRS resource of another type for the terminal device #1 according to the same method, or simultaneously reconfigure SRS resources of a plurality of types. It may be understood that the port quantity corresponding to the SRS resource reconfigured by the network device for the terminal device #1 in S530 is less than the port quantity corresponding to the SRS resource configured for the terminal device #1 in S510.

In this embodiment of this application, when the network device allocates excessive SRS resources to a terminal device that has accessed the first cell, or when there are excessive terminal devices that newly access the first cell, the network device reconfigures SRS resources for some terminal devices that have accessed the first cell, to reduce an SRS port quantity of some users who have accessed the first cell, so that some SRS resources can be released as idle resources, and the network device can configure SRS resources for more terminal devices that newly access the first cell. This increases a cell throughput.

S540: When the second condition is met, the network device reconfigures an SRS resource for the terminal device #2.

The terminal device #2 may be understood as at least one terminal device in the first terminal devices. In other words, when the second condition is met, the network device may reconfigure SRS resources for one or more of the first terminal devices. In this embodiment of this application, FIG. 5 shows only an example in which the network device reconfigures the SRS resource for the terminal device #2 when the first condition is met.

Specifically, the network device may reconfigure the SRS resource for the terminal device #2 based on sequence numbers of the first terminal devices and a second mapping relationship. The second mapping relationship indicates a mapping relationship between a plurality of numerical intervals and SRS resources. The network device may determine an SRS resource corresponding to a numeric interval #1 as the SRS resource reconfigured for the terminal device #2. The numeric interval #1 is a numeric interval corresponding to a sequence number of the terminal device #2. The sequence number of the terminal device #2 is determined based on a sequence in which the t first terminal devices access the current cell. For example, if the terminal device #2 is the 1^{st} terminal device that accesses the current cell in the t first terminal devices, the sequence number of the terminal device #2 is 1.

An example in which the SRS resource reconfigured by the network device for the terminal device #2 is an AS-type SRS resource is used below for description. When the network device reconfigures the AS-type SRS resource for the terminal device #2, the plurality of numerical intervals indicated by the second mapping relationship and an SRS resource corresponding to each numerical interval may meet resource configuration policies shown in Table 21. It can be learned from Table 21 that, when the sequence numbers of the first terminal devices are within the 1^{st} second numerical interval, a total port quantity corresponding to AS-type SRS resources configured by the network device for the first terminal devices does not exceed 4. It can be learned from the foregoing descriptions that a maximum port quantity corresponding to an AS-type SRS resource that can be configured by the network device for the terminal device is 4. In other words, if the network device configures the SRS resources for the first terminal devices according to an existing method in S510, and the sequence numbers of the first terminal devices are within the 1^{st} numerical interval, in S530, the network device may reconfigure no SRS resource for the first terminal devices.

If the network device configures the SRS resources for the first terminal devices according to the method 200 in S5 10, when there is a first terminal device that exits from the network, sequence numbers of remaining first terminal devices are updated, and original sequence numbers of some first terminal devices may be within the 2^{nd} numerical interval and updated sequence numbers are within the 1^{st} numerical interval. If a maximum AS-type SRS resource port quantity that can be supported by the first terminal devices whose updated sequence numbers are within the 1^{st} numerical interval is 4, the network device may reconfigure AS-type SRS resources for the first terminal devices. In other words, the terminal device #2 may be a terminal device whose sequence number is within the 1^{st} numerical interval and whose port quantity corresponding to an AS-type SRS resource that is first configured is less than 4 and less than a maximum AS-type SRS resource port quantity that can be supported by the terminal device #2.

When the sequence numbers of the first terminal devices are within the 2^{nd} numerical interval, a total port quantity corresponding to AS-type SRS resources configured by the network device for the first terminal devices does not exceed 2. In S510, if the total port quantity corresponding to the AS-type SRS resources configured by the network device for the first terminal devices is less than 2 and less than the maximum AS-type SRS resource port quantity that can be supported by the first terminal devices, in S530, the network device may reconfigure SRS resources for the first terminal devices, and a port quantity corresponding to an AS-type SRS resource reconfigured by the network device for the terminal device #1 does not exceed 2. In other words, the terminal device #2 may be a terminal device whose sequence number is within the 2^{nd} numerical interval and whose port quantity corresponding to an AS-type SRS resource that is first configured is less than 2 and less than a maximum AS-type SRS resource port quantity that can be supported by the terminal device #2.

When the sequence numbers of the first terminal devices are within the 3^{rd} numerical interval, a total port quantity corresponding to AS-type SRS resources configured by the network device for the first terminal devices does not exceed 1. In S5 10, if the network device configures the AS-type SRS resources for the first terminal devices by using a key, and the first terminal devices can support the AS-type SRS resources, in S530, the network device may configure, for the first terminal devices, the AS-type SRS resources whose port quantity is 1. In other words, the terminal device #2 may be a terminal device whose sequence number is within the 3^{rd} numerical interval and for which no AS-type SRS resource is first configured.

When the sequence numbers of the first terminal devices are within the 4^{th} second numerical interval, the network device configures no AS-type SRS resource for the first terminal devices.

Assuming that an SRS antenna switching mode supported by the terminal device #2 is t1r1-t1r2-t2r2-t2r4, and a maximum port quantity that corresponds to a single SRS resource and that can be supported by the terminal device #2 is 4, the second mapping relationship may be shown in Table 22.

As shown in Table 22, if the sequence number of the terminal device #2 is within the 1^{st} numerical interval, and a port quantity corresponding to the AS-type SRS resource that is first configured for the terminal device #1 is less than 4, the network device may use an AS-type SRS resource corresponding to Tx-switch=t2r4 as an SRS resource reconfigured for the terminal device #2.

If the sequence number of the terminal device #1 is within the 2^{nd} numerical interval, and a port quantity corresponding to the AS-type SRS resource that is first configured for the terminal device #2 is less than 2, the network device may use an AS-type SRS resource corresponding to Tx-switch=t2r2/tlr2 as an SRS resource reconfigured for the terminal device #1.

If the sequence number of the terminal device #1 is within the 3^{rd} numerical interval, and no AS-type SRS resource is first configured for the terminal device #1, the network device may use an AS-type SRS resource corresponding to Tx-switch=t1r1 as an SRS resource reconfigured for the terminal device #1.

When the second condition is met, it indicates that a relatively large quantity of SRS resources are not allocated to the current cell. In other words, the network device needs to configure more SRS resources for the first terminal devices by reconfiguring an SRS resource for the terminal device #2, so that the SRS resources are efficiently used.

In S510, if the network device configures the SRS resources for the first terminal devices according to the resource configuration method described in the method 200, and there is no first terminal device that exits from the network, when the plurality of numerical intervals indicated by the first mapping relationship are completely the same as the plurality of numerical intervals indicated by the second mapping relationship, a port quantity corresponding to the SRS resource configured for each first terminal device is an SRS resource corresponding to a numerical interval in which a sequence number of each first terminal device is located. Therefore, when the plurality of numerical intervals indicated by the first mapping relationship are different from the plurality of numerical intervals indicated by the second mapping relationship, the network device may configure more SRS resources for the terminal device #2 by reconfiguring an SRS resource for the terminal device #2.

Specifically, a relationship between the plurality of numerical intervals indicated by the second mapping relationship and the plurality of numerical intervals indicated by the first mapping relationship may be: A largest value in at least one of the plurality of numerical intervals indicated by the second mapping relationship is greater than a largest value in a corresponding numerical interval in the plurality of numerical intervals indicated by the first mapping relationship. Corresponding numerical intervals in the plurality of numerical intervals indicated by the first mapping relationship and the plurality of numerical intervals indicated by the second mapping relationship may be understood as numerical intervals corresponding to a same SRS resource. As described above, critical points A1, B1, C1, and the like of the plurality of numerical intervals indicated by the first mapping relationship may change. Therefore, the second mapping relationship may also be understood as being obtained after the network device updates the first mapping relationship. Updating the first mapping relationship may be understood as updating the critical value of the at least one of the plurality of numerical intervals indicated by the first mapping relationship. In this case, S530 may be further understood as follows: When the second condition is met, the critical value of the at least one of the plurality of numerical intervals indicated by the first mapping relationship is updated, to obtain the second mapping relationship. Further, the SRS resource is reconfigured for the terminal device #2 based on the second mapping relationship.

For example, the plurality of numerical intervals indicated by the first mapping relationship are [0, A1], (A1, B1], (B1, C1], and (C1, infinity), and the plurality of numerical intervals indicated by the second mapping relationship are [0, A3], (A3, B3], (B3, C3], and (C3, infinity). In this case, the relationship between the plurality of numerical intervals indicated by the first mapping relationship and the plurality of numerical intervals indicated by the second mapping relationship may be: A3 > A1 (that is, a largest value in the 1^{st} numerical interval indicated by the second mapping relationship is greater than a largest value in the 1^{st} numerical interval indicated by the first mapping relationship), B3 = B 1, and C3 = C1; or A3 = A1, B3 > B1 (that is, a largest value in the 2^{nd} numerical interval indicated by the second mapping relationship is less than a largest value in the 2^{nd} numerical interval indicated by the first mapping relationship), and C3 = C1; or A3 = A1, B3 = B 1, and C3 > C1 (that is, a largest value in the 3^{rd} numerical interval indicated by the second mapping relationship is greater than a largest value in the 3^{rd} numerical interval indicated by the first mapping relationship); or A3 > A1, B3 > B 1, and C3 = C1; or A3 > A1, B3 > B 1, and C3 > C1; or the like.

For example, A3 > A1, B3 = B 1, and C3 = C2. In S510, in a process in which the network device configures the SRS resources for the first terminal devices, for the first terminal devices whose sequence numbers are within (A1, A3], a total port quantity corresponding to AS-type SRS resources configured by the network device for the first terminal devices does not exceed 2. In this case, in S530, for the first terminal devices whose sequence numbers are within (A1, A3], a corresponding resource configuration policy is updated to the following: A total port quantity corresponding to configured AS-type SRS resources does not exceed 4. Therefore, if a maximum AS-type SRS resource port quantity that can be supported by some first terminal devices whose sequence numbers are within (A1, A3] is greater than 2, in S530, the network device may reconfigure AS-type SRS resources for the first terminal devices whose sequence numbers are within (A1, A3] and whose maximum AS-type SRS resource port quantity that can be supported is greater than 2. In other words, the terminal device #2 may be a terminal device whose sequence number is within (A1, A3] and whose maximum AS-type SRS resource port quantity that can be supported is greater 2.

Optionally, the terminal device #2 may alternatively be a first-type terminal device. In other words, even if a port quantity corresponding to the SRS resource configured for the terminal device #2 is an SRS resource corresponding to a numerical interval in which the sequence number of the terminal device #2 is located, when the terminal device #2 is a first-type terminal device, the network device may also reconfigure the SRS resource for the terminal device #2, that is, increase a port quantity corresponding to the SRS resource configured for the terminal device #2.

For example, the sequence number of the terminal device #2 is within the 2^{nd} numerical interval indicated by the second mapping relationship, and the port quantity corresponding to the AS-type SRS resource configured for the terminal device #2 is 2, which meets the SRS resource corresponding to the 2^{nd} numerical interval indicated by the second mapping relationship. If the terminal device #2 is a first-type terminal device, and the maximum AS-type SRS resource port quantity that can be supported by the terminal device #2 is 4, in S530, the network device may still reconfigure the AS-type SRS resource for the terminal device #2. For example, the port quantity corresponding to the AS-type SRS resource reconfigured by the network device for the terminal device #2 is 4.

It should be understood that only an example in which the network device reconfigures the AS-type SRS resource for the terminal device #2 in S540 is used above for description. In S540, the network device may reconfigure an SRS resource of another type for the terminal device #2 according to the same method, or simultaneously reconfigure SRS resources of a plurality of types. It may be understood that the port quantity corresponding to the SRS resource reconfigured by the network device for the terminal device #2 in S540 is greater than the port quantity corresponding to the SRS resource configured for the terminal device #2 in S510.

It should be further understood that, in this embodiment of this application, an example in which a quantity of the plurality of numerical intervals indicated by the second mapping relationship is equal to a quantity of the plurality of numerical intervals indicated by the first mapping relationship is used for description. In this embodiment of this application, whether the quantity of the plurality of numerical intervals indicated by the second mapping relationship is equal to the quantity of the plurality of numerical intervals indicated by the first mapping relationship is not limited. In other words, the quantity of the plurality of numerical intervals indicated by the first mapping relationship may be equal to the quantity of the plurality of numerical intervals indicated by the second mapping relationship. For example, the plurality of numerical intervals indicated by the first mapping relationship may include [0, A1], (A1, B1], (B1, C1], and (C1, infinity), and the plurality of numerical intervals indicated by the second mapping relationship may include [0, A2], (A2, B2], (B2, C2], and (C2, infinity). The quantity of the plurality of numerical intervals indicated by the first mapping relationship may alternatively be unequal to the quantity of the plurality of numerical intervals indicated by the second mapping relationship. For example, the plurality of numerical intervals indicated by the first mapping relationship may include [0, A1], (A1, B1], (B1, C1], and (C1, infinity), and the plurality of numerical intervals indicated by the second mapping relationship may include (A2, B2], (B2, C2], and (C2, infinity). For another example, the plurality of numerical intervals indicated by the first mapping relationship may include [0, A1], (A1, B1], (B1, C1], and (C1, infinity), and the plurality of numerical intervals indicated by the second mapping relationship may include [0, A2], (A2, B2], and (B2, C2].

In this embodiment of this application, when the network device allocates a relatively small quantity of SRS resources to terminal devices that have accessed the current cell, or there are excessive terminal devices that exit from the network, by reconfiguring SRS resources for some terminal devices that have accessed the first cell, more SRS resources are configured for the terminal devices, so as to ensure efficient use of the SRS resources.

Optionally, if the quantity of the plurality of numerical intervals indicated by the second mapping relationship is 2, and a port quantity corresponding to an SRS resource reconfigured by the network device for the second terminal device based on the 1^{st} numerical interval is equal to the maximum SRS resource port quantity that can be supported by the second terminal device, the resource reconfiguration method provided in this embodiment of this application may be further described as follows: When the sequence number of the first terminal device does not exceed a preset threshold, the port quantity corresponding to the SRS resource reconfigured by the network device for the first terminal device is equal to the maximum SRS resource port quantity that can be supported by the first terminal device. When the sequence number of the first terminal device is greater than the preset threshold, the port quantity corresponding to the SRS resource reconfigured by the network device for the first terminal device is less than the maximum SRS resource port quantity that can be supported by the first terminal device. It may be understood that the first terminal device herein may be a first terminal device in the t first terminal devices.

For example, the plurality of numerical intervals indicated by the second mapping relationship may include [0, A2] and (A2, infinity). In this case, when the sequence number of the first terminal device does not exceed A2, the port quantity corresponding to the SRS resource reconfigured by the network device for the first terminal device is equal to the maximum SRS resource port quantity that can be supported by the second terminal device. When the quantity of first terminal devices is greater than A2, the port quantity corresponding to the SRS resource reconfigured by the network device for the first terminal device is less than the maximum SRS resource port quantity that can be supported by the first terminal device.

Optionally, the resource reconfiguration method provided in this embodiment of this application may be alternatively described as follows: When the sequence number of the first terminal device does not exceed a preset threshold, the port quantity corresponding to the SRS resource reconfigured by the network device for the first terminal device is equal to the maximum SRS resource port quantity that can be supported by the first terminal device. When the sequence number of the first terminal device exceeds the preset threshold, the port quantity corresponding to the SRS resource reconfigured by the network device for the first terminal device is less than the maximum SRS resource port quantity that can be supported by the first terminal device. When the sequence number of the first terminal device exceeds the preset threshold, the network device may further reconfigure an SRS resource for the first terminal device based on the sequence number of the first terminal device and the second mapping relationship.

For example, the preset threshold may be A2, and the plurality of numerical intervals indicated by the second mapping relationship may include (A2, B2], (B2, C2], and (C2, infinity). In this case, when the sequence number of the first terminal device does not exceed A2, the port quantity corresponding to the SRS resource reconfigured by the network device for the first terminal device is equal to the maximum SRS resource port quantity that can be supported by the first terminal device. When the sequence number of the first terminal device is greater than A2, the port quantity corresponding to the SRS resource reconfigured by the network device for the first terminal device is less than the maximum SRS resource port quantity that can be supported by the first terminal device.

Further, when the sequence number of the first terminal device is greater than A2, if the sequence number of the first terminal device is within the 1^{st} numerical interval ((A2, B2]), the network device may use an SRS resource corresponding to the 1^{st} numerical interval as the SRS resource reconfigured for the first terminal device. If the sequence number of the first terminal device is within the 2^{nd} numerical interval ((B2, C2]), the network device may use an SRS resource corresponding to the 2^{nd} numerical interval as the SRS resource reconfigured for the first terminal device. If the sequence number of the first terminal device is within the 3^{rd} numerical interval, the network device may use an SRS resource corresponding to the 3^{rd} numerical interval as the SRS resource reconfigured for the first terminal device.

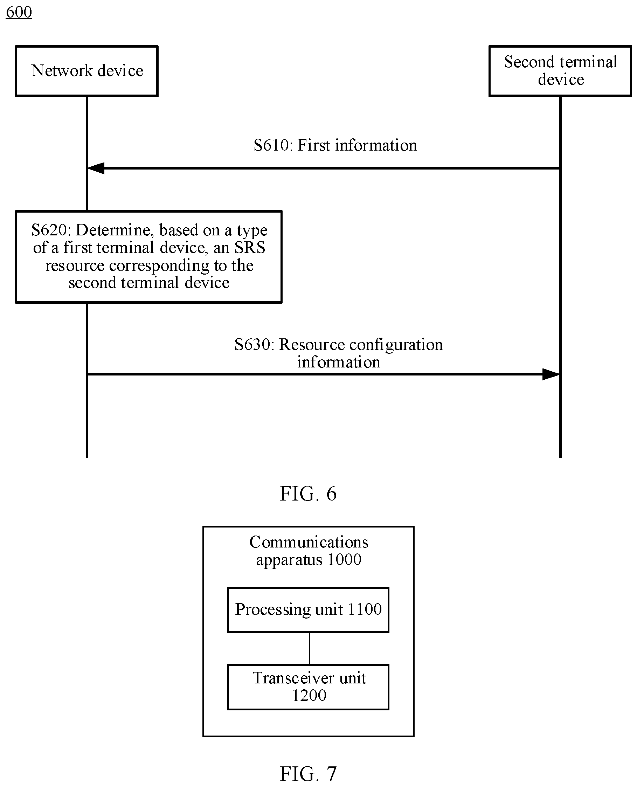

FIG. 6 is a schematic flowchart of a resource configuration method according to another embodiment of this application. As shown in FIG. 6, the method 600 may include S610 to S630. The following describes each step in detail.

S610: A network device receives first information. Correspondingly, in S610, a second terminal device sends the first information.

The first information is used to determine a maximum quantity of SRS resources that can be supported by the second terminal device. Alternatively, the first information may be used to determine a maximum SRS resource port quantity that can be supported by the second terminal device. Specifically, the first information may include capability information of the second terminal device and/or assistance information of the second terminal device.

Specifically, for more descriptions of the first information, refer to the descriptions in S220. For brevity, details are not described herein again.

S620: The network device determines, based on a type of the second terminal device, an SRS resource corresponding to the second terminal device.

Specifically, if the second terminal device is a first-type terminal device, an SRS resource port quantity that corresponds to the second terminal device and that is determined by the network device is equal to the maximum SRS resource port quantity that can be supported by the second terminal device.

For example, the network device determines, based on the first information, that a maximum AS-type SRS resource port quantity that can be supported by the second terminal device is 4. In this case, when the second terminal device is a first-type terminal device, an AS-type SRS resource port quantity that corresponds to the second terminal device and that is determined by the network device is 4.

For another example, the network device determines, based on the first information, that a maximum CB-type SRS resource port quantity that can be supported by the second terminal device is 2. In this case, when the second terminal device is a first-type terminal device, a CB-type SRS resource port quantity that corresponds to the second terminal device and that is determined by the network device is 2.

If the second terminal device is not a first-type terminal device, an SRS resource port quantity that corresponds to the second terminal device and that is determined by the network device is less than the maximum SRS resource port quantity that can be supported by the second terminal device.

For example, the network device determines, based on the first information, that a maximum AS-type SRS resource port quantity that can be supported by the second terminal device is 2. In this case, when the second terminal device is not a first-type terminal device, an AS-type SRS resource port quantity that corresponds to the second terminal device and that is determined by the network device is 2, 1, or 0.

For another example, the network device determines, based on the first information, that a maximum CB-type SRS resource port quantity that can be supported by the second terminal device is 2. In this case, when the second terminal device is not a first-type terminal device, a CB-type SRS resource port quantity that corresponds to the second terminal device and that is determined by the network device is 1 or 0.

The first-type terminal device includes a terminal device whose amount of transmitted data is greater than a preset threshold, a terminal device that can be configured, by using a quality of service parameter indicator of a fifth generation mobile communications system (5th generation quality of service indicator, 5QI), to transmit a first service, or a terminal device that transmits a first service and that is identified by using a transaction identifier (transaction ID) or a subscribe profile identifier (subscribe profile ID). The first service may be a heavy-traffic service, a high-priority service, a service with a high latency requirement, or the like.

S630: The network device sends resource configuration information. Correspondingly, in S630, the second device receives the resource configuration information.

The resource configuration information indicates an SRS resource configured by the network device for the second terminal device. Correspondingly, after receiving the resource configuration information, the second terminal device sends an SRS on the SRS resource indicated by the resource configuration information.

In this embodiment of this application, in a process in which the network device configures an SRS resource for the second terminal device, when a type of the terminal device that newly performs access is considered, the network device may allocate more SRS resources to a first-type terminal device that newly performs access, so as to ensure efficient use of the SRS resources.

It should be understood that, in the foregoing embodiments, the terminal device and/or the network device may perform some or all of the steps in the foregoing embodiments. These steps or operations are merely examples. Other operations or variations of various operations may be further performed in embodiments of this application. In addition, the steps may be performed in a sequence different from a sequence presented in embodiments, and not all operations in embodiments of this application need to be performed. In addition, sequence numbers of the steps do not mean an execution sequence. An execution sequence of the processes should be determined based on functions and internal logic of the processes, and should not constitute any limitation on the implementation processes of embodiments of this application.

The resource configuration methods provided in embodiments of this application are described above in detail with reference to FIG. 2 to FIG. 6. Communications apparatuses provided in embodiments of this application are described below in detail with reference to FIG. 7 to FIG. 10.

FIG. 7 is a schematic block diagram of a communications apparatus according to an embodiment of this application. As shown in FIG. 7, the communications apparatus 1000 may include a processing unit 1100 and a transceiver unit 1200.

Optionally, the communications apparatus 1000 may correspond to the terminal device in the foregoing method embodiments, for example, may be the terminal device, or a component (such as a circuit, a chip, or a chip system) disposed in the terminal device.

It should be understood that the communications apparatus 1000 may correspond to the terminal device in the method 200, the method 500, and the method 600 in the embodiments of this application. The communications apparatus 1000 may include units configured to perform the method performed by the terminal device in the method 200 in FIG. 2, the method 500 in FIG. 5, and the method 600 in FIG. 6. In addition, the units in the communications apparatus 1000 and the foregoing other operations and/or functions are used to implement corresponding procedures of the method 200 in FIG. 2, the method 500 in FIG. 5, and the method 600 in FIG. 6. It should be understood that specific processes in which the units perform the foregoing corresponding steps are described in detail in the foregoing method embodiments. For brevity, details are not described herein.

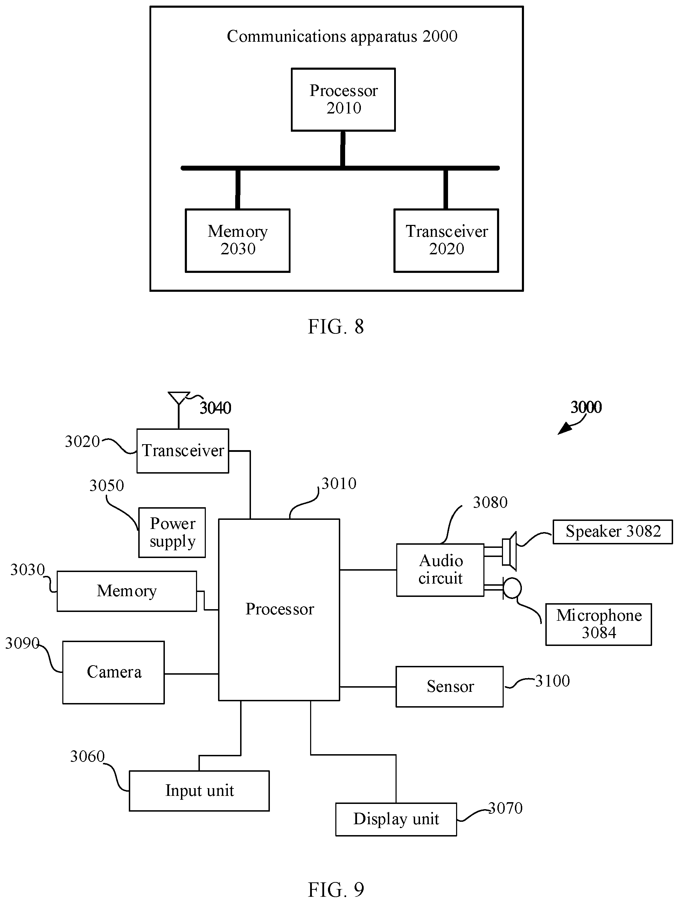

It should be further understood that, when the communications apparatus 1000 is the terminal device, the transceiver unit 1200 in the communications apparatus 1000 may be implemented as a transceiver, for example, may correspond to a transceiver 2020 in a communications apparatus 2000 shown in FIG. 8 or a transceiver 3020 in a terminal device 3000 shown in FIG. 9; and the processing unit 1100 in the communications apparatus 1000 may be implemented as at least one processor, for example, may correspond to a processor 2010 in the communications apparatus 2000 shown in FIG. 8 or a processor 3010 in the terminal device 3000 shown in FIG. 9.

It should be further understood that, when the communications apparatus 1000 is the chip or the chip system disposed in the terminal device, the transceiver unit 1200 in the communications apparatus 1000 may be implemented as an input/output interface, a circuit, or the like; and the processing unit 1100 in the communications apparatus 1000 may be implemented as a processor, a microprocessor, an integrated circuit, or the like integrated into the chip or the chip system.

Optionally, the communications apparatus 1000 may correspond to the network device in the foregoing method embodiments, for example, may be the network device, or a component (such as a circuit, a chip, or a chip system) disposed in the network device.

It should be understood that the communications apparatus 1000 may correspond to the network device in the method 200, the method 500, and the method 600 in the embodiments of this application. The communications apparatus 1000 may include units configured to perform the method performed by the network device in the method 200 in FIG. 2, the method 500 in FIG. 5, and the method 600 in FIG. 6. In addition, the units in the communications apparatus 1000 and the foregoing other operations and/or functions are used to implement corresponding procedures of the method 200 in FIG. 2, the method 500 in FIG. 5, and the method 600 in FIG. 6. It should be understood that specific processes in which the units perform the foregoing corresponding steps are described in detail in the foregoing method embodiments. For brevity, details are not described herein.

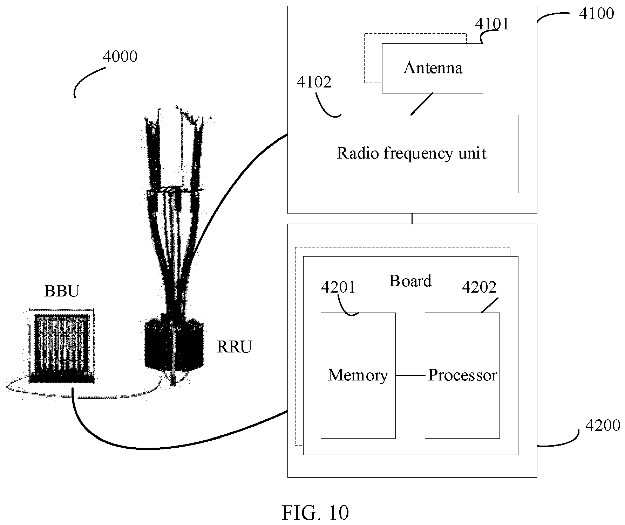

It should be further understood that, when the communications apparatus 1000 is the network device, the transceiver unit 1200 in the communications apparatus 1000 may be implemented as a transceiver, for example, may correspond to a transceiver 2020 in a communications apparatus 2000 shown in FIG. 8 or a remote radio unit (remote radio unit, RRU) 4100 in a network device 4000 shown in FIG. 10; and the processing unit 1100 in the communications apparatus 1000 may be implemented as at least one processor, for example, may correspond to a processor 2010 in the communications apparatus 2000 shown in FIG. 8 or a processing unit 4200 or a processor 4202 in the network device 4000 shown in FIG. 10.

It should be further understood that, when the communications apparatus 1000 is the chip or the chip system disposed in the network device, the transceiver unit 1200 in the communications apparatus 1000 may be implemented as an input/output interface, a circuit, or the like; and the processing unit 1100 in the communications apparatus 1000 may be implemented as a processor, a microprocessor, an integrated circuit, or the like integrated into the chip or the chip system.

FIG. 8 is another schematic block diagram of a communications apparatus 2000 according to an embodiment of this application. As shown in FIG. 8, the communications apparatus 2000 includes a processor 2010, a transceiver 2020, and a memory 2030. The processor 2010, the transceiver 2020, and the memory 2030 communicate with each other through an internal connection path. The memory 2030 is configured to store instructions. The processor 2010 is configured to execute the instructions stored in the memory 2030, to control the transceiver 2020 to send a signal and/or receive a signal.

It should be understood that the communications apparatus 2000 may correspond to the terminal device in the foregoing method embodiments, and may be configured to perform the steps and/or the procedures performed by the network device or the terminal device in the foregoing method embodiments. Optionally, the memory 2030 may include a read-only memory and a random access memory, and provide instructions and data for the processor. A part of the memory may further include a nonvolatile random access memory. The memory 2030 may be an independent component, or may be integrated into the processor 2010. The processor 2010 may be configured to execute the instructions stored in the memory 2030. In addition, when the processor 2010 executes the instructions stored in the memory, the processor 2010 is configured to perform the steps and/or the procedures corresponding to the network device or the terminal device in the foregoing method embodiments.

Optionally, the communications apparatus 2000 is the terminal device in the foregoing embodiments.

Optionally, the communications apparatus 2000 is the network device in the foregoing embodiments.

The transceiver 2020 may include a transmitter and a receiver. The transceiver 2020 may further include an antenna. There may be one or more antennas. The processor 2010, the memory 2030, and the transceiver 2020 may be components integrated into different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated into a same chip. This is not limited in this application.

Optionally, the communications apparatus 2000 is a component disposed in the terminal device, for example, a circuit, a chip, or a chip system.

Optionally, the communications apparatus 2000 is a component disposed in the network device, for example, a circuit, a chip, or a chip system.

Alternatively, the transceiver 2020 may be a communications interface, for example, an input/output interface or a circuit. The transceiver 2020, the processor 2010, and the memory 2020 may be integrated into a same chip, for example, integrated into a baseband chip.

FIG. 9 is a schematic diagram of a structure of a terminal device 3000 according to an embodiment of this application. The terminal device 3000 may be applied to the system shown in FIG. 1, and performs functions of the terminal device in the foregoing method embodiments. As shown in the figure, the terminal device 3000 includes the processor 3010 and the transceiver 3020. Optionally, the terminal device 3000 further includes a memory 3030. The processor 3010, the transceiver 3020, and the memory 3030 may communicate with each other through an internal connection path, to transfer a control signal and/or a data signal. The memory 3030 is configured to store a computer program. The processor 3010 is configured to invoke the computer program from the memory 3030 and run the computer program, to control the transceiver 3020 to send and receive a signal. Optionally, the terminal device 3000 may further include an antenna 3040, configured to send, by using a radio signal, uplink data or uplink control signaling that is output by the transceiver 3020.

The processor 3010 and the memory 3030 may be integrated into one processing apparatus. The processor 3010 is configured to execute program code stored in the memory 3030, to implement the foregoing functions. During specific implementation, the memory 3030 may alternatively be integrated into the processor 3010, or may be independent of the processor 3010. The processor 3010 may correspond to the processing unit 1100 in FIG. 7 or the processor 2010 in FIG. 8.

The transceiver 3020 may correspond to the transceiver unit 1200 in FIG. 7 or the transceiver 2020 in FIG. 8. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 3000 shown in FIG. 9 can implement each process of the terminal device in the method embodiments shown in FIG. 2, FIG. 5, and FIG. 6. Operations and/or functions of the modules in the terminal device 3000 are intended to implement corresponding procedures in the foregoing method embodiments. For details, refer to the descriptions in the foregoing method embodiments. To avoid repetition, detailed descriptions are properly omitted herein.

The processor 3010 may be configured to perform an action that is implemented inside the terminal device and that is described in the foregoing method embodiments. The transceiver 3020 may be configured to perform an action of sending by the terminal device to the network device or an action of receiving from the network device in the foregoing method embodiments. For details, refer to the descriptions in the foregoing method embodiments. Details are not described herein again.

Optionally, the terminal device 3000 may further include a power supply 3050, configured to supply power to various components or circuits in the terminal device.

In addition, to improve functions of the terminal device, the terminal device 3000 may further include one or more of an input unit 3060, a display unit 3070, an audio circuit 3080, a camera 3090, a sensor 3100, and the like. The audio circuit may further include a speaker 3082, a microphone 3084, and the like.

FIG. 10 is a schematic diagram of a structure of a network device according to an embodiment of this application, for example, may be a schematic diagram of a structure of a base station. The base station 4000 may be applied to the system shown in FIG. 1, and performs functions of the network device in the foregoing method embodiments. As shown in the figure, the base station 4000 may include one or more radio frequency units such as remote radio units (remote radio unit, RRU) 4100 and one or more baseband units (BBU) (which may also be referred to as distributed units (DU)) 4200. The RRU 4100 may be referred to as a transceiver unit, and may correspond to the transceiver unit 1200 in FIG. 7 or the transceiver 2020 in FIG. 8. Optionally, the RRU 4100 may also be referred to as a transceiver machine, a transceiver circuit, a transceiver, or the like, and may include at least one antenna 4101 and a radio frequency unit 4102. Optionally, the RRU 4100 may include a receiving unit and a sending unit. The receiving unit may correspond to a receiver (which is also referred to as a receiver machine or a receiver circuit), and the sending unit may correspond to a transmitter (which is also referred to as a transmitter machine or a transmitter circuit). The RRU 4100 is mainly configured to: receive and send a radio frequency signal, and perform conversion between the radio frequency signal and a baseband signal. For example, the RRU 4100 is configured to send indication information to a terminal device. The BBU 4200 is mainly configured to: perform baseband processing, control the base station, and the like. The RRU 4100 and the BBU 4200 may be physically disposed together, or may be physically disposed separately, that is, in a distributed base station.

The BBU 4200 is a control center of the base station, may also be referred to as a processing unit, may correspond to the processing unit 1100 in FIG. 7 or the processor 2010 in FIG. 8, and is mainly configured to complete a baseband processing function, for example, channel coding, multiplexing, modulation, or spreading. For example, the BBU (the processing unit) may be configured to control the base station to perform an operation procedure related to the network device in the foregoing method embodiments, for example, generate the foregoing indication information.

In an example, the BBU 4200 may include one or more boards, and a plurality of boards may jointly support a radio access network (for example, an LTE network) having a single access standard, or may separately support radio access networks (for example, the LTE network, a 5G network, and another network) having different access standards. The BBU 4200 further includes a memory 4201 and a processor 4202. The memory 4201 is configured to store necessary instructions and data. The processor 4202 is configured to control the base station to perform a necessary action, for example, control the base station to perform the operation procedure related to the network device in the foregoing method embodiments. The memory 4201 and the processor 4202 may serve one or more boards. In other words, a memory and a processor may be disposed on each board. Alternatively, a plurality of boards may share a same memory and a same processor. In addition, a necessary circuit may be further disposed on each board.

It should be understood that the base station 4000 shown in FIG. 10 can implement each process of the network device in the method embodiments shown in FIG. 2, FIG. 5, and FIG. 6. Operations and/or functions of the modules in the base station 4000 are intended to implement corresponding procedures in the foregoing method embodiments. For details, refer to the descriptions in the foregoing method embodiments. To avoid repetition, detailed descriptions are properly omitted herein.

The BBU 4200 may be configured to perform an action that is implemented inside the network device and that is described in the foregoing method embodiments. The RRU 4100 may be configured to perform an action of sending by the network device to the terminal device or an action of receiving from the terminal device in the foregoing method embodiments. For details, refer to the descriptions in the foregoing method embodiments. Details are not described herein again.

It should be understood that the base station 4000 shown in FIG. 10 is merely a possible form of the network device, and should not constitute any limitation on this application. The method provided in this application is applicable to a network device in another form. For example, the network device includes an AAU, and may further include a CU and/or a DU, or include a BBU and an adaptive radio unit (adaptive radio unit, ARU), or a BBU; or may be customer premises equipment (customer premises equipment, CPE), or may be in another form. A specific form of the network device is not limited in this application.

The CU and/or the DU may be configured to perform an action that is implemented inside the network device and that is described in the foregoing method embodiments. The AAU may be configured to perform an action of sending by the network device to the terminal device or an action of receiving from the terminal device in the foregoing method embodiments. For details, refer to the descriptions in the foregoing method embodiments. Details are not described herein again.

This application further provides a processing apparatus, including at least one processor. The at least one processor is configured to execute a computer program stored in a memory, so that the processing apparatus performs the method performed by the terminal device or the network device in the foregoing method embodiment.

It should be understood that the processing apparatus may be one or more chips. For example, the processing apparatus may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processor (digital signal processor, DSP) circuit, a micro control unit (micro control unit, MCU), a programmable controller (programmable logic device, PLD), or another integrated chip.

An embodiment of this application further provides a processing apparatus, including a processor and a communications interface. The communications interface is coupled to the processor. The communications interface is configured to input and/or output information. The information includes at least one of an instruction and data. The processor is configured to execute a computer program, so that the processing apparatus performs the method performed by the terminal device or the network device in the foregoing method embodiment.

An embodiment of this application further provides a processing apparatus, including a processor and a memory. The memory is configured to store a computer program, and the processor is configured to invoke the computer program from the memory and run the computer program, so that the processing apparatus performs the method performed by the terminal device or the network device in the foregoing method embodiment.

In an implementation process, steps of the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps of the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

According to the methods provided in the embodiments of this application, this application further provides a computer program product. The computer program product includes computer program code. When the computer program code is run on a computer, the computer is enabled to perform the method performed by the terminal device or the method performed by the network device in the embodiments shown in FIG. 2, FIG. 5, and FIG. 6.

According to the methods provided in the embodiments of this application, this application further provides a computer-readable storage medium. The computer-readable storage medium stores program code. When the program code is run on a computer, the computer is enabled to perform the method performed by the terminal device or the method performed by the network device in the embodiments shown in FIG. 2, FIG. 5, and FIG. 6.

According to the methods provided in the embodiments of this application, this application further provides a system. The system includes the foregoing one or more terminal devices and the foregoing one or more network devices.

The network device and the terminal device in the foregoing apparatus embodiments completely correspond to the network device and the terminal device in the method embodiments. A corresponding module or unit performs a corresponding step. For example, the communications unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

In the foregoing embodiments, the terminal device may be used as an example of a receiving device, and the network device may be used as an example of a sending device. However, this should not constitute any limitation on this application. For example, both the sending device and the receiving device may be terminal devices. Specific types of the sending device and the receiving device are not limited in this application.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, that is, may be located in one place, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource configuration method, comprising:
determining, by a network device based on a quantity of first terminal devices, a first sounding reference signal resource corresponding to a second terminal device, wherein the first terminal device is a terminal device that has accessed a first cell, and the first cell is a cell to be accessed by the second terminal device; and
sending, by the network device, resource configuration information to the second terminal device, wherein the resource configuration information indicates the first sounding reference signal resource.

2. The method according to claim 1, wherein the determining, by a network device based on a quantity of first terminal devices, a first sounding reference signal resource corresponding to a second terminal device comprises:
determining, by the network device, the first sounding reference signal resource based on the quantity of first terminal devices and a maximum quantity of sounding reference signal resources that can be supported by the second terminal device, wherein a port quantity corresponding to the first sounding reference signal resource is less than or equal to a maximum sounding reference signal resource port quantity that can be supported by the second terminal device.

3. The method according to claim 1 or 2, wherein the determining, by a network device based on a quantity of first terminal devices, a sounding reference signal resource corresponding to a second terminal device comprises:
using, by the network device, a sounding reference signal resource corresponding to a first numerical interval as the first sounding reference signal resource based on a first mapping relationship, wherein the first numerical interval is a numerical interval corresponding to the quantity of first terminal devices, and the first mapping relationship indicates a mapping relationship between a plurality of numerical intervals and a plurality of sounding reference signal resources.

4. The method according to claim 1 or 2, wherein the determining, by a network device based on a quantity of first terminal devices, a sounding reference signal resource corresponding to a second terminal device comprises:
if the second terminal device is a first-type terminal device, using, by the network device, a sounding reference signal resource corresponding to a second numerical interval as the first sounding reference signal resource based on a first mapping relationship, or using, by the network device as the first sounding reference signal resource, the maximum quantity of sounding reference signal resources that can be supported by the second terminal device, wherein the first mapping relationship indicates a mapping relationship between a plurality of numerical intervals and a plurality of sounding reference signal resources, a largest value in the second numerical interval is less than a smallest value in a numerical interval corresponding to the quantity of first terminal devices, the first-type terminal device comprises a terminal device whose amount of transmitted data is greater than a preset threshold, a terminal device that can be configured, by using a quality of service parameter indicator value of a fifth generation mobile communications system, to transmit a first-type service, or a terminal device that is of a first service and that is identified by using a transaction identifier or a subscribe profile identifier, and the first service comprises a heavy-traffic service, a high-priority service, or a low-latency service.

5. The method according to claim 3 or 4, wherein a port quantity corresponding to a sounding reference signal resource corresponding to a third numerical interval is equal to the maximum sounding reference signal resource port quantity that can be supported by the second terminal device, and a largest value in the third numerical interval is a numerical interval whose largest value is the smallest in the plurality of numerical intervals.

6. The method according to any one of claims 3 to 5, wherein a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

7. The method according to claim 6, wherein the sounding reference signal resources comprise sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

8. The method according to any one of claims 3 to 7, wherein a critical value of at least one of the plurality of numerical intervals is determined based on the quantity of first terminal devices.

9. The method according to any one of claims 3 to 8, wherein the method further comprises:
if at least one of the following conditions is met: a total port quantity corresponding to sounding reference signal resources configured by the network device for the first terminal device is greater than or equal to a first preset threshold, a quantity of terminal devices that newly access the first cell is greater than or equal to a second preset threshold, the total port quantity corresponding to the sounding reference signal resources configured by the network device for the first terminal device is less than or equal to a third preset threshold, and a quantity of terminal devices that exit from a network in the first cell is greater than or equal to a fourth preset threshold, updating, by the network device, the critical value of the at least one of the plurality of intervals based on the quantity of first terminal devices.

10. The method according to claim 9, wherein the method further comprises:
reconfiguring, by the network device, a sounding reference signal resource for at least one of the first terminal devices based on sequence numbers of the first terminal devices and a second mapping relationship, wherein the second mapping relationship indicates an updated mapping relationship between a plurality of numerical intervals and a plurality of sounding reference signal resources.

11. A resource configuration method, comprising:
receiving, by a second terminal device, resource configuration information from a network device, wherein the resource configuration information indicates a first sounding reference signal resource corresponding to the second terminal device, the first sounding reference signal resource is determined based on a quantity of first terminal devices, the first terminal device is a terminal device that has accessed a first cell, and the first cell is a cell to be accessed by the second terminal device; and
sending, by the second terminal device, a sounding reference signal on the first sounding reference signal resource.

12. The method according to claim 11, wherein a port quantity corresponding to the first sounding reference signal resource is less than or equal to a maximum sounding reference signal resource port quantity that can be supported by the second terminal device.

13. The method according to claim 11 or 12, wherein the first sounding reference signal resource is a sounding reference signal resource corresponding to a first numerical interval, the first numerical interval is a numerical interval corresponding to the quantity of first terminal devices, the sounding reference signal resource corresponding to the first numerical interval is determined based on a first mapping relationship, and the first mapping relationship indicates a mapping relationship between a plurality of numerical intervals and a plurality of sounding reference signal resources.

14. The method according to claim 11 or 12, wherein the first sounding reference signal resource is a sounding reference signal resource corresponding to a second numerical interval, or the first sounding reference signal resource is a maximum quantity of sounding reference signal resources that can be supported by the second terminal device, a first mapping relationship indicates a mapping relationship between a plurality of numerical intervals and a plurality of sounding reference signal resources, a largest value in the second numerical interval is less than a smallest value in a numerical interval corresponding to the quantity of first terminal devices, the sounding reference signal resource corresponding to the second numerical interval is determined based on the first mapping relationship, and the first mapping relationship indicates a mapping relationship between a plurality of numerical intervals and a plurality of sounding reference signal resources; and the first-type terminal device comprises a terminal device whose amount of transmitted data is greater than a preset threshold, a terminal device that can be configured, by using a quality of service parameter indicator value of a fifth generation mobile communications system, to transmit a first-type service, or a terminal device that is of a first service and that is identified by using a transaction identifier or a subscribe profile identifier, and the first service comprises a heavy-traffic service, a high-priority service, or a low-latency service.

15. The method according to claim 13 or 14, wherein a port quantity corresponding to a sounding reference signal resource corresponding to a third numerical interval is equal to the maximum sounding reference signal resource port quantity that can be supported by the second terminal device, and a largest value in the third numerical interval is a numerical interval whose largest value is the smallest in the plurality of numerical intervals.

16. The method according to any one of claims 13 to 15, wherein a port quantity corresponding to a sounding reference signal resource corresponding to a fourth numerical interval is greater than a port quantity corresponding to a sounding reference signal resource corresponding to a fifth numerical interval, and the fourth numerical interval and the fifth numerical interval are any two numerical intervals that meet the following relationship in the plurality of numerical intervals: a largest value in the fourth numerical interval is less than a smallest value in the fifth numerical interval.

17. The method according to claim 16, wherein the sounding reference signal resources comprise sounding reference signal resources of a plurality of types, a port quantity corresponding to a first-type sounding reference signal resource corresponding to the fourth numerical interval is greater than a port quantity corresponding to a first-type sounding reference signal resource corresponding to the fifth numerical interval, and the first-type sounding reference signal resource is a sounding reference signal resource of at least one type in the sounding reference signal resources of the plurality of types.

18. The method according to any one of claims 13 to 17, wherein a critical value of at least one of the plurality of numerical intervals is determined based on the quantity of first terminal devices.

19. A communications apparatus, comprising a unit configured to implement the method according to any one of claims 1 to 18.

20. A communications apparatus, comprising at least one processor, wherein the at least one processor is configured to execute a computer program stored in a memory, so that the apparatus implements the method according to any one of claims 1 to 18.

21. A communications apparatus, comprising:
a communications interface, configured to input and/or output information; and
a processor, configured to execute a computer program, so that the apparatus implements the method according to any one of claims 1 to 18.

22. A communications apparatus, comprising:
a memory, configured to store a computer program; and
a processor, configured to invoke the computer program from the memory and execute the computer program, so that the apparatus implements the method according to any one of claims 1 to 18.

23. A computer-readable storage medium, comprising a computer program, wherein when the computer program is run on a computer, the computer is enabled to perform the method according to any one of claims 1 to 18.

24. A computer program product, wherein the computer program product comprises a computer program, and when the computer program is run on a computer, the computer is enabled to perform the method according to any one of claims 1 to 18.
